(19) Europäisches Patentamt
European Patent Office
Office européen des brevets

(11) **EP 4 447 440 A1**

(12) **EUROPEAN PATENT APPLICATION**

(43) Date of publication:
**16.10.2024 Bulletin 2024/42**

(21) Application number: **24170043.4**

(22) Date of filing: **12.04.2024**

(51) International Patent Classification (IPC):
**H04N 19/12** (2014.01)     **H04N 19/117** (2014.01)
**H04N 19/14** (2014.01)     **H04N 19/159** (2014.01)
**H04N 19/176** (2014.01)

(52) Cooperative Patent Classification (CPC):
**H04N 19/12; H04N 19/117; H04N 19/14;
H04N 19/159; H04N 19/176**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.04.2023 US 202363459311 P**

(71) Applicant: **Comcast Cable Communications LLC
Philadelphia, Pennsylvania 19103 (US)**

(72) Inventor: **RUIZ COLL, Damian
Philadelphia, 19103 (US)**

(74) Representative: **V.O.
P.O. Box 87930
2508 DH Den Haag (NL)**

(54) **TRANSFORM SELECTION FOR RECONSTRUCTED-REORDERED TEMPLATE MATCHING PREDICTION (RRTMP)**

(57)     An optimal reconstructed-reordered template matching prediction (RRTMP) flipped mode is determined for a reference block. The reference block may be flipped, or not, based on the RRTMP flip mode. At least one horizontal or vertical transform, associated with the reference block, is selected for coding a residual block (e.g., a difference between the reference block and a current block).

FIG. 25

EP 4 447 440 A1

**Description**

CROSS REFERENCE TO RELATED APPLICATIONS

This application claims the benefit of U.S. Provisional Application No. 63/459,311 filed on April 14, 2023. The above-referenced application is hereby incorporated by reference in its entirety.

BACKGROUND

A computing device processes video for storage, transmission, reception, and/or display. Processing a video comprises encoding and/or decoding, for example, to reduce a data size associated with the video.

SUMMARY

The following summary presents a simplified summary of certain features. The summary is not an extensive overview and is not intended to identify key or critical elements.
Template matching prediction may be used as a predictive coding method. Template matching prediction does not consider horizontal or vertical symmetry of content within a picture or video frame. To take advantage of horizontal or vertical symmetry of content, the template matching prediction mode can be enhanced by considering one or more other template types, such as a flipped template. Extending a template matching prediction search region by considering additional template types may result in improved compression.
These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows an example video coding/decoding system.
FIG. 2 shows an example encoder.
FIG. 3 shows an example decoder.
FIG. 4 shows an example quadtree partitioning of a coding tree block (CTB).
FIG. 5 shows an example quadtree corresponding to the example quadtree partitioning of the CTB in FIG. 4.
FIG. 6 shows example binary tree and ternary tree partitions.
FIG. 7 shows an example of combined quadtree and multi-type tree partitioning of a CTB.
FIG. 8 shows a tree corresponding to the combined quadtree and multi-type tree partitioning of the CTB shown in FIG. 7.
FIG. 9 shows an example set of reference samples determined for intra prediction of a current block.
FIGS. 10A and 10B show example intra prediction modes.
FIG. 11 shows a current block and corresponding reference samples.
FIG. 12 shows an example application of an intra prediction mode for prediction of a current block.
FIG. 13A shows an example of inter prediction.
FIG. 13B shows an example motion vector.
FIG. 14 shows an example of bi-prediction.
FIG. 15A shows example spatial candidate neighboring blocks for a current block.
FIG. 15B shows example temporal, co-located blocks for a current block.
FIG. 16 shows an example of intra block copy (IBC) for encoding.
FIG. 17A shows an example of a template matching prediction (TMP) mode.
FIG. 17B shows an example of template matching prediction (TMP) mode.
FIG. 18 shows an example of Reconstruction-Reordered intra block copy (RRIBC) applied for screen content.
FIG. 19 shows an example of a TMP mode using candidate templates flipped in a horizontal direction.
FIG. 20A shows an example of a TMP mode using candidate templates flipped in a vertical direction.
FIG. 20B shows an example of a TMP mode using candidate templates flipped in a vertical direction.
FIG. 21 shows an example of a TMP mode using a plurality of types of candidate templates.
FIG. 22 shows an example of template matching for TMP.
FIG. 23 shows an example gradient calculation.
FIG. 24A and FIG. 24B show examples of determining an intra-mode.
FIG. 25 shows a block and its template in different flip type modes, and an example filter kernel in different flip type modes.

FIG. 26 shows an example application of the filter kernel shown in FIG. 25.

FIG. 27 shows an example of RRIBC coding.

FIG. 28 shows an example method of transform selection in the context of RRIBC.

FIG. 29 shows an example method of transform selection for reconstructed-reordered template matching prediction (RRTMP).

FIG. 30 shows an example method of transform selection for RRTMP.

FIG. 31 shows an example method of using template matching prediction (TMP) with multiple template types.

FIG. 32 shows an example computer system in which examples of the present disclosure may be implemented.

FIG. 33 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of video encoding and decoding systems, which may be used in the technical field of video data storage and/or transmission/reception. More particularly, the technology disclosed herein may relate to video compression as used in encoding and/or decoding devices and/or systems.

A video sequence, comprising multiple pictures/frames, may be represented in digital form for storage and/or transmission. Representing a video sequence in digital form may require a large quantity of bits. Large data sizes that may be associated with video sequences may require significant resources for storage and/or transmission. Video encoding may be used to compress a size of a video sequence for more efficient storage and/or transmission. Video decoding may be used to decompress a compressed video sequence for display and/or other forms of consumption.

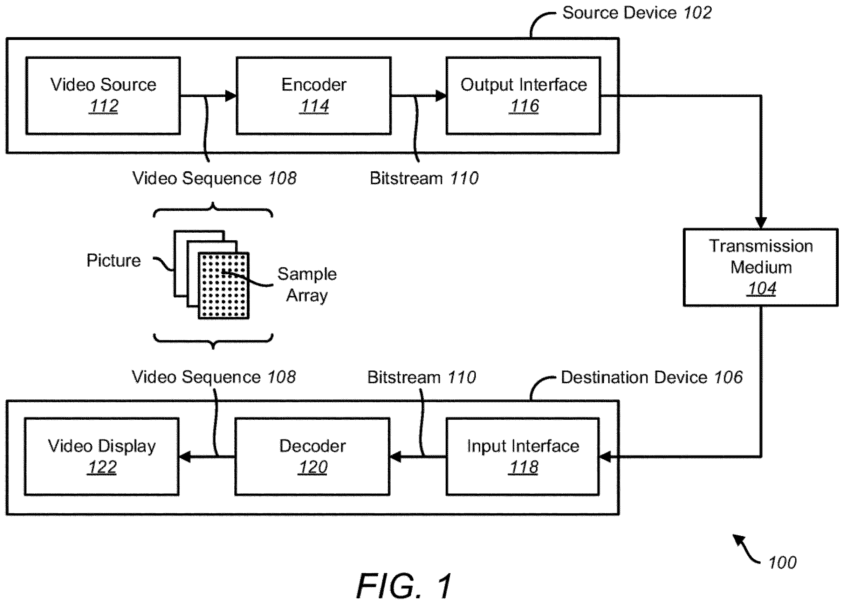

FIG. 1 shows an example video coding/decoding system. Video coding/decoding system 100 may comprise a source device 102, a transmission medium 104, and a destination device 106. The source device 102 may encode a video sequence 108 into a bitstream 110 for more efficient storage and/or transmission. The source device 102 may store and/or send/transmit the bitstream 110 to the destination device 106 via the transmission medium 104. The destination device 106 may decode the bitstream 110 to display the video sequence 108. The destination device 106 may receive the bitstream 110 from the source device 102 via the transmission medium 104. The source device 102 and/or the destination device 106 may be any of a plurality of different devices (e.g., a desktop computer, laptop computer, tablet computer, smart phone, wearable device, television, camera, video gaming console, set-top box, video streaming device, etc.).

The source device 102 may comprise (e.g., for encoding the video sequence 108 into the bitstream 110) one or more of a video source 112, an encoder 114, and/or an output interface 116. The video source 112 may provide and/or generate the video sequence 108 based on a capture of a natural scene and/or a synthetically generated scene. A synthetically generated scene may be a scene comprising computer generated graphics and/or screen content. The video source 112 may comprise a video capture device (e.g., a video camera), a video archive comprising previously captured natural scenes and/or synthetically generated scenes, a video feed interface to receive captured natural scenes and/or synthetically generated scenes from a video content provider, and/or a processor to generate synthetic scenes.

A video sequence, such as video sequence 108, may comprise a series of pictures (also referred to as frames). A video sequence may achieve an impression of motion based on successive presentation of pictures of the video sequence using a constant time interval or variable time intervals between the pictures. A picture may comprise one or more sample arrays of intensity values. The intensity values may be taken (e.g., measured, determined, provided) at a series of regularly spaced locations within a picture. A color picture may comprise (e.g., typically comprises) a luminance sample array and two chrominance sample arrays. The luminance sample array may comprise intensity values representing the brightness (e.g., luma component, Y) of a picture. The chrominance sample arrays may comprise intensity values that respectively represent the blue and red components of a picture (e.g., chroma components, Cb and Cr) separate from the brightness. Other color picture sample arrays may be possible based on different color schemes (e.g., a red, green, blue (RGB) color scheme). A pixel, in a color picture, may refer to/comprise/be associated with all intensity values (e.g., luma component, chroma components), for a given location, in the sample arrays used to represent color pictures. A monochrome picture may comprise a single, luminance sample array. A pixel, in a monochrome picture, may refer to/comprise/be associated with the intensity value (e.g., luma component) at a given location in the single, luminance sample array used to represent monochrome pictures.

The encoder 114 may encode the video sequence 108 into the bitstream 110. The encoder 114 may apply/use (e.g., to encode the video sequence 108) one or more prediction techniques to reduce redundant information in the video sequence 108. Redundant information may comprise information that may be predicted at a decoder and need not be transmitted to the decoder for accurate decoding of the video sequence 108. For example, the encoder 114 may apply spatial prediction (e.g., intra-frame or intra prediction), temporal prediction (e.g., inter-frame prediction or inter prediction), inter-layer prediction, and/or other prediction techniques to reduce redundant information in the video sequence 108. The encoder 114 may partition pictures comprising the video sequence 108 into rectangular regions referred to as blocks, for example, prior to applying one or more prediction techniques. The encoder 114 may then encode a block using the one or more of the prediction techniques.

The encoder 114 may search for a block similar to the block being encoded in another picture (e.g., a reference picture) of the video sequence 108, for example, for temporal prediction. The block determined during the search (e.g., a prediction block) may then be used to predict the block being encoded. The encoder 114 may form a prediction block based on data from reconstructed neighboring samples of the block to be encoded within the same picture of the video sequence 108, for example, for spatial prediction. A reconstructed sample may be a sample that was encoded and then decoded. The encoder 114 may determine a prediction error (e.g., a residual) based on the difference between a block being encoded and a prediction block. The prediction error may represent non-redundant information that may be sent/transmitted to a decoder for accurate decoding of the video sequence 108.

The encoder 114 may apply a transform to the prediction error (e.g. using a discrete cosine transform (DCT), or any other transform) to generate transform coefficients. The encoder 114 may form the bitstream 110 based on the transform coefficients and other information used to determine prediction blocks using/based on prediction types, motion vectors, and prediction modes. The encoder 114 may perform one or more of quantization and entropy coding of the transform coefficients and/or the other information used to determine the prediction blocks, for example, prior to forming the bitstream 110. The quantization and/or the entropy coding may further reduce the quantity of bits needed to store and/or transmit the video sequence 108.

The output interface 116 may be configured to write and/or store the bitstream 110 onto the transmission medium 104 for transmission to the destination device 106. The output interface 116 may be configured to send/transmit, upload, and/or stream the bitstream 110 to the destination device 106 via the transmission medium 104. The output interface 116 may comprise a wired and/or a wireless transmitter configured to send/transmit, upload, and/or stream the bitstream 110 in accordance with one or more proprietary, open-source, and/or standardized communication protocols (e.g., Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol).

The transmission medium 104 may comprise wireless, wired, and/or computer readable medium. For example, the transmission medium 104 may comprise one or more wires, cables, air interfaces, optical discs, flash memory, and/or magnetic memory. The transmission medium 104 may comprise one or more networks (e.g., the internet) or file servers configured to store and/or send/transmit encoded video data.

The destination device 106 may decode the bitstream 110 into the video sequence 108 for display. The destination device 106 may comprise one or more of an input interface 118, a decoder 120, and/or a video display 122. The input interface 118 may be configured to read the bitstream 110 stored on the transmission medium 104 by the source device 102. The input interface 118 may be configured to receive, download, and/or stream the bitstream 110 from the source device 102 via the transmission medium 104. The input interface 118 may comprise a wired and/or a wireless receiver configured to receive, download, and/or stream the bitstream 110 in accordance with one or more proprietary, open-source, standardized communication protocols, and/or any other communication protocol (e.g., such as referenced herein).

The decoder 120 may decode the video sequence 108 from the encoded bitstream 110. The decoder 120 may generate prediction blocks for pictures of the video sequence 108 in a similar manner as the encoder 114 and determine the prediction errors for the blocks, for example, to decode the video sequence 108. The decoder 120 may generate the prediction blocks using/based on prediction types, prediction modes, and/or motion vectors received in the bitstream 110. The decoder 120 may determine the prediction errors using the transform coefficients received in the bitstream 110. The decoder 120 may determine the prediction errors by weighting transform basis functions using the transform coefficients. The decoder 120 may combine the prediction blocks and the prediction errors to decode the video sequence 108. The video sequence 108 at the destination device 106 may be, or may not necessarily be, the same video sequence sent, such as the video sequence 108 as sent by the source device 102. The decoder 120 may decode a video sequence that approximates the video sequence 108, for example, because of lossy compression of the video sequence 108 by the encoder 114 and/or errors introduced into the encoded bitstream 110 during transmission to the destination device 106.

The video display 122 may display the video sequence 108 to a user. The video display 122 may comprise a cathode rate tube (CRT) display, a liquid crystal display (LCD), a plasma display, a light emitting diode (LED) display, and/or any other display device suitable for displaying the video sequence 108.

The video encoding/decoding system 100 is merely an example and video encoding/decoding systems different from the video encoding/decoding system 100 and/or modified versions of the video encoding/decoding system 100 may perform the methods and processes as described herein. For example, the video encoding/decoding system 100 may comprise other components and/or arrangements. The video source 112 may be external to the source device 102. The video display device 122 may be external to the destination device 106 or omitted altogether (e.g., if the video sequence 108 is intended for consumption by a machine and/or storage device). The source device 102 may further comprise a video decoder and the destination device 104 may further comprise a video encoder. For example, the source device 102 may be configured to further receive an encoded bit stream from the destination device 106 to support two-way video transmission between the devices.

The encoder 114 and/or the decoder 120 may operate according to one or more proprietary or industry video coding standards. For example, the encoder 114 and/or the decoder 120 may operate in accordance with one or more proprietary, open-source, and/or standardized protocols (e.g., International Telecommunications Union Telecommunication Standardization Sector (ITU-T) H.263, ITU-T H.264 and Moving Picture Expert Group (MPEG)-4 Visual (also known as Advanced Video Coding (AVC)), ITU-T H.265 and MPEG-H Part 2 (also known as High Efficiency Video Coding (HEVC)), ITU-T H.265 and MPEG-IPart 3 (also known as Versatile Video Coding (VVC)), the WebM VP8 and VP9 codecs, and/or AOMedia Video 1 (AV1), and/or any other video coding protocol).

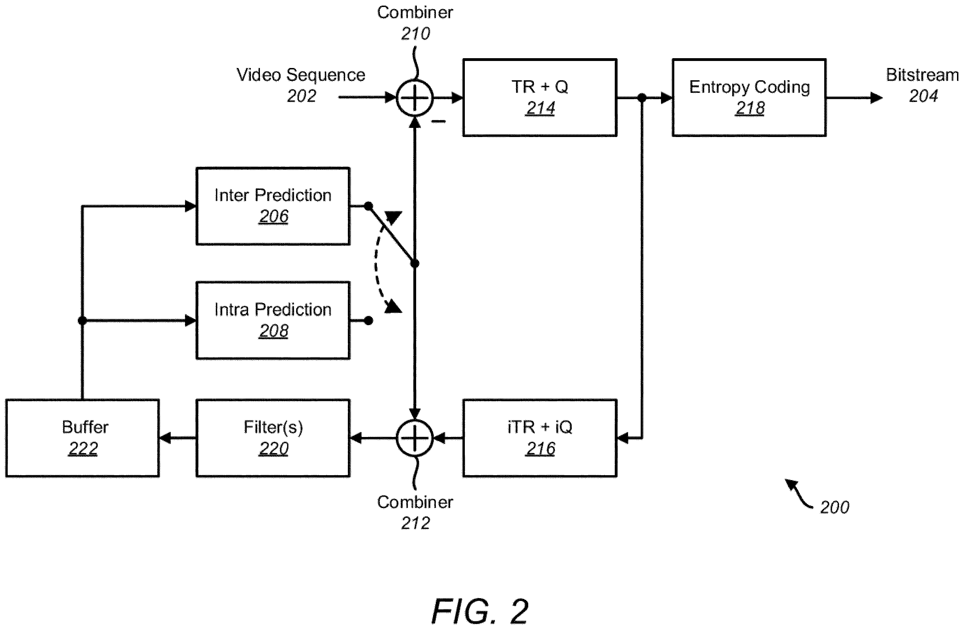

FIG. 2 shows an example encoder. The encoder 200 as shown in FIG. 2 may implement one or more processes described herein. The encoder 200 may encode a video sequence 202 into a bitstream 204 for more efficient storage and/or transmission. The encoder 200 may be implemented in the video coding/decoding system 100 as shown in FIG. 1 (e.g., as the encoder 114) or in any computing, communication, or electronic device (e.g., desktop computer, laptop computer, tablet computer, smart phone, wearable device, television, camera, video gaming console, set-top box, video streaming device, etc.). The encoder 200 may comprise one or more of an inter prediction unit 206, an intra prediction unit 208, combiners 210 and 212, a transform and quantization unit (TR + Q) 214, an inverse transform and quantization unit (iTR + iQ) 216, an entropy coding unit 218, one or more filters 220, and/or a buffer 222.

The encoder 200 may partition pictures (e.g., frames) of (e.g., comprising) the video sequence 202 into blocks and encode the video sequence 202 on a block-by-block basis. The encoder 200 may perform/apply a prediction technique on a block being encoded using either the inter prediction unit 206 or the intra prediction unit 208. The inter prediction unit 206 may perform inter prediction by searching for a block similar to the block being encoded in another, reconstructed picture (e.g., a reference picture) of the video sequence 202. The reconstructed picture may be a picture that was encoded and then decoded. The block determined during the search (e.g., a prediction block) may then be used to predict the block being encoded to remove redundant information. The inter prediction unit 206 may exploit temporal redundancy or similarities in scene content from picture to picture in the video sequence 202 to determine the prediction block. For example, scene content between pictures of the video sequence 202 may be similar except for differences due to motion and/or affine transformation of the screen content over time.

The intra prediction unit 208 may perform intra prediction by forming a prediction block based on data from reconstructed neighboring samples of the block to be encoded within the same picture of the video sequence 202. The reconstructed sample may be a sample that was encoded and then decoded. The intra prediction unit 208 may exploit spatial redundancy or similarities in scene content within a picture of the video sequence 202 to determine the prediction block. For example, the texture of a region of scene content in a picture may be similar to the texture in the immediate surrounding area of the region of the scene content in the same picture.

The combiner 210 may determine a prediction error (e.g., a residual) based on the difference between the block being encoded and the prediction block. The prediction error may represent non-redundant information that may be sent/transmitted to a decoder for accurate decoding of the video sequence 202.

The transform and quantization unit (TR + Q) 214 may transform and quantize the prediction error. The transform and quantization unit 214 may transform the prediction error into transform coefficients by applying, for example, a DCT to reduce correlated information in the prediction error. The transform and quantization unit 214 may quantize the coefficients by mapping data of the transform coefficients to a predefined set of representative values. The transform and quantization unit 214 may quantize the coefficients to reduce irrelevant information in the bitstream 204. The Irrelevant information may be information that may be removed from the coefficients without producing visible and/or perceptible distortion in the video sequence 202 after decoding (e.g., at a receiving device).

The entropy coding unit 218 may apply one or more entropy coding methods to the quantized transform coefficients to further reduce the bit rate. For example, the entropy coding unit 218 may apply context adaptive variable length coding (CAVLC), context adaptive binary arithmetic coding (CABAC), and/or syntax-based context-based binary arithmetic coding (SBAC). The entropy coded coefficients may be packed to form the bitstream 204.

The inverse transform and quantization unit (iTR + iQ) 216 may inverse quantize and inverse transform the quantized transform coefficients to determine a reconstructed prediction error. The combiner 212 may combine the reconstructed prediction error with the prediction block to form a reconstructed block. The filter(s) 220 may filter the reconstructed block, for example, using a deblocking filter and/or a sample-adaptive offset (SAO) filter. The buffer 222 may store the reconstructed block for prediction of one or more other blocks in the same and/or different picture of the video sequence 202.

The encoder 200 may further comprise an encoder control unit. The encoder control unit may be configured to control one or more units of the encoder 200 as shown in FIG. 2. The encoder control unit may control the one or more units of the encoder 200 such that the bitstream 204 may be generated in conformance with the requirements of one or more proprietary coding protocols, industry video coding standards, and/or any other video cording protocol. For example, the encoder control unit may control the one or more units of the encoder 200 such that bitstream 204 may be generated in conformance with one or more of ITU-T H.263, AVC, HEVC, VVC, VP8, VP9, AV1, and/or any other video coding standard/format.

The encoder control unit may attempt to minimize (or reduce) the bitrate of bitstream 204 and/or maximize (or increase) the reconstructed video quality (e.g., within the constraints of a proprietary coding protocol, industry video coding standard, and/or any other video cording protocol). For example, the encoder control unit may attempt to minimize or reduce the bitrate of bitstream 204 such that the reconstructed video quality may not fall below a certain level/threshold, and/or may attempt to maximize or increase the reconstructed video quality such that the bit rate of bitstream 204 may not exceed a certain level/threshold. The encoder control unit may determine/control one or more of: partitioning of the pictures of the video sequence 202 into blocks, whether a block is inter predicted by the inter prediction unit 206 or intra predicted by the intra prediction unit 208, a motion vector for inter prediction of a block, an intra prediction mode among a plurality of intra prediction modes for intra prediction of a block, filtering performed by the filter(s) 220, and/or one or more transform types and/or quantization parameters applied by the transform and quantization unit 214. The encoder control unit may determine/control one or more of the above based on a rate-distortion measure for a block or picture being encoded. The encoder control unit may determine/control one or more of the above to reduce the rate-distortion measure for a block or picture being encoded.

The prediction type used to encode a block (intra or inter prediction), prediction information of the block (intra prediction mode if intra predicted, motion vector, etc.), and/or transform and/or quantization parameters, may be sent to the entropy coding unit 218 to be further compressed (e.g., to reduce the bit rate). For example, entropy coding unit 218 may apply context adaptive variable length coding (CAVLC), context adaptive binary arithmetic coding (CABAC), and syntax-based context-based binary arithmetic coding (SBAC) to compress the prediction type used to encode a block (intra or inter prediction), prediction information of the block (intra prediction mode if intra predicted, motion vector, etc.), and transform and quantization parameters. The prediction type, prediction information, and/or transform and/or quantization parameters may be packed with the prediction error to form the bitstream 204.

The encoder 200 is merely an example and encoders different from the encoder 200 and/or modified versions of the encoder 200 may perform the methods and processes as described herein. For example, the encoder 200 may comprise other components and/or arrangements. One or more of the components shown in FIG. 2 may be optionally included in the encoder 200 (e.g., the entropy coding unit 218 and/or the filters(s) 220).

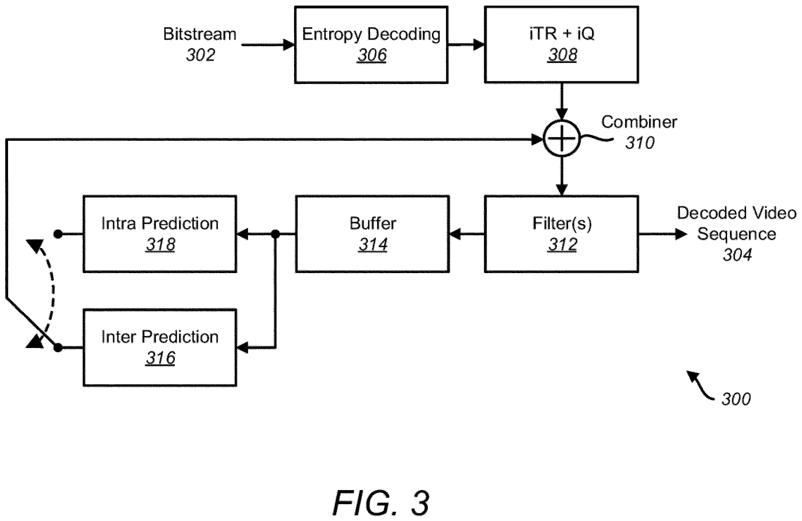

FIG. 3 shows an example decoder. A decoder 300 as shown in FIG. 3 may implement one or more processes described herein. The decoder 300 may decode a bitstream 302 into a decoded video sequence 304 for display and/or some other form of consumption. The decoder 300 may be implemented in the video encoding/decoding system 100 in FIG. 1 and/or in a computing, communication, or electronic device (e.g., desktop computer, laptop computer, tablet computer, smart phone, wearable device, television, camera, video gaming console, set-top box, and/or video streaming device). The decoder 300 may comprise an entropy decoding unit 306, an inverse transform and quantization (iTR + iQ) unit 308, a combiner 310, one or more filters 312, a buffer 314, an inter prediction unit 316, and/or an intra prediction unit 318.

The decoder 300 may comprise a decoder control unit configured to control one or more units of decoder 300. The decoder control unit may control the one or more units of decoder 300 such that the bitstream 302 is decoded in conformance with the requirements of one or more proprietary coding protocols, industry video coding standards, and/or any other communication protocol. For example, the decoder control unit may control the one or more units of decoder 300 such that the bitstream 302 is decoded in conformance with one or more of ITU-T H.263, AVC, HEVC, VVC, VP8, VP9, AV1, and/or any other video coding standard/format.

The decoder control unit may determine/control one or more of: whether a block is inter predicted by the inter prediction unit 316 or intra predicted by the intra prediction unit 318, a motion vector for inter prediction of a block, an intra prediction mode among a plurality of intra prediction modes for intra prediction of a block, filtering performed by the filter(s) 312, and/or one or more inverse transform types and/or inverse quantization parameters to be applied by the inverse transform and quantization unit 308. One or more of the control parameters used by the decoder control unit may be packed in bitstream 302.

The Entropy decoding unit 306 may entropy decode the bitstream 302. For example, entropy decoding unit 306 may apply context adaptive variable length coding (CAVLC), context adaptive binary arithmetic coding (CABAC), and syntax-based context-based binary arithmetic coding (SBAC) to decompress the prediction type used to encode a block (intra or inter prediction), prediction information of the block (intra prediction mode if intra predicted, motion vector, etc.), and transform and quantization parameters. The inverse transform and quantization unit 308 may inverse quantize and/or inverse transform the quantized transform coefficients to determine a decoded prediction error. The combiner 310 may combine the decoded prediction error with a prediction block to form a decoded block. The prediction block may be generated by the intra prediction unit 318 or the inter prediction unit 316 (e.g., as described above with respect to encoder 200 in FIG 2). The filter(s) 312 may filter the decoded block, for example, using a deblocking filter and/or a sample-adaptive offset (SAO) filter. The buffer 314 may store the decoded block for prediction of one or more other blocks in the same and/or different picture of the video sequence in the bitstream 302. The decoded video sequence 304 may be output from the filter(s) 312 as shown in FIG. 3.

The decoder 300 is merely an example and decoders different from the decoder 300 and/or modified versions of the decoder 300 may perform the methods and processes as described herein. For example, the decoder 300 may have other components and/or arrangements. One or more of the components shown in FIG. 3 may be optionally included in the decoder 300 (e.g., the entropy decoding unit 306 and/or the filters(s) 312).

Although not shown in FIGS. 2 and 3, each of the encoder 200 and the decoder 300 may further comprise an intra block copy unit in addition to inter prediction and intra prediction units. The intra block copy unit may perform/operate similar to an inter prediction unit but may predict blocks within the same picture. For example, the intra block copy unit may exploit repeated patterns that appear in screen content. The screen content may include computer generated text, graphics, animation, etc.

Video encoding and/or decoding may be performed on a block-by-block basis. The process of partitioning a picture into blocks may be adaptive based on the content of the picture. For example, larger block partitions may be used in areas of a picture with higher levels of homogeneity to improve coding efficiency.

A picture (e.g., in HEVC, or any other coding standard/format) may be partitioned into non-overlapping square blocks, which may be referred to as coding tree blocks (CTBs). The CTBs may comprise samples of a sample array. A CTB may have a size of 2nx2n samples, where n may be specified by a parameter of the encoding system. For example, n may be 4, 5, 6, or any other value. A CTB may have any other size. A CTB may be further partitioned by a recursive quadtree partitioning into coding blocks (CBs) of half vertical and half horizontal size. The CTB may form the root of the quadtree. A CB that is not split further as part of the recursive quadtree partitioning may be referred to as a leaf CB of the quadtree, and otherwise may be referred to as a non-leaf CB of the quadtree. A CB may have a minimum size specified by a parameter of the encoding system. For example, a CB may have a minimum size of 4x4, 8x8, 16x16, 32x32, 64x64 samples, or any other minimum size. A CB may be further partitioned into one or more prediction blocks (PBs) for performing inter and/or intra prediction. A PB may be a rectangular block of samples on which the same prediction type/mode may be applied. For transformations, a CB may be partitioned into one or more transform blocks (TBs). A TB may be a rectangular block of samples that may determine/indicate an applied transform size.

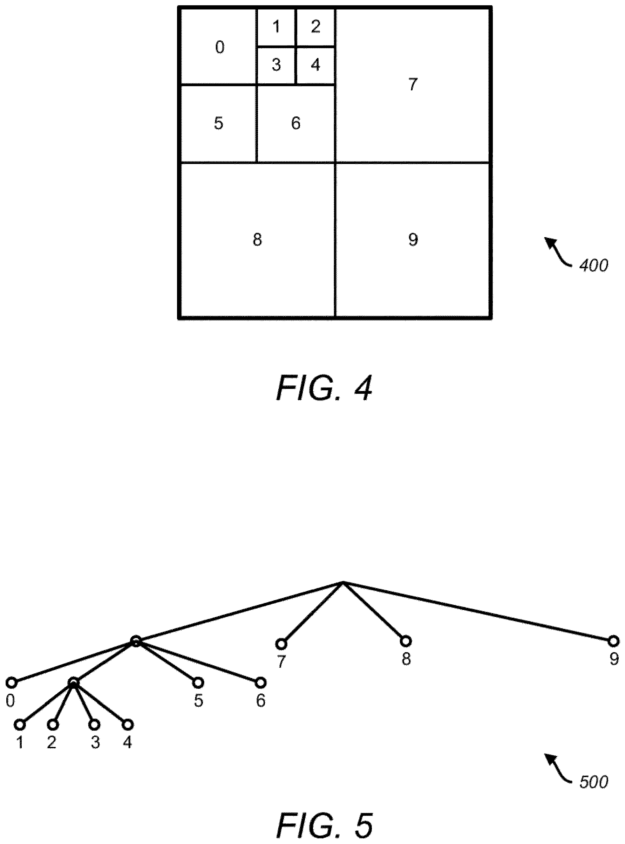

FIG. 4 shows an example quadtree partitioning of a CTB. FIG. 5 shows a quadtree corresponding to the example quadtree partitioning of the CTB 400 in FIG. 4. As shown in FIGS. 4 and 5, the CTB 400 may first be partitioned into four CBs of half vertical and half horizontal size. Three of the resulting CBs of the first level partitioning of CTB 400 may be leaf CBs. The three leaf CBs of the first level partitioning of CTB 400 are respectively labeled 7, 8, and 9 in FIGS. 4 and 5. The non-leaf CB of the first level partitioning of CTB 400 may be partitioned into four sub-CBs of half vertical and half horizontal size. Three of the resulting sub-CBs of the second level partitioning of CTB 400 may be leaf CBs. The three leaf CBs of the second level partitioning of CTB 400 are respectively labeled 0, 5, and 6 in FIGS. 4 and 5. The non-leaf CB of the second level partitioning of CTB 400 may be partitioned into four leaf CBs of half vertical and half horizontal size. The four leaf CBs may be respectively labeled 1, 2, 3, and 4 in FIGS. 4 and 5.

The CTB 400 of FIG. 4 may be partitioned into 10 leaf CBs respectively labeled 0-9, and/or any other quantity of leaf CBs. The 10 leaf CBs may correspond to 10 CB leaf nodes (e.g., 10 CB leaf nodes of the quadtree 500 as shown in FIG. 5). In other examples, a CTB may be partitioned into a different number of leaf CBs. The resulting quadtree partitioning of the CTB 400 may be scanned using a z-scan (e.g., left-to-right, top-to-bottom) to form the sequence order for encoding/decoding the CB leaf nodes. A numeric label (e.g., indicator, index) of each CB leaf node in FIGS. 4 and 5 may correspond to the sequence order for encoding/decoding. For example, CB leaf node 0 may be encoded/decoded first and CB leaf node 9 may be encoded/decoded last. Although not shown in FIGS. 4 and 5, each CB leaf node may comprise one or more PBs and/or TBs.

A picture, in VVC (or in any other coding standard/format), may be partitioned in a similar manner (such as in HEVC). A picture may be first partitioned into non-overlapping square CTBs. The CTBs may then be partitioned, using a recursive quadtree partitioning, into CBs of half vertical and half horizontal size. A quadtree leaf node (e.g., in VVC) may be further partitioned by a binary tree or ternary tree partitioning (or any other partitioning) into CBs of unequal sizes.

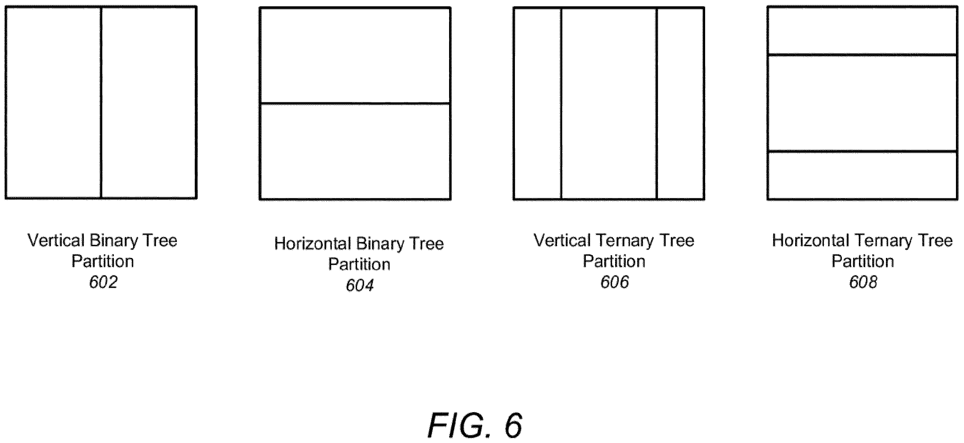

FIG. 6 shows example binary tree and ternary tree partitions. A binary tree partition may divide a parent block in half in either a vertical direction 602 or a horizontal direction 604. The resulting partitions may be half in size as compared to the parent block. The resulting partitions may correspond to sizes that are less than and/or greater than half of the parent block size. A ternary tree partition may divide a parent block into three parts in either a vertical direction 606 or a horizontal direction 608. FIG. 6 shows an example in which the middle partition may be twice as large as the other two end partitions in the ternary tree partitions. In other examples, partitions may be of other sizes relative to each other and to the parent block. Binary and ternary tree partitions are examples of multi-type tree partitioning. Multi-type tree partitions may comprise partitioning a parent block into other quantities of smaller blocks. The block partitioning strategy (e.g., in VVC) may be referred to as a combination of quadtree and multi-type tree partitioning (quadtree + multi-type tree partitioning) because of the addition of binary and/or ternary tree partitioning to quadtree partitioning.

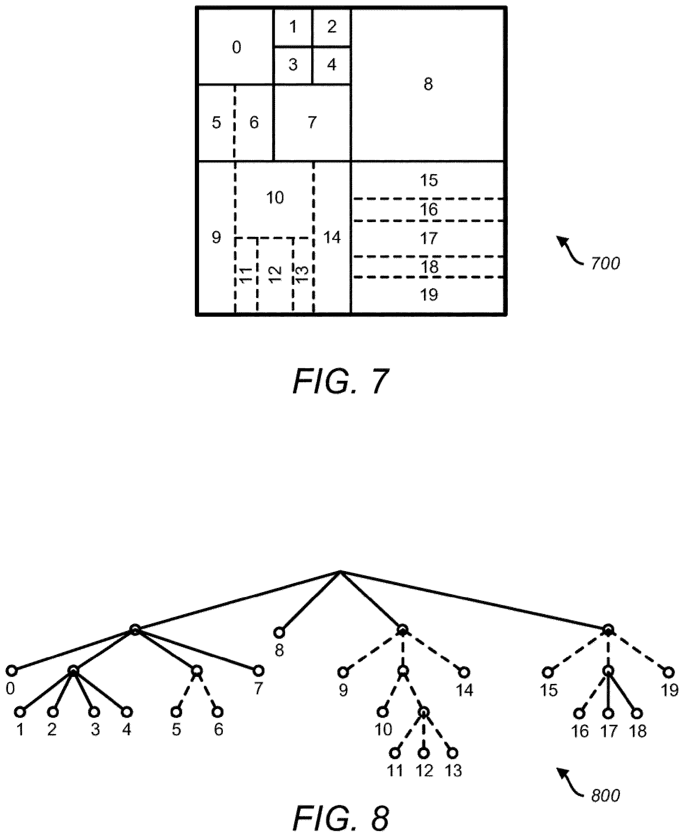

FIG. 7 shows an example of combined quadtree and multi-type tree partitioning of a CTB. FIG. 8 shows a tree corresponding to the combined quadtree and multi-type tree partitioning of the CTB 700 shown in FIG. 7. In both FIGS. 7 and 8, quadtree splits are shown in solid lines and multi-type tree splits are shown in dashed lines. The CTB 700 is shown with the same quadtree partitioning as the CTB 400 described in FIG. 4, and a description of the quadtree partitioning of the CTB 700 is omitted. The quadtree partitioning of the CTB 700 is merely an example and a CTB may be quadtree partitioned in a manner different from the CTB 700. Additional multi-type tree partitions of the CTB 700 may be made relative to three leaf CBs shown in FIG. 4. The three leaf CBs in FIG. 4 that are shown in FIG. 7 as being further partitioned may be leaf CBs 5, 8, and 9. The three leaf CBs may be further partitioned using one or more binary and/or ternary tree partitions.

The leaf CB 5 of FIG. 4 may be partitioned into two CBs based on a vertical binary tree partitioning. The two resulting CBs may be leaf CBs respectively labeled 5 and 6 in FIGS. 7 and 8. The leaf CB 8 of FIG. 4 may be partitioned into three CBs based on a vertical ternary tree partition. Two of the three resulting CBs may be leaf CBs respectively labeled 9 and 14 in FIGS. 7 and 8. The remaining, non-leaf CB may be partitioned first into two CBs based on a horizontal binary tree partition. One of the two CBs may be a leaf CB labeled 10. The other of the two CBs may be further partitioned into three CBs based on a vertical ternary tree partition. The resulting three CBs may be leaf CBs respectively labeled 11, 12, and 13 in FIGS. 7 and 8. The leaf CB 9 of FIG. 4 may be partitioned into three CBs based on a horizontal ternary tree partition. Two of the three CBs may be leaf CBs respectively labeled 15 and 19 in FIGS. 7 and 8. The remaining, non-leaf CB may be partitioned into three CBs based on another horizontal ternary tree partition. The resulting three CBs may all be leaf CBs respectively labeled 16, 17, and 18 in FIGS. 7 and 8.

Altogether, the CTB 700 may be partitioned into 20 leaf CBs respectively labeled 0-19. The 20 leaf CBs may correspond to 20 leaf nodes (e.g., 20 leaf nodes of the tree 800 shown in FIG. 8). The resulting combination of quadtree and multi-type tree partitioning of the CTB 700 may be scanned using a z-scan (left-to-right, top-to-bottom) to form the sequence order for encoding/decoding the CB leaf nodes. A numeric label of each CB leaf node in FIGS. 7 and 8 may correspond to the sequence order for encoding/decoding, with CB leaf node 0 encoded/decoded first and CB leaf node 19 encoded/decoded last. Although not shown in FIGS. 7 and 8, it should be noted that each CB leaf node may comprise one or more PBs and/or TBs.

A coding standard/format (e.g., HEVC, VVC, or any other coding standard/format) may define various units (e.g., in addition to specifying various blocks (e.g., CTBs, CBs, PBs, TBs)). Blocks may comprise a rectangular area of samples in a sample array. Units may comprise the collocated blocks of samples from the different sample arrays (e.g., luma and chroma sample arrays) that form a picture as well as syntax elements and prediction data of the blocks. A coding tree unit (CTU) may comprise the collocated CTBs of the different sample arrays and may form a complete entity in an encoded bit stream. A coding unit (CU) may comprise the collocated CBs of the different sample arrays and syntax structures used to code the samples of the CBs. A prediction unit (PU) may comprise the collocated PBs of the different sample arrays and syntax elements used to predict the PBs. A transform unit (TU) may comprise TBs of the different samples arrays and syntax elements used to transform the TBs.

A block may refer to any of a CTB, CB, PB, TB, CTU, CU, PU, and/or TU (e.g., in the context of HEVC, VVC, or any other coding format/standard). A block may be used to refer to similar data structures in the context of any video coding format/standard/protocol. For example, a block may refer to a macroblock in the AVC standard, a macroblock or a sub-block in the VP8 coding format, a superblock or a sub-block in the VP9 coding format, and/or a superblock or a sub-block in the AV1 coding format.

Samples of a block to be encoded (e.g., a current block) may be predicted from samples of the column immediately adjacent to the left-most column of the current block and samples of the row immediately adjacent to the top-most row of the current block, such as in intra prediction. The samples from the immediately adjacent column and row may be jointly referred to as reference samples. Each sample of the current block may be predicted (e.g., in an intra prediction mode) by projecting the position of the sample in the current block in a given direction to a point along the reference samples. The sample may be predicted by interpolating between the two closest reference samples of the projection point if the projection does not fall directly on a reference sample. A prediction error (e.g., a residual) may be determined for the current block based on differences between the predicted sample values and the original sample values of the current block.

Predicting samples and determining a prediction error based on a difference between the predicted samples and original samples may be performed (e.g., at an encoder) for a plurality of different intra prediction modes (e.g., including non-directional intra prediction modes). The encoder may select one of the plurality of intra prediction modes and its corresponding prediction error to encode the current block. The encoder may send an indication of the selected prediction mode and its corresponding prediction error to a decoder for decoding of the current block. The decoder may decode the current block by predicting the samples of the current block, using the intra prediction mode indicated by the encoder, and/or combining the predicted samples with the prediction error.

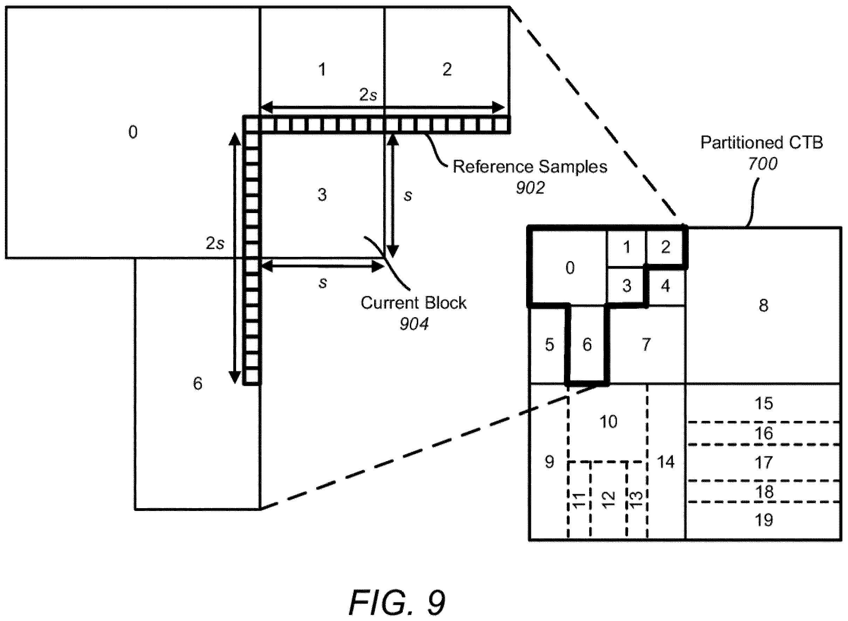

FIG. 9 shows an example set of reference samples determined for intra prediction of a current block. The current block 904 may correspond to a block being encoded and/or decoded. The current block 904 may correspond to block 3 of the partitioned CTB 700 as shown in FIG. 7. As described herein, the numeric labels 0-19 of the blocks of partitioned CTB 700 may correspond to the sequence order for encoding/decoding the blocks and may be used as such in the example of FIG. 9.

The current block 904 may be w × h samples in size. The reference samples 902 may comprise: 2w samples (or any other quantity of samples) of the row immediately adjacent to the top-most row of the current block 904, 2h samples (or any other quantity of samples) of the column immediately adjacent to the left-most column of the current block 904, and the top left neighboring corner sample to the current block 904. The current block 904 may be square, such that w = h = s. In other examples, a current block need not be square, such that w ≠ h. Available samples from neighboring blocks of the current block 904 may be used for constructing the set of reference samples 902. Samples may not be available for constructing the set of reference samples 902, for example, if the samples lie outside the picture of the current block, the samples are part of a different slice of the current block (e.g., if the concept of slices is used), and/or the samples belong to blocks that have been inter coded and constrained intra prediction is indicated. Intra prediction may not be dependent on inter predicted blocks, for example, if constrained intra prediction is indicated.

Samples that may not be available for constructing the set of reference samples 902 may comprise samples in blocks that have not already been encoded and reconstructed at an encoder and/or decoded at a decoder based on the sequence order for encoding/decoding. Restriction of such samples from inclusion in the set of reference samples 902 may allow identical prediction results to be determined at both the encoder and decoder. Samples from neighboring blocks 0, 1, and 2 may be available to construct the reference samples 902 given that these blocks are encoded and reconstructed at an encoder and decoded at a decoder prior to coding of the current block 904. The samples from neighboring blocks 0, 1, and 2 may be available to construct reference samples 902, for example, if there are no other issues (e.g., as mentioned above) preventing the availability of the samples from the neighboring blocks 0, 1, and 2. The portion of reference samples 902 from neighboring block 6 may not be available due to the sequence order for encoding/decoding (e.g., because the block 6 may not have already been encoded and reconstructed at the encoder and/or decoded at the decoder based on the sequence order for encoding/decoding).

Unavailable samples from the reference samples 902 may be filled with one or more of the available reference samples 902. For example, an unavailable reference sample may be filled with a nearest available reference sample. The nearest available reference sample may be determined by moving in a clock-wise direction through the reference samples 902 from the position of the unavailable reference. The reference samples 902 may be filled with the mid-value of the dynamic range of the picture being coded, for example, if no reference samples are available.

The reference samples 902 may be filtered based on the size of current block 904 being coded and an applied intra prediction mode. FIG. 9 shows an exemplary determination of reference samples for intra prediction of a block. Reference samples may be determined in a different manner than described above. For example, multiple reference lines may be used in other instances (e.g., in VVC).

Samples of the current block 904 may be intra predicted based on the reference samples 902, for example, based on (e.g., after) determination and (optionally) filtration of the reference samples. At least some (e.g., most) encoders/decoders may support a plurality of intra prediction modes in accordance with one or more video coding standards. For example, HEVC supports 35 intra prediction modes, including a planar mode, a direct current (DC) mode, and 33 angular modes. VVC supports 67 intra prediction modes, including a planar mode, a DC mode, and 65 angular modes. Planar and DC modes may be used to predict smooth and gradually changing regions of a picture. Angular modes may be used to predict directional structures in regions of a picture. Any quantity of intra prediction modes may be supported.

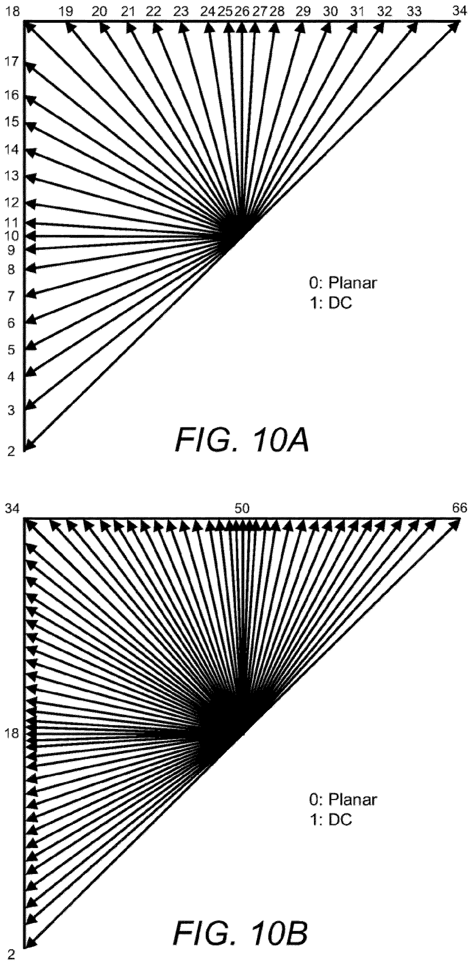

FIGS. 10A and 10B show example intra prediction modes. FIG. 10A shows 35 intra prediction modes, such as supported by HEVC. The 35 intra prediction modes may be indicated/identified by indices 0 to 34. Prediction mode 0 may correspond to planar mode. Prediction mode 1 may correspond to DC mode. Prediction modes 2-34 may correspond to angular modes. Prediction modes 2-18 may be referred to as horizontal prediction modes because the principal source of prediction is in the horizontal direction. Prediction modes 19-34 may be referred to as vertical prediction modes because the principal source of prediction is in the vertical direction.

FIG. 10B shows 67 intra prediction modes, such as supported by VVC. The 67 intra prediction modes may be indicated/identified by indices 0 to 66. Prediction mode 0 may correspond to planar mode. Prediction mode 1 corresponds to DC mode. Prediction modes 2-66 may correspond to angular modes. Prediction modes 2-34 may be referred to as horizontal prediction modes because the principal source of prediction is in the horizontal direction. Prediction modes 35-66 may be referred to as vertical prediction modes because the principal source of prediction is in the vertical direction. Some of the intra prediction modes illustrated in FIG. 10B may be adaptively replaced by wide-angle directions because blocks in VVC need not be squares.

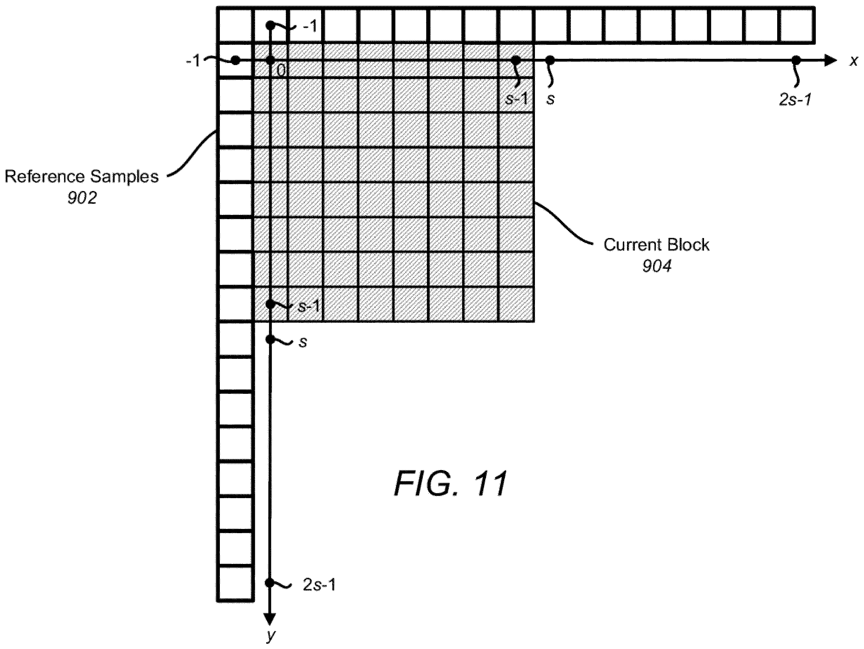

FIG. 11 shows a current block and corresponding reference samples. In FIG. 11, the current block 904 and the reference samples 902 from FIG. 9 are shown in a two-dimensional x, y plane, where a sample may be referenced as p[x][y]. In order to simplify the prediction process, the reference samples 902 may be placed in two, one-dimensional arrays. The reference samples 902, above the current block 904, may be placed in the one-dimensional array $ref_1[x]$:

$$ref_1[x] = p[-1+x][-1], (x \geq 0).$$ (1)

The reference samples 902 to the left of the current block 904 may be placed in the one-dimensional array $ref_2[y]$:

$$ref_2[y] = p[-1][-1+y], (y \geq 0).$$ (2)

The prediction process may comprise determination of a predicted sample p[x][y] (e.g., a predicted value) at a location [x][y] in the current block 904. For planar mode, a sample at the location [x][y] in the current block 904 may be predicted by determining/calculating the mean of two interpolated values. The first of the two interpolated values may be based on a horizontal linear interpolation at the location [x][y] in the current block 904. The second of the two interpolated values may be based on a vertical linear interpolation at the location [x][y] in the current block 904. The predicted sample p[x][y] in the current block 904 may be determined/calculated as:

$$p[x][y] = \frac{1}{2 \cdot s}(h[x][y] + v[x][y] + s),$$ (3)

where

$$h[x][y] = (s - x - 1) \cdot ref_2[y] + (x + 1) \cdot ref_1[s]$$ (4)

may be the horizonal linear interpolation at the location [x][y] in the current block 904 and

$$v[x][y] = (s - y - 1) \cdot ref_1[x] + (y + 1) \cdot ref_2[s]$$ (5)

may be the vertical linear interpolation at the location [x][y] in the current block 904. S may be equal to a length of a side (e.g., a number of samples on a side) of the current block 904.
A sample at a location [x][y] in the current block 904 may be predicted by the mean of the reference samples 902, such as for a DC mode. The predicted sample p[x][y] in the current block 904 may be determined/calculated as:

$$p[x][y] = \frac{1}{2 \cdot s}\left(\sum_{x=0}^{s-1} ref_1[x] + \sum_{y=0}^{s-1} ref_2[y]\right).$$ (6)

A sample at a location [x][y] in the current block 904 may be predicted by projecting the location [x][y] in a direction specified by a given angular mode to a point on the horizontal or vertical line of samples comprising the reference samples 902, such as for an angular mode. The sample at the location [x][y] may be predicted by interpolating between the two closest reference samples of the projection point if the projection does not fall directly on a reference sample. The direction specified by the angular mode may be given by an angle φ defined relative to the y-axis for vertical prediction modes (e.g., modes 19-34 in HEVC and modes 35-66 in VVC). The direction specified by the angular mode may be given by an angle φ defined relative to the x-axis for horizontal prediction modes (e.g., modes 2-18 in HEVC and modes 2-34 in VVC).

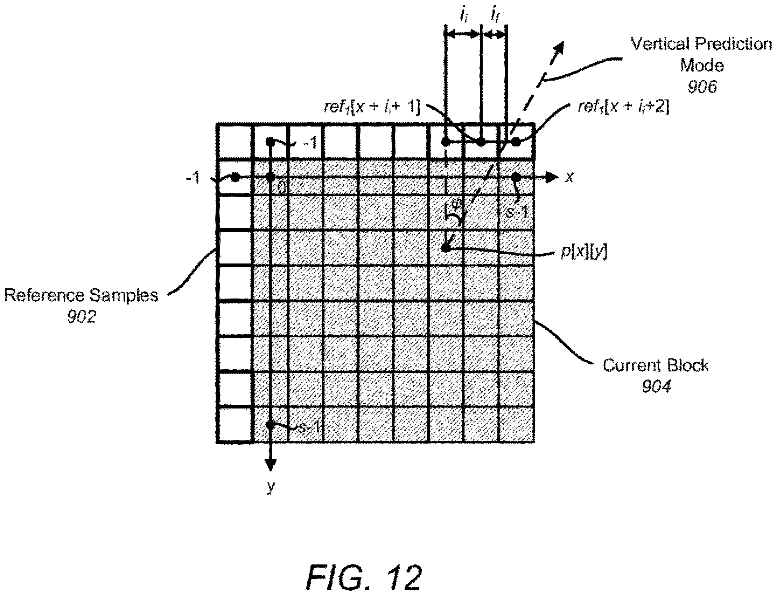

FIG. 12 shows an example application of an intra prediction mode for prediction of a current block. FIG. 12 specifically shows prediction of a sample at a location [x][y] in the current block 904 for a vertical prediction mode 906. The vertical prediction mode 906 may be given by an angle φ with respect to the vertical axis. The location [x][y] in the current block 904, in vertical prediction modes, may be projected to a point (e.g., a projection point) on the horizontal line of reference samples $ref_1[x]$. The reference samples 902 are only partially shown in FIG. 12 for ease of illustration. As shown in FIG. 12, the projection point on the horizontal line of reference samples $ref_1[x]$ may not be exactly on a reference sample. A predicted sample $p[x][y]$ in the current block 904 may be determined/calculated by linearly interpolating between the two reference samples, for example, if the projection point falls at a fractional sample position between two reference samples. The predicted sample $p[x][y]$ may be determined/calculated as:

$$p[x][y] = (1 - i_\text{f}) \cdot ref_1[x + i_i + 1] + i_\text{f} \cdot ref_1[x + i_i + 2]. \qquad (7)$$

$i_i$ may be the integer part of the horizontal displacement of the projection point relative to the location $[x][y]$. $i_i$ may be determined/calculated as a function of the tangent of the angle $\varphi$ of the vertical prediction mode 906 as:

$$i_i = \lfloor (y + 1) \cdot \tan \varphi \rfloor. \qquad (8)$$

$i_\text{f}$ may be the fractional part of the horizontal displacement of the projection point relative to the location $[x][y]$ and may be determined/calculated as:

$$i_\text{f} = ((y + 1) \cdot \tan \varphi) - \lfloor (y + 1) \cdot \tan \varphi \rfloor, \qquad (9)$$

where $\lfloor \cdot \rfloor$ is the integer floor function.

A location $[x][y]$ of a sample in the current block 904 may be projected onto the vertical line of reference samples $ref_2[y]$, such as for horizontal prediction modes. A predicted sample $p[x][y]$ for horizontal prediction modes may be determined/calculated as:

$$p[x][y] = (1 - i_\text{f}) \cdot ref_2[y + i_i + 1] + i_\text{f} \cdot ref_2[y + i_i + 2]. \qquad (10)$$

$i_i$ may be the integer part of the vertical displacement of the projection point relative to the location $[x][y]$. $i_i$ may be determined/calculated as a function of the tangent of the angle $\varphi$ of the horizontal prediction mode as:

$$i_i = \lfloor (x + 1) \cdot \tan \varphi \rfloor. \qquad (11)$$

$i_\text{f}$ may be the fractional part of the vertical displacement of the projection point relative to the location $[x][y]$. $i_\text{f}$ may be determined/calculated as:

$$i_f = ((x + 1) \cdot \tan \varphi) - \lfloor (x + 1) \cdot \tan \varphi \rfloor, \qquad (12)$$

where $\lfloor \cdot \rfloor$ is the integer floor function.

The interpolation functions given by Equations (7) and (10) may be implemented by an encoder and/or a decoder (e.g., the encoder 200 in FIG. 2 and/or the decoder 300 in FIG. 3). The interpolation functions may be implemented by finite impulse response (FIR) filters. For example, the interpolation functions may be implemented as a set of two-tap FIR filters. The coefficients of the two-tap FIR filters may be respectively given by $(1-i_\text{f})$ and $i_\text{f}$. The predicted sample $p[x][y]$, in angular intra prediction, may be calculated with some predefined level of sample accuracy (e.g., 1/32 sample accuracy, or accuracy defined by any other metric). For 1/32 sample accuracy, the set of two-tap FIR interpolation filters may comprise up to 32 different two-tap FIR interpolation filters - one for each of the 32 possible values of the fractional part of the projected displacement $i_\text{f}$. In other examples, different levels of sample accuracy may be used.

The FIR filters may be used for predicting chroma samples and/or luma samples. For example, the two-tap interpolation FIR filter may be used for predicting chroma samples and a same and/or a different interpolation technique/filter may be used for luma samples. For example, a four-tap FIR filter may be used to determine a predicted value of a luma sample. Coefficients of the four tap FIR filter may be determined based on $i_\text{f}$ (e.g., similar to the two-tap FIR filter). For 1/32 sample accuracy, a set of 32 different four-tap FIR filters may comprise up to 32 different four-tap FIR filters - one for each of the 32 possible values of the fractional part of the projected displacement $i_\text{f}$. In other examples, different levels of sample accuracy may be used. The set of four-tap FIR filters may be stored in a look-up table (LUT) and referenced based on $i_f$. A predicted sample $p[x][y]$, for vertical prediction modes, may be determined based on the four-tap FIR filter as:

$$p[x][y] = \sum_{i=0}^{3} fT[i] \cdot ref_1[x + iIdx + i], \qquad (13)$$

where fT[i], i = 0...3, may be the filter coefficients, and $Idx$ is integer displacement. A predicted sample $p[x][y]$, for horizontal prediction modes, may be determined based on the four-tap FIR filter as:

$$p[x][y] = \sum_{i=0}^{3} fT[i] \cdot ref_2[y + iIdx + i]. \qquad (14)$$

Supplementary reference samples may be determined/constructed if the location $[x][y]$ of a sample in the current block 904 to be predicted is projected to a negative x coordinate. The location $[x][y]$ of a sample may be projected to a negative x coordinate, for example, if negative vertical prediction angles φ are used. The supplementary reference samples may be determined/constructed by projecting the reference samples in $ref_2[y]$ in the vertical line of reference samples 902 to the horizontal line of reference samples 902 using the negative vertical prediction angle φ. Supplementary reference samples may be similarly determined/constructed, for example, if the location $[x][y]$ of a sample in the current block 904 to be predicted is projected to a negative y coordinate. The location $[x][y]$ of a sample may be projected to a negative y coordinate, for example, if negative horizontal prediction angles φ are used. The supplementary reference samples may be determined/constructed by projecting the reference samples in $ref_1[x]$ on the horizontal line of reference samples 902 to the vertical line of reference samples 902 using the negative horizontal prediction angle φ.

An encoder may determine/predict samples of a current block being encoded (e.g., the current block 904) for a plurality of intra prediction modes (e.g., using one or more of the functions described herein). For example, an encoder may determine/predict samples of a current block for each of 35 intra prediction modes in HEVC and/or 67 intra prediction modes in VVC. The encoder may determine, for each intra prediction mode applied, a corresponding prediction error for the current block based on a difference (e.g., sum of squared differences (SSD), sum of absolute differences (SAD), or sum of absolute transformed differences (SATD)) between the prediction samples determined for the intra prediction mode and the original samples of the current block. The encoder may determine/select one of the intra prediction modes to encode the current block based on the determined prediction errors. For example, the encoder may determine/select one of the intra prediction modes that results in the smallest prediction error for the current block. The encoder may determine/select the intra prediction mode to encode the current block based on a rate-distortion measure (e.g., Lagrangian rate-distortion cost) determined using the prediction errors. The encoder may send an indication of the determined/selected intra prediction mode and its corresponding prediction error (e.g., residual) to a decoder for decoding of the current block.

A decoder may determine/predict samples of a current block being decoded (e.g., the current block 904) for an intra prediction mode. For example, a decoder may receive an indication of an intra prediction mode (e.g., an angular intra prediction mode) from an encoder for a current block. The decoder may construct a set of reference samples and perform intra prediction based on the intra prediction mode indicated by the encoder for the current block in a similar manner (e.g., as described above for the encoder). The decoder may add predicted values of the samples (e.g., determined based on the intra prediction mode) of the current block to a residual of the current block to reconstruct the current block. A decoder need not receive an indication of an angular intra prediction mode from an encoder for a current block. A decoder may determine an intra prediction mode, for example, based on other criteria. While various examples herein correspond to intra prediction modes in HEVC and VVC, the methods, devices, and systems as described herein may be applied to/used for other intra prediction modes (e.g., as used in other video coding standards/formats, such as VP8, VP9, AV1, etc.).

Intra prediction may exploit correlations between spatially neighboring samples in the same picture of a video sequence to perform video compression. Inter prediction is another coding tool that may be used to perform video compression. Inter prediction may exploit correlations in the time domain between blocks of samples in different pictures of a video sequence. For example, an object may be seen across multiple pictures of a video sequence. The object may move (e.g., by some translation and/or affine motion) or remain stationary across the multiple pictures. A current block of samples in a current picture being encoded may have/be associated with a corresponding block of samples in a previously decoded picture. The corresponding block of samples may accurately predict the current block of samples. The corresponding block of samples may be displaced from the current block of samples, for example, due to movement of the object, represented in both blocks, across the respective pictures of the blocks. The previously decoded picture may be a reference picture. The corresponding block of samples in the reference picture may be a reference block for motion compensated prediction. An encoder may use a block matching technique to estimate the displacement (or motion) of the object and/or to determine the reference block in the reference picture.

An encoder may determine a difference between a current block and a prediction for a current block. An encoder may determine a difference, for example, based on/after determining/generating a prediction for a current block (e.g., using inter prediction). The difference may be a prediction error and/or as a residual. The encoder may store and/or send (e.g., signal), in/via a bitstream, the prediction error and/or other related prediction information. The prediction error and/or other related prediction information may be used for decoding and/or other forms of consumption. A decoder may decode the current block by predicting the samples of the current block (e.g., by using the related prediction information) and combining the predicted samples with the prediction error.

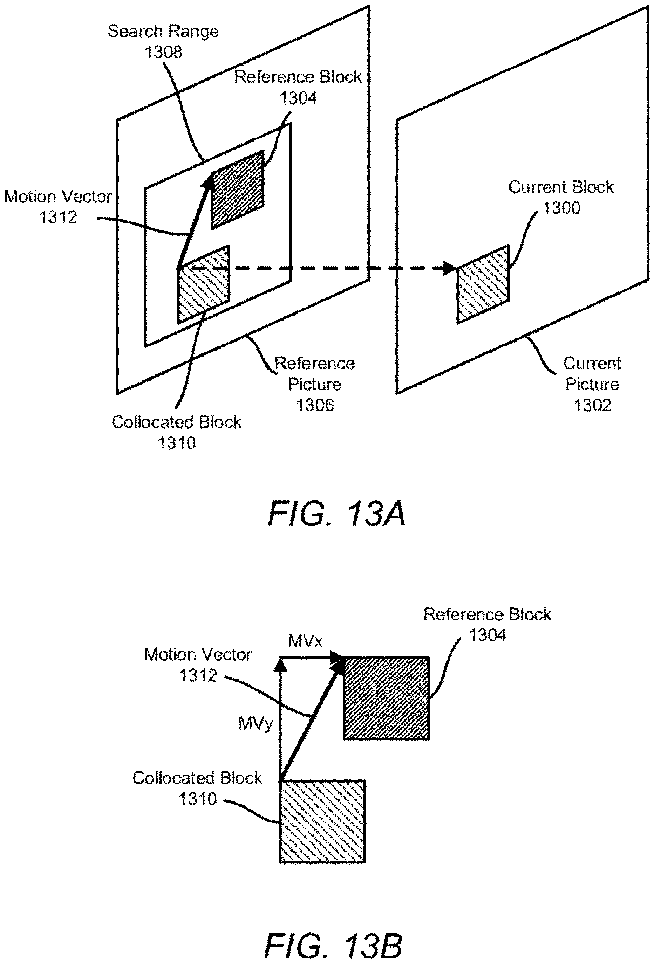

FIG. 13A shows an example of inter prediction. The inter prediction may be performed for a current block 1300 in a current picture 1302 being encoded. An encoder (e.g., the encoder 200 as shown in FIG. 2) may perform inter prediction to determine and/or generate a reference block 1304 in a reference picture 1306. The reference block 1304 may be used to predict the current block 1300. Reference pictures (e.g., the reference picture 1306) may be prior decoded pictures available at the encoder and/or a decoder. Availability of a prior decoded picture may depend/be based on whether the prior decoded picture is available in a decoded picture buffer, at the time, the current block 1300 is being encoded and/or decoded. The encoder may search the one or more reference pictures 1306 for a block that is similar (or substantially similar) to the current block 1300. The encoder may determine the best matching block from the blocks tested during the searching process. The best matching block may be a reference block 1304. The encoder may determine that the reference block 1304 is the best matching reference block based on one or more cost criteria. The one or more cost criteria may comprise a rate-distortion criterion (e.g., Lagrangian rate-distortion cost). The one or more cost criteria may be based on a difference (e.g., SSD, SAD, and/or SATD) between prediction samples of the reference block 1304 and original samples of the current block 1300.

The encoder may search for the reference block 1304 within a reference region (e.g., a search range 1308). The reference region (e.g., a search range 1308) may be positioned around a collocated position (or block) 1310, of the current block 1300, in the reference picture 1306. The collocated block 1310 may have a same position in the reference picture 1306 as the current block 1300 in the current picture 1302. The reference region (e.g., a search range 1308) may at least partially extend outside of the reference picture 1306. Constant boundary extension may be used, for example, if the reference region (e.g., a search range 1308) extends outside of the reference picture 1306. The constant boundary extension may be used such that values of the samples in a row or a column of reference picture 1306, immediately adjacent to a portion of the reference region (e.g., a search range 1308) extending outside of the reference picture 1306, may be used for sample locations outside of the reference picture 1306. A subset of potential positions, or all potential positions, within the reference region (e.g., a search range 1308) may be searched for the reference block 1304. The encoder may utilize one or more search implementations to determine and/or generate the reference block 1304. For example, the encoder may determine a set of candidate search positions based on motion information of neighboring blocks (e.g., a motion vector 1312) to the current block 1300.

One or more reference pictures may be searched by the encoder during inter prediction to determine and/or generate the best matching reference block. The reference pictures searched by the encoder may be included in (e.g., added to) one or more reference picture lists. For example, in HEVC and VVC (and/or in one or more other communication protocols), two reference picture lists may be used (e.g., a reference picture list 0 and a reference picture list 1). A reference picture list may include one or more pictures. The reference picture 1306 of the reference block 1304 may be indicated by a reference index pointing into a reference picture list comprising the reference picture 1306.

FIG. 13B shows an example motion vector. A displacement between the reference block 1304 and the current block 1300 may be interpreted as an estimate of the motion between the reference block 1304 and the current block 1300 across their respective pictures. The displacement may be represented by a motion vector 1312. For example, the motion vector 1312 may be indicated by a horizontal component (MVx) and a vertical component (MVy) relative to the position of the current block 1300. A motion vector (e.g., the motion vector 1312) may have fractional or integer resolution. A motion vector with fractional resolution may point between two samples in a reference picture to provide a better estimation of the motion of the current block 1300. For example, a motion vector may have 1/2, 1/4, 1/8, 1/16, 1/32, or any other fractional sample resolution. Interpolation between the two samples at integer positions may be used to generate a reference block and its corresponding samples at fractional positions, for example, if a motion vector points to a non-integer sample value in the reference picture. The interpolation may be performed by a filter with two or more taps.

The encoder may determine a difference (e.g., a corresponding sample-by-sample difference) between the reference block 1304 and the current block 1300. The encoder may determine the difference between the reference block 1304 and the current block 1300, for example, based on/after the reference block 1304 is determined and/or generated, using inter prediction, for the current block 1300. The difference may be a prediction error and/or a residual. The encoder may store and/or send (e.g., signal), in/via a bitstream, the prediction error and/or related motion information.

The prediction error and/or the related motion information may be used for decoding (e.g., decoding the current block 1300) and/or other forms of consumption. The motion information may comprise the motion vector 1312 and/or a reference indicator/index. The reference indicator may indicate the reference picture 1306 in a reference picture list. The motion information may comprise an indication of the motion vector 1312 and/or an indication of the reference index. The reference index may indicate reference picture 1306 in the reference picture list. A decoder may decode the current block 1300 by determining and/or generating the reference block 1304. The decoder may determine and/or generate the reference block 1304, for example, based on the prediction error and/or the related motion information. The reference block 1304 may correspond to/form (e.g., be considered as) a prediction of the current block 1300. The decoder may decode the current block 1300 based on combining the prediction with the prediction error.

Inter prediction, as shown in FIG. 13A, may be performed using one reference picture 1306 as a source of a prediction for the current block 1300. Inter prediction based on a prediction of a current block using a single picture may be referred to as uni-prediction.

Inter prediction of a current block, using bi-prediction, may be based on two pictures. Bi-prediction may be useful, for example, if a video sequence comprises fast motion, camera panning, zooming, and/or scene changes. Bi-prediction may be useful to capture fade outs of one scene or fade outs from one scene to another, where two pictures may effectively be displayed simultaneously with different levels of intensity.

One or both of uni-prediction and bi-prediction may be available/used for performing inter prediction (e.g., at an encoder and/or at a decoder). Performing a specific type of inter prediction (e.g., uni-prediction and/or bi-prediction) may depend on a slice type of current block. For example, for P slices, only uni-prediction may be available/used for performing inter prediction. For B slices, either uni-prediction or bi-prediction may be available/used for performing inter prediction. An encoder may determine and/or generate a reference block, for predicting a current block, from a reference picture list 0, for example, if the encoder is using uni-prediction. An encoder may determine and/or generate a first reference block, for predicting a current block, from a reference picture list 0 and determine and/or generate a second reference block, for predicting the current block, from a reference picture list 1, for example, if the encoder is using bi-prediction.

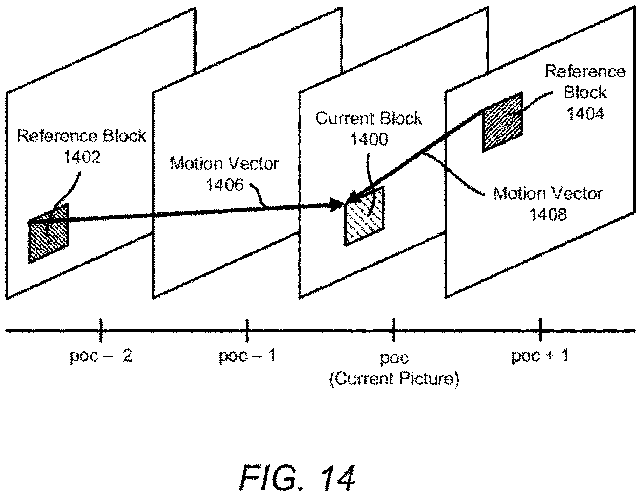

FIG. 14 shows an example of bi-prediction. Two reference blocks 1402 and 1404 may be used to predict a current block 1400. The reference block 1402 may be in a reference picture of one of reference picture list 0 or reference picture list 1. The reference block 1404 may be in a reference picture of another one of reference picture list 0 or reference picture list 1. As shown in FIG. 14, the reference block 1402 may be in a first picture that precedes (e.g., in time) a current picture of the current block 1400, and the reference block 1404 may be in a second picture that succeeds (e.g., in time) the current picture of the current block 1400. The first picture may precede the current picture in terms of a picture order count (POC). The second picture may succeed the current picture in terms of the POC. The reference pictures may both precede or both succeed the current picture in terms of POC. A POC may be/indicate an order in which pictures are output (e.g., from a decoded picture buffer). A POC may be/indicate an order in which pictures are generally intended to be displayed. Pictures that are output may not necessarily be displayed but may undergo different processing and/or consumption (e.g., transcoding). The two reference blocks determined and/or generated using/for bi-prediction may correspond to (e.g., be comprised in) a same reference picture. The reference picture may be included in both the reference picture list 0 and the reference picture list 1, for example, if the two reference blocks correspond to the same reference picture.

A configurable weight and/or offset value may be applied to one or more inter prediction reference blocks. An encoder may enable the use of weighted prediction using a flag in a picture parameter set (PPS). The encoder may send/signal the weight and/or offset parameters in a slice segment header for the current block 1400. Different weight and/or offset parameters may be sent/signaled for luma and/or chroma components.

The encoder may determine and/or generate the reference blocks 1402 and 1404 for the current block 1400 using inter prediction. The encoder may determine a difference between the current block 1400 and each of the reference blocks 1402 and 1404. The differences may be prediction errors or residuals. The encoder may store and/or send/signal, in/via a bitstream, the prediction errors and/or their respective related motion information. The prediction errors and their respective related motion information may be used for decoding and/or other forms of consumption. The motion information for the reference block 1402 may comprise a motion vector 1406 and/or a reference indicator/index. The reference indicator may indicate a reference picture, of the reference block 1402, in a reference picture list. The motion information for the reference block 1402 may comprise an indication of the motion vector 1406 and/or an indication of the reference index. The reference index may indicate the reference picture, of the reference block 1402, in the reference picture list.

The motion information for the reference block 1404 may comprise a motion vector 1408 and/or a reference index/indicator. The reference indicator may indicate a reference picture, of the reference block 1408, in a reference picture list. The motion information for the reference block 1404 may comprise an indication of motion vector 1408 and/or an indication of the reference index. The reference index may indicate the reference picture, of the reference block 1404, in the reference picture list.

A decoder may decode the current block 1400 by determining and/or generating the reference blocks 1402 and 1404. The decoder may determine and/or generate the reference blocks 1402 and 1404, for example, based on the prediction errors and/or the respective related motion information for the reference blocks 1402 and 1404. The reference blocks 1402 and 1404 may correspond to/form (e.g., be considered as) the predictions of the current block 1400. The decoder may decode the current block 1400 based on combining the predictions with the prediction errors.

Motion information may be predictively coded, for example, before being stored and/or sent/signaled in/via a bit stream (e.g., in HEVC, VVC, and/or other video coding standards/formats/protocols). The motion information for a current block may be predictively coded based on motion information of one or more blocks neighboring the current block. The motion information of the neighboring block(s) may often correlate with the motion information of the current block because the motion of an object represented in the current block is often the same as (or similar to) the motion of objects in the neighboring block(s). Motion information prediction techniques may comprise advanced motion vector prediction (AMVP) and/or inter prediction block merging.

An encoder (e.g., the encoder 200 as shown in FIG. 2), may code a motion vector. The encoder may code the motion vector (e.g., using AMVP) as a difference between a motion vector of a current block being coded and a motion vector predictor (MVP). An encoder may determine/select the MVP from a list of candidate MVPs. The candidate MVPs may be/correspond to previously decoded motion vectors of neighboring blocks in the current picture of the current block, and/or blocks at or near the collocated position of the current block in other reference pictures. The encoder and/or a decoder may generate and/or determine the list of candidate MVPs.

The encoder may determine/select an MVP from the list of candidate MVPs. The encoder may send/signal, in/via a bitstream, an indication of the selected MVP and/or a motion vector difference (MVD). The encoder may indicate the selected MVP in the bitstream using an index/indicator. The index may indicate the selected MVP in the list of candidate MVPs. The MVD may be determined/calculated based on a difference between the motion vector of the current block and the selected MVP. For example, for a motion vector that indicates a position (e.g., represented by a horizontal component (MVx) and a vertical component (MVy)) relative to a position of the current block being coded, the MVD may be represented by two components $MVD_x$ and $MVD_y$. $MVD_x$ and $MVD_y$ may be determined/calculated as:

$$MVD_x = MV_x - MVP_x, \qquad (15)$$

$$MVD_y = MV_y - MVP_y. \qquad (16)$$

MVDx and MVDy may respectively represent horizontal and vertical components of the MVD. MVPx and MVPy may respectively represent horizontal and vertical components of the MVP. A decoder (e.g., the decoder 300 as shown in FIG. 3) may decode the motion vector by adding the MVD to the MVP indicated in/via the bitstream. The decoder may decode the current block by determining and/or generating the reference block. The decoder may determine and/or generate the reference block, for example, based on the decoded motion vector. The reference block may correspond to/form (e.g., be considered as) the prediction of the current block. The decoder may decode the current block by combining the prediction with the prediction error.

The list of candidate MVPs (e.g., in HEVC, VVC, and/or one or more other communication protocols), for AMVP, may comprise two or more candidates (e.g., candidates A and B). Candidates A and B may comprise: up to two (or any other quantity of) spatial candidate MVPs determined/derived from five (or any other quantity of) spatial neighboring blocks of a current block being coded; one (or any other quantity of) temporal candidate MVP determined/derived from two (or any other quantity of) temporal, co-located blocks (e.g., if both of the two spatial candidate MVPs are not available or are identical); and/or zero motion vector candidate MVPs (e.g., if one or both of the spatial candidate MVPs or temporal candidate MVPs are not available). Other quantities of spatial candidate MVPs, spatial neighboring blocks, temporal candidate MVPs, and/or temporal, co-located blocks may be used for the list of candidate MVPs.

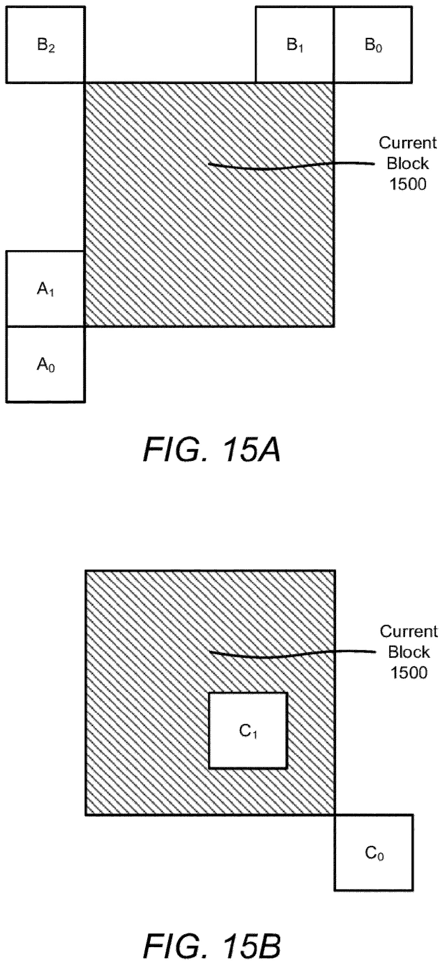

FIG. 15A shows spatial candidate neighboring blocks for a current block. For example, five (or any other quantity of) spatial candidate neighboring blocks may be located relative to a current block 1500 being encoded. The five spatial candidate neighboring blocks may be A0, A1, B0, B1, and B2. FIG. 15B shows temporal, co-located blocks for the current block. For example, two (or any other quantity of) temporal, co-located blocks may be located relative to the current block 1500. The two temporal, co-located blocks may be CO and C1. The two temporal, co-located blocks may be in one or more reference pictures that may be different from the current picture of the current block 1500.

An encoder (e.g., the encoder 200 as shown in FIG. 2) may code a motion vector using inter prediction block merging (e.g., a merge mode). The encoder (e.g., using merge mode) may reuse the same motion information of a neighboring block (e.g., one of neighboring blocks A0, A1, B0, B1, and B2) for inter prediction of a current block. The encoder (e.g., using merge mode) may reuse the same motion information of a temporal, co-located block (e.g., one of temporal, co-located blocks CO and C1) for inter prediction of a current block. An MVD need not be sent (e.g., indicated, signaled) for the current block because the same motion information as that of a neighboring block or a temporal, co-located block may be used for the current block (e.g., at the encoder and/or a decoder). A signaling overhead for sending/signaling the motion information of the current block may be reduced because the MVD need not be indicated for the current block. The encoder and/or the decoder may generate a candidate list of motion information from neighboring blocks or temporal, co-located blocks of the current block (e.g., in a manner similar to AMVP). The encoder may determine to use (e.g., inherit) motion information, of one neighboring block or one temporal, co-located block in the candidate list, for predicting motion information of the current block being coded. The encoder may signal/send, in/via a bit stream, an indication of the determined motion information from the candidate list. For example, the encoder may signal/send an indicator/index. The index may indicate the determined motion information in the list of candidate motion information. The encoder may signal/send the index to indicate the determined motion information.

A list of candidate motion information for merge mode (e.g., in HEVC, VVC, or any other coding formats/standards/protocols) may comprise: up to four (or any other quantity of) spatial merge candidates derived/determined from five (or any other quantity of) spatial neighboring blocks (e.g., as shown in FIG. 15A); one (or any other quantity of) temporal merge candidate derived from two (or any other quantity of) temporal, co-located blocks (e.g., as shown in FIG. 15B); and/or additional merge candidates comprising bi-predictive candidates and zero motion vector candidates. The spatial neighboring blocks and the temporal, co-located blocks used for merge mode may be the same as the spatial neighboring blocks and the temporal, co-located blocks used for AMVP.

Inter prediction may be performed in other ways and variants than those described herein. For example, motion information prediction techniques other than AMVP and merge mode may be used. While various examples herein correspond to inter prediction modes, such as used in HEVC and VVC, the methods, devices, and systems as described herein may be applied to/used for other inter prediction modes (e.g., as used for other video coding standards/formats such as VP8, VP9, AV1, etc.). History based motion vector prediction (HMVP), combined intra/inter prediction mode (CIIP), and/or merge mode with motion vector difference (MMVD) (e.g., as described in VVC) may be performed/used and are within the scope of the present disclosure.

Block matching may be used (e.g., in inter prediction) to determine a reference block in a different picture than that of a current block being encoded. Block matching may be used to determine a reference block in a same picture as that of a current block being encoded. The reference block, in a same picture as that of the current block, as determined using block matching may often not accurately predict the current block (e.g., for camera captured videos). Prediction accuracy for screen content videos may not be similarly impacted, for example, if a reference block in the same picture as that of the current block is used for encoding. Screen content videos may comprise, for example, computer generated text, graphics, animation, etc. Screen content videos may comprise (e.g., may often comprise) repeated patterns (e.g., repeated patterns of text and/or graphics) within the same picture. Using a reference block (e.g., as determined using block matching), in a same picture as that of a current block being encoded, may provide efficient compression for screen content videos.

A prediction technique may be used (e.g., in HEVC, VVC, and/or any other coding standards/formats/protocols) to exploit correlation between blocks of samples within a same picture (e.g., of screen content videos). The prediction technique may be intra block copy (IBC) or current picture referencing (CPR). An encoder may apply/use a block matching technique (e.g., similar to inter prediction) to determine a displacement vector (e.g., a block vector (BV)). The BV may indicate a relative position of a reference block (e.g., in accordance with intra block compensated prediction), that best matches the current block, from a position of the current block. For example, the relative position of the reference block may be a relative position of a top-left corner (or any other point/sample) of the reference block. The BV may indicate a relative displacement from the current block to the reference block that best matches the current block. The encoder may determine the best matching reference block from blocks tested during a searching process (e.g., in a manner similar to that used for inter prediction). The encoder may determine that a reference block is the best matching reference block based on one or more cost criteria. The one or more cost criteria may comprise a rate-distortion criterion (e.g., Lagrangian rate-distortion cost). The one or more cost criteria may be based on, for example, one or more differences (e.g., an SSD, an SAD, an SATD, and/or a difference determined based on a hash function) between the prediction samples of the reference block and the original samples of the current block. A reference block may correspond to/comprise prior decoded blocks of samples of the current picture. The reference block may comprise decoded blocks of samples of the current picture prior to being processed by in-loop filtering operations (e.g., deblocking and/or SAO filtering).

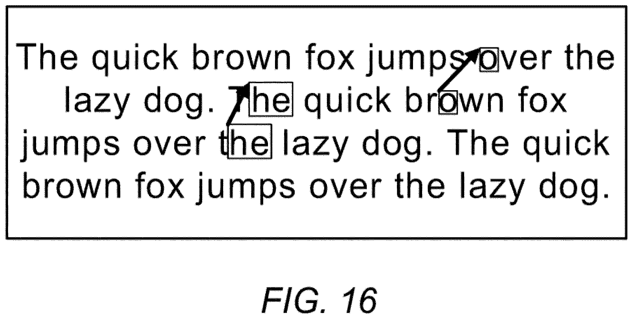

FIG. 16 shows an example of IBC for encoding. The example IBC shown in FIG. 16 may correspond to screen content. The rectangular portions/sections with arrows beginning at their boundaries may be the current blocks being encoded. The rectangular portions/sections that the arrows point to may be the reference blocks for predicting the current blocks.

A reference block may be determined and/or generated, for a current block, for IBC. The encoder may determine a difference (e.g., a corresponding sample-by-sample difference) between the reference block and the current block. The difference may be a prediction error or residual. The encoder may store and/or send/signal, in/via a bitstream the prediction error and/or related prediction information. The prediction error and/or the related prediction information may be used for decoding and/or other forms of consumption. The prediction information may comprise a BV. The prediction information may comprise an indication of the BV. A decoder (e.g., the decoder 300 as shown in FIG. 3), may decode the current block by determining and/or generating the reference block. The decoder may determine and/or generate the current block, for example, based on the prediction information (e.g., the BV). The reference block may correspond to/form (e.g., be considered as) the prediction of the current block. The decoder may decode the current block by combining the prediction with the prediction error.

A BV may be predictively coded (e.g., in HEVC, VVC, and/or any other coding standards/formats/protocols) before being stored and/or sent/signaled in/via a bit stream. The BV for a current block may be predictively coded based on a BV of one or more blocks neighboring the current block. For example, an encoder may predictively code a BV using the merge mode (e.g., in a manner similar to as described herein for inter prediction), AMVP (e.g., as described herein for inter prediction), or a technique similar to AMVP. The technique similar to AMVP may be BV prediction and difference coding (or AMVP for IBC).

An encoder (e.g., the encoder 200 as shown in FIG. 2) performing BV prediction and coding may code a BV as a difference between the BV of a current block being coded and a block vector predictor (BVP). An encoder may select/determine the BVP from a list of candidate BVPs. The candidate BVPs may comprise/correspond to previously decoded BVs of neighboring blocks in the current picture of the current block. The encoder and/or a decoder may generate or determine the list of candidate BVPs.

The encoder may send/signal, in/via a bitstream, an indication of the selected BVP and a block vector difference (BVD). The encoder may indicate the selected BVP in the bitstream using an index/indicator. The index may indicate the selected BVP in the list of candidate BVPs. The BVD may be determined/calculated based on a difference between a BV of the current block and the selected BVP. For example, for a BV that indicates a position (e.g., represented by a horizontal component (BVx) and a vertical component (BVy)) relative to a position of the current block being coded, the BVD may represented by two components $BVD_x$ and $BVD_y$. $BVD_x$ and $BVD_y$ may be determined/calculated as:

$$BVD_x = BV_x - BVP_x, \qquad (17)$$

$$BVD_y = BV_y - BVP_y. \qquad (18)$$

BVDx and BVDy may respectively represent horizontal and vertical components of the BVD BVPx and BVPy may respectively represent horizontal and vertical components of the BVP. A decoder (e.g., the decoder 300 as shown in FIG. 3), may decode the BV by adding the BVD to the BVP indicated in/via the bitstream. The decoder may decode the current block by determining and/or generating the reference block. The decoder may determine and/or generate the reference block, for example, based on the decoded BV. The reference block may correspond to/form (e.g., be considered as) the prediction of the current block. The decoder may decode the current block by combining the prediction with the prediction error.

A same BV as that of a neighboring block may be used for the current block and a BVD need not be separately signaled/sent for the current block, such as in the merge mode. A BVP (in the candidate BVPs), which may correspond to a decoded BV of the neighboring block, may itself be used as a BV for the current block. Not sending the BVD may reduce the signaling overhead.

A list of candidate BVPs (e.g., in HEVC, VVC, and/or any other coding standard/format/protocol) may comprise two (or more) candidates. The candidates may comprise candidates A and B. Candidates A and B may comprise: up to two (or any other quantity of) spatial candidate BVPs determined/derived from five (or any other quantity of) spatial neighboring blocks of a current block being encoded; and/or one or more of last two (or any other quantity of) coded BVs (e.g., if spatial neighboring candidates are not available). Spatial neighboring candidates may not be available, for example, if neighboring blocks are encoded using intra prediction or inter prediction. Locations of the spatial candidate neighboring blocks, relative to a current block, being encoded using IBC may be illustrated in a manner similar to spatial candidate neighboring blocks used for coding motion vectors in inter prediction (e.g., as shown in FIG. 15A). For example, five spatial candidate neighboring blocks for IBC may be respectively denoted AC, A1, B0, B1, and B2.

Referring back to FIG. 16, in an Intra Block Copy (IBC) mode used for screen content, a Reference Block (RB) may be determined as a "best matching" RB to a Current Block (CB). For example, the arrows in FIG. 16 may correspond to Block Vectors (BVs) that indicate respective displacements from respective Current Blocks (CBs) to respective Reference Blocks (RBs) that "best match" the respective CBs. The RBs may match the respective CBs, and the calculated residuals may be small, if not zero. Video content may be more efficiently encoded by considering symmetry properties. Symmetry may be often present in video content, especially in text character regions and computer-generated graphics in screen content video.

As an extension to Intra Block Copy (IBC) mode, a Reconstruction-Reordered Intra Block Copy (RRIBC) mode (e. g., also referred to as IBC mirror mode) may be for screen content video coding to take advantage of symmetry within video content to further improve the coding efficiency of IBC. The RRIBC mode may be adopted into the Enhanced Compression Model (ECM) software algorithm that is currently under coordinated exploration study by the Joint Video Exploration Team (JVET) of ITU-T Video Coding Experts Group (VCEG) and ISO/IEC MPEG as a potential enhanced video coding technology beyond the capabilities of VVC. A residual for the CB may be calculated based on samples of a Reference Block (RB) (e.g., samples corresponding to an original RB being encoded and decoded to form a reconstructed block) being flipped relative to the CB according to a flip direction indicated for the CB, for example, if the RRIBC mode is indicated for encoding a Current Block (CB). At the encoder side, the CB (to be predicted) may be flipped, for example, before matching and residual calculation, and the RB (used to predict the current block) may be derived without flipping. Similarly, at the decoder side, the CB (that was flipped at the encoder) may be determined based on the RB and residual information, and may be flipped back to restore the original orientation of the current block, for example, before being flipped at the encoder side. The RB may be flipped instead of the CB being flipped, such that the RB may be flipped to encode the CB (at the encoder) and may be flipped back (at the decoder) to restore the original orientation of the RB at the encoder. Throughout this detailed specification, reference to flipping the CB may alternatively refer to flipping the RB and not the CB such that the RB and the CB may be flipped in the flipping direction with respect to each other.

The flipping direction, in the RRIBC mode, may include one of a horizontal direction or a vertical direction for RRIBC coded blocks. A first indication (e.g., a first syntax flag; also referred to as a RRIBC type flag or an IBC mirror mode flag) for a Current Block (CB) coded in the RRIBC mode (e.g., an IBC Advanced Motion Vector Prediction (AMVP) coded block) may indicate/signal whether to use flipping to encode/decode the CB. A second indication (e.g., a second syntax flag; also referred to as a RRIBC direction flag or an IBC mirror mode direction flag) for the CB may indicate/signal the direction for flipping (e.g., a vertical or horizontal flipping direction). The flipping direction for IBC merge mode may be inherited from neighboring blocks, without syntax signaling. Flipping of a CB (or a Reference Block (RB) in an alternative embodiment) for RRIBC in a horizontal and a vertical direction can be represented in equations (19) and (20), respectively:

$$Reference(x, y) = Sample(w - 1 - x, y) \qquad (19)$$

$$Reference(x, y) = Sample(x, h - 1 - y) \qquad (20)$$

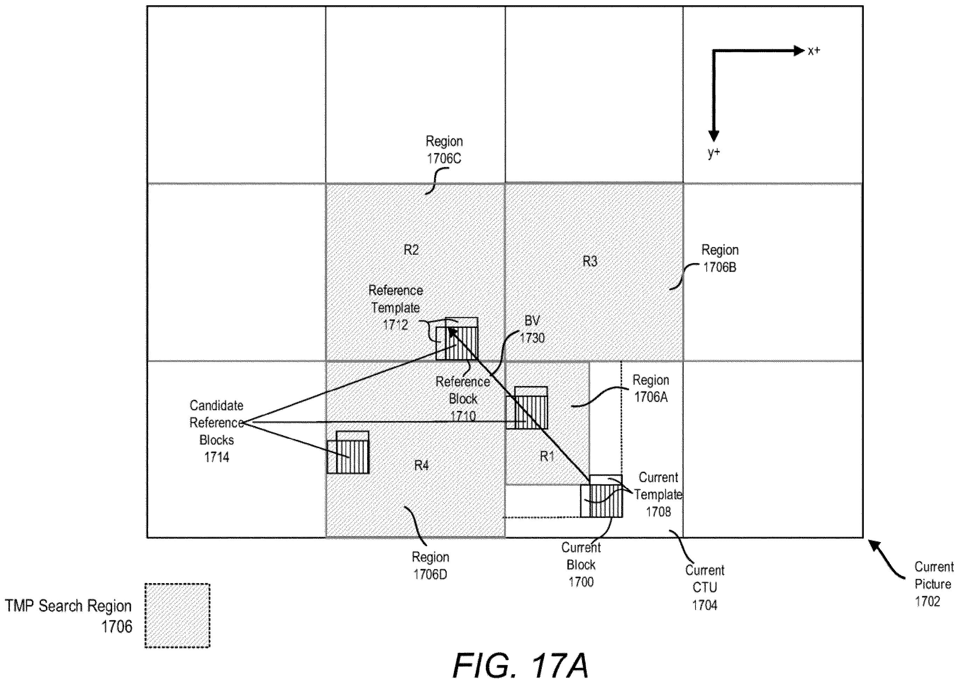

where w and *h* are the width and height of a CB, respectively. For example, Sample($x$, $y$) may indicate a sample value located in ($x$, $y$), and Reference($x$, $y$) may indicate a corresponding reference sample value, for example, after flipping. In other words, for horizontal flipping, (19) shows that the CB is flipped in the horizontal direction by sampling from right to left. Similarly, for vertical flipping, (20) shows that the CB is flipped in the vertical direction by sampling the CB from down to up. FIG. 17A shows an example of a template matching prediction (TMP) mode. More specifically, FIG. 17A shows an example of a template matching prediction (TMP) mode (also referred to as an Intra-TMP mode) for predicting or determining a current block (CB) 1700. CB 1700 may comprise a rectangular block of samples, in a picture or video frame of current picture 1702, to be encoded by the encoder or decoded by the decoder. To perform TMP to determine a reference block (RB) 1710 for CB 1700, a coder (e.g., the encoder or the decoder) may determine or construct a current template 1708 of CB 1700. The coder may determine or construct current template 1708 based on samples in a reconstructed region. Current template 1708 may comprise samples in the reconstructed region that are adjacent to the samples of CB 1700. Current template 1708 may comprise samples in the reconstructed region to the left and/or above CB 1700. Block vector (BV) 1730 may indicate a displacement from CB 1700 to the determined RB 1710.

The coder may search a TMP search region 1706 (also referred to as TMP reference region herein) for a reference template 1712 of a reference block (RB) (e.g., RB 1710) that is determined to "best match" current template 1708 of CB 1700, for example, after determining or constructing current template 1708 of CB 1700. The coder may determine a plurality of candidate templates corresponding to a plurality of respective candidate reference blocks (RBs) 1714, for example, from which reference template 1712 and reference block (RB) 1710 may be determined. The candidate templates of candidate reference blocks 1714 match current template 1708 in shape, orientation, and size (e.g., as shown in FIG. 17A).

The coder may search TMP search region 1706 for a candidate template of a candidate RB that best matches current template 1708. The coder may search TMP search region 1706 for a candidate template of a candidate RB that best matches current template 1708, for example, by determining a cost between current template 1708 and each of the candidate templates of candidate reference blocks 1714 in TMP search region 1706. The cost may be based on a difference (e.g., sum of squared differences (SSD), sum of absolute differences (SAD), sum of absolute transformed differences (SATD), or difference determined based on a hash function between a candidate template of a candidate RB and current template 1708. As shown for example in FIG. 17A, reference template 1712 of RB 1710 may be determined to best match current template 1708 (e.g., based on the cost between reference template 1712 and current template 1708). A Block Vector (BV) may indicate the displacement of an RB (e.g., RB 1710) relative to a CB (e.g., CB 1700).

The coder may use RB 1710 to code CB 1700, for example, after determining reference template 1712 of RB 1710. An encoder may determine a difference (e.g., a corresponding sample-by-sample difference) between CB 1700 and RB 1710. The difference may be referred to as a prediction error or residual. The encoder may store and/or signal in a bitstream the prediction error or residual for decoding by a decoder.

To perform TMP for determining CB 1700, a decoder may perform the same (or reciprocal) operations as the encoder as described herein with respect to FIG. 17A. The decoder may similarly determine or construct current template 1708 of CB 1700, for example, based on receiving an indication from the encoder that TMP is used to predict CB 1700 (e.g., via a flag). The decoder may similarly search TMP search region 1706 for a reference template of an RB that may be determined to "best match" current template 1708, for example, after determining or constructing current template 1708. The decoder may determine reference template 1712 of RB 1710, from candidate reference blocks 1714, as best matching current template 1708. The decoder may use RB 1710 (corresponding to reference template 1712) to determine CB 1700, for example, after determining reference template 1712 of RB 1710. The decoder may combine the residual received from the encoder with RB 1710 to reconstruct CB 1700. BV 1730 that indicates RB 1710 may not need to be indicated by the encoder to the decoder to enable the decoder to determine RB 1710.

TMP search region 1706 may comprise a portion of a reconstructed region of current picture 1702. TMP search region 1706 may indicate the regions that the encoder or decoder may search for candidate templates (such as candidate templates of candidate reference blocks 1714) to determine reference template 1712 and corresponding RB 1710. TMP search region 1706, may include region 1706A, region 1706B, region 1706C, and region 1706D. Relative to CB 1700, region 1706A (R1) may include a portion of the current CTU, region 1706C (R2) may be the top-left CTU, region 1706B (R3) may be the above CTU, and region 1706D (R4) may be the left CTU. The CTUs may be a result of picture partitioning operations described in more detail herein. An encoder or decoder may search for a matching template within TMP search region 1706. Reference template 1712 of RB 1710 may be determined to best match current template 1708 of CB 1700, for example, based on a SAD cost or some other cost as described herein. The decoder may use RB 1710 to predict CB 1700 as described herein.

The dimensions of TMP search region 1706 (referred to as SearchRange_w, SearchRange_h) may be set proportionally to the dimensions of CB 1700 (referred to as BlkW, BlkH) to have a fixed number of SAD comparisons (or other difference comparisons) per pixel. More specifically, the dimensions of TMP search region 1706 may be determined (e.g., calculated) as follows:

$$SearchRange\_w = a * BlkW \qquad (19)$$

$$SearchRange\_h = a * BlkH \qquad (20)$$

Where 'a' (or alpha) is a constant that controls a gain/complexity trade-off for the encoder or decoder. For example, 'a' may be equal to 5. The dimensions of TMP search region 1706 may be illustrated by example and not by limitation. The dimensions of the regions may vary, and/or one or more of the regions may not be present. Portions of reconstructed region directly above and directly left of CB 1700 may not be available for prediction or determination and may be excluded from TMP search region 1720, for example, as shown in FIG. 17A. This may be because an RB in these portions would overlap with CB 1700, which may be an invalid location for prediction or determination of CB 1700. A similar restriction may also be based on the unavailability of samples because of the sequence order of encoding or decoding, or because the samples may be outside of TMP search region or current picture 1702.

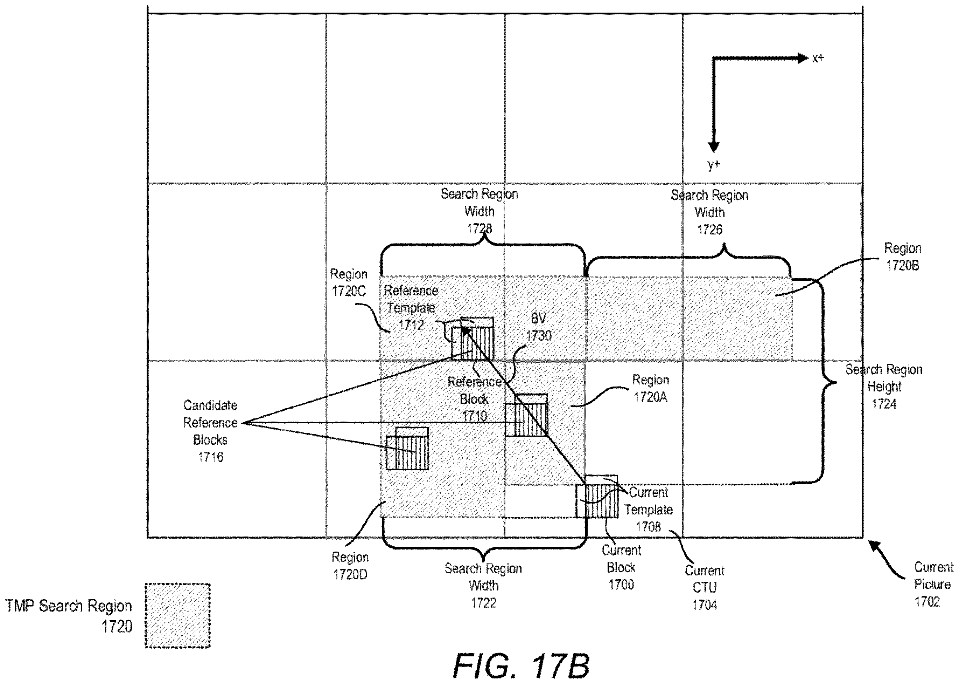

FIG. 17B shows an example of template matching prediction (TMP) mode. More specifically, FIG. 17B shows an example of a template matching prediction (TMP) mode for predicting or determining a current block (CB) 1700. In contrast to TMP search region 1706 in FIG. 17A, TMP search region 1720 may not necessarily encompass one or more CTUs, as described herein. The dimensions of TMP search region 1720 may be based on fixed multiples of the dimensions of CB 1700, as shown for example in equations (19) and (20). Search region height 1724 may correspond to (20) and each of search region width 1722, search region width 1726, and search region width 1728 may correspond to (19). TMP search region 1720 may include region 1720A (R1), region 1720B (R3), region 1720C (R2), and region 1720D (R4). One or more regions (or portions) of TMP search region 1720 may not encompass an entire CTU (e.g., region 1720D) and may be across multiple CTUs (e.g., region 1720B and region 1720C). As shown for example in FIG. 17B, the same reference template 1712 of RB 1710, from candidate RBs 1716, may have been determined as best matching current template 1708. Similarly, BV 1730 may indicate a displacement from CB 1700 to RB 1710.

Referring back to FIG. 16, in IBC mode used for screen content, a reference block (RB) may be determined as a "best matching" reference block to a current block. The arrows correspond to block vectors (BVs) that indicate respective displacements from respective current blocks (CBs) to respective reference blocks that best match the respective current blocks. In the examples shown in FIG. 16, the reference blocks match the respective current blocks and the calculated residuals would be small, if not zero. However, video content may be more efficiently encoded by considering symmetry properties. Symmetry may often be present in video content, especially in text character regions and computer generated graphics in screen content video.

A Reconstruction-Reordered intra block copy IBC (RRIBC) mode (e.g., also referred to as IBC-Mirror Mode) was introduced for screen content video coding to take advantage of symmetry within video content to further improve the coding efficiency of IBC. The RRIBC mode was adopted into the Enhanced Compression Model (ECM) software algorithm that is currently under coordinated exploration study by the Joint Video Exploration Team (JVET) of ITU-T Video Coding Experts Group (VCEG) and ISO/IEC MPEG as a potential enhanced video coding technology beyond the capabilities of VVC. The RRIBC mode may be signaled based on IBC mode with an indication (or flag) indicating whether flipping is used and if flipping is used, further signaling an indication (or flag) indication a direction of flipping.

A residual for the current block may be calculated based on samples of a reference block (e.g., corresponding to an original reference block being encoded and decoded to form a reconstructed block) being flipped relative to the current block according to a flip direction indicated for the current block, for example, if the RRIBC mode is indicated for encoding a current block. At the encoder side, the current block (to be predicted) may be flipped. The current block (to be predicted) may be flipped, for example, before matching and residual calculation, and the reference block (used to predict the current block) may be derived without flipping. Similarly, at the decoder side, the current block (that was flipped at the encoder) may be determined based on the reference block and residual information. The current block may be flipped back to restore the original orientation of the current block, for example, before being flipped at the encoder side. Instead of the current block being flipped, the reference block may be flipped instead such that the reference block is flipped to encode the current block (at the encoder) and flipped back (at the decoder) to restore the original orientation of the reference block at the encoder. As described herein, reference to flipping the current block may alternatively refer to flipping the reference block and not the current block such that the reference block and the current block are flipped in the direction with respect to each other.

In the RRIBC mode, the flip direction may include one of a horizontal direction or a vertical direction for RRIBC coded blocks. For a current block coded in the RRIBC mode (e.g., an IBC advanced motion vector prediction (AMVP) coded block), a first indication (e.g., a first syntax flag) may indicate/signal whether to use flipping (e.g., also referred to as mirror flipping) to encode/decode the current block. For the current block, a second indication (e.g., a second syntax flag) may indicate/signal the direction for flipping (e.g., vertical or horizontal). For IBC merge, the flip direction may be inherited from neighboring blocks, without syntax signaling. For RRIBC, flipping of a current block (or a reference block) in a horizontal and a vertical direction can be represented in (21) and (22), respectively:

$$\text{Reference}(\text{x}, \text{y}) = Sample(w - 1 - x, y) \tag{21}$$

$$\text{Reference}(\text{x}, \text{y}) = Sample(x, h - 1 - y) \tag{22}$$

where w and *h* are the width and height of a current block, respectively. Sample(x,y) may indicate a sample value located in (x,y). Reference(x,y) may indicate a corresponding reference sample value after flipping. In other words, for horizontal flipping, (21) shows that the current block is flipped in the horizontal direction by sampling from right to left. Similarly, for vertical flipping, (22) shows that the current block is flipped in the vertical direction by sampling the current block from down to up.

Considering the horizontal or vertical symmetry, the current block and the reference block are normally aligned horizontally or vertically, respectively. The reference block may be determined from a reference region (including candidate reference blocks) aligned in the same flipping direction, as will be further described herein. The reference block may be determined from a reference region (including candidate reference blocks) aligned in the same flipping direction, for example, based on the RRIBC mode and a flipping direction. The vertical component ($BV_y$) of the BV (indicating a displacement from the current block to the reference block) may not need to be signaled because it may be inferred to be equal to 0, for example, if flipping in a horizontal direction is applied/indicated. Similarly, the horizontal component ($BV_x$) of the BV may not need to be signaled because it may be inferred to be equal to 0, for example, if flipping in a vertical direction is applied/indicated. In other words, only one component, aligned with the direction for flipping, of the BV may be encoded and signaled for the current block.

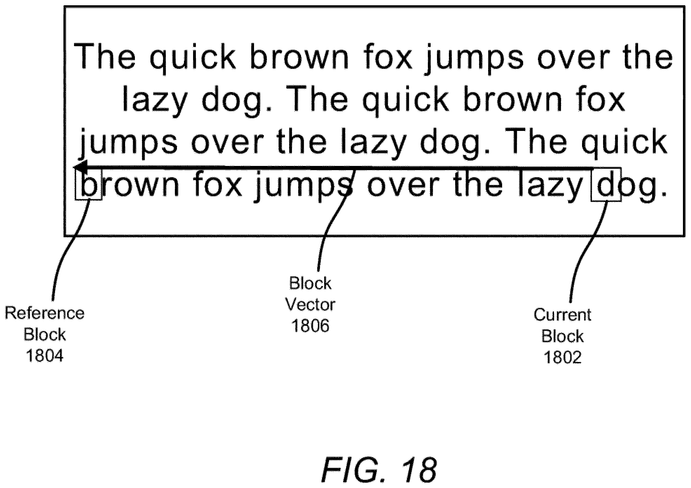

FIG. 18 shows an example of Reconstruction-Reordered intra block copy (RRIBC) applied for screen content. More specifically, FIG. 18 shows an example of RRIBC mode used for screen content to utilize symmetry within text regions to increase efficiency for coding video content. The encoder may determine, for example, that a reference block 1804, based on using horizontal flipping, is the best matching reference block for a current block 1802. The encoder may determine that a reference block 1804, based on using horizontal flipping, is the best matching reference block for a current block 1802 similar to an encoder as described herein in with respect to FIG. 16 (e.g., encoder 114 of FIG. 1). The encoder may select reference block 1804 as the "best matching" reference block, for example, based on one or more cost criterion, such as a rate-distortion criterion, as described herein. The one or more cost criterion may be applied to reference block 1804 that is flipped in the horizontal direction relative to current block 1802. Current block 1802 may be flipped, for example, before the one or more cost criterion are applied to determine reference block 1804. Note that for flipping in the horizontal direction, reference block 1804 is located in a reference region that is in horizontal alignment with current block 1802, as will be further described herein. A block vector (BV) 1806, indicating a displacement between current block 1802 and reference block 1804, may be represented as only a horizontal component ($BV_x$) of BV 1806 because due to the constraints on possible locations of reference blocks, the vertical component of BV 1806 will be equal to 0, for example, if horizontal flipping is indicated/applied.

A BV for the current block may be constrained to indicate a relative displacement from the current block to a reference block within an IBC reference region, for example, for a current block coded in IBC mode. A BVP used to predicatively code a BV may be similarly constrained. A BVP may be constrained because the BVP may be derived from a BV of a spatially neighboring block of the current block or a prior coded BV as explained herein. A BVD may be determined as a difference between the BV and the BVP, based on the BVP. This BVD may be encoded and sent (e.g., transmitted) along with an indication of the selected BVP in a bitstream to enable decoding of the current block, as described herein. With the introduction of RRIBC, a reference block (that is flipped in a direction relative to the current block) may be constrained to (i.e., selected from) an RRIBC reference region, corresponding to the direction, that is a subset or within the IBC reference region. Like in the IBC mode, the BVP may be used to predicatively code a BV, for a current block, indicating a relative displacement from the current block to a reference block within the reference region (e.g., RRIBC region). The reference region (e.g., an RRIBC reference region) can be determined that corresponds to the direction for flipping, for example, based on the RRIBC mode being indicated and based on a direction for flipping a reference block relative to a current block. The reference region indicates a region within a picture and/or frame from which the reference block may be selected (e.g., after flipping of the CB).

As described herein, a TMP mode may be applied to a current block to determine a reference block for coding a current block. Reference templates, corresponding to candidate reference blocks, may be searched that "best" matches a current template of the current block to determine the reference block for coding the current block. In this TMP mode, the reference templates match the current template in size, shape, and orientation. This TMP mode searches for the reference block that best predicts the current block and does not consider horizontal or vertical symmetry of content within a picture or video frame.

To take advantage of horizontal or vertical symmetry of content, the TMP mode can be enhanced by considering one or more other template types, for example, if searching for a reference block. The TMP mode may use candidate templates that are flipped in a direction with respect to the current template. These candidate templates may match the current template in shape and size, but not in orientation. These candidate templates may match the current template, for example, after flipping in the direction, in shape, size, and orientation. In contrast to the reference/search region in RRIBC mode, a TMP search region for TMP mode using flipped templates may be extended to search for candidate refence blocks that are not aligned in the same row or column as the current block. Since the TMP technique may have a smaller computation cost as compared to directly searching candidate reference blocks, extending the TMP search region may lead to increased compression, for example, by finding a reference block that better matches the current block, with a small increase in a processing cost and/or a complexity cost.

A BV may indicate a displacement from the current block to the determined reference block. This BV of the current block may be stored as being associated with the current block to enable the BV of the current block to be used to predictively code a next block, such as in an IBC merge mode or an IBC AMVP mode, as will be further described herein.

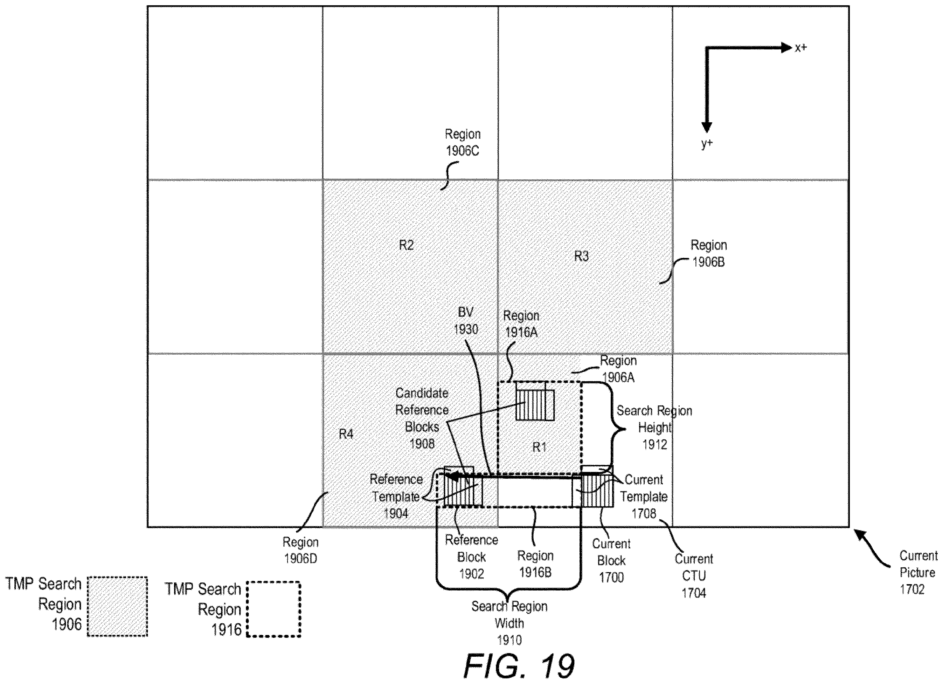

FIG. 19 shows an example of a TMP mode using candidate templates flipped in a horizontal direction. For ease of comparison, FIG. 19 shows a TMP search region 1906 including regions 1906A-1906D. TMP search region 1906 may be TMP search region 1706 or TMP search region 1720. The TMP mode (such as that shown in FIG. 17A) may be enhanced by including other types of candidate templates. Candidate templates of candidate RBs 1908 may be determined from TMP search region 1916 to determine TM costs, similarly as described with respect to candidate templates in TMP search region 1706, to determine a best matching candidate template as a reference template. Reference template 1904 of RB 1902 may be determined to best match current template 1708. Block vector (BV) 1930 may indicate the displacement from CB 1700 to reference block 1902 determined using the TMP mode using flipped candidate templates. Similar to a TMP mode (e.g., as shown in FIG. 17A and FIG. 17B), an encoder may signal the TMP mode using candidate templates flipped in the horizontal direction to enable the decoder to reciprocally perform TMP to determine reference block 1902 also determined by the encoder. BV 1930 may not need to be signaled to the decoder and increases compression efficiency of CB 1700.

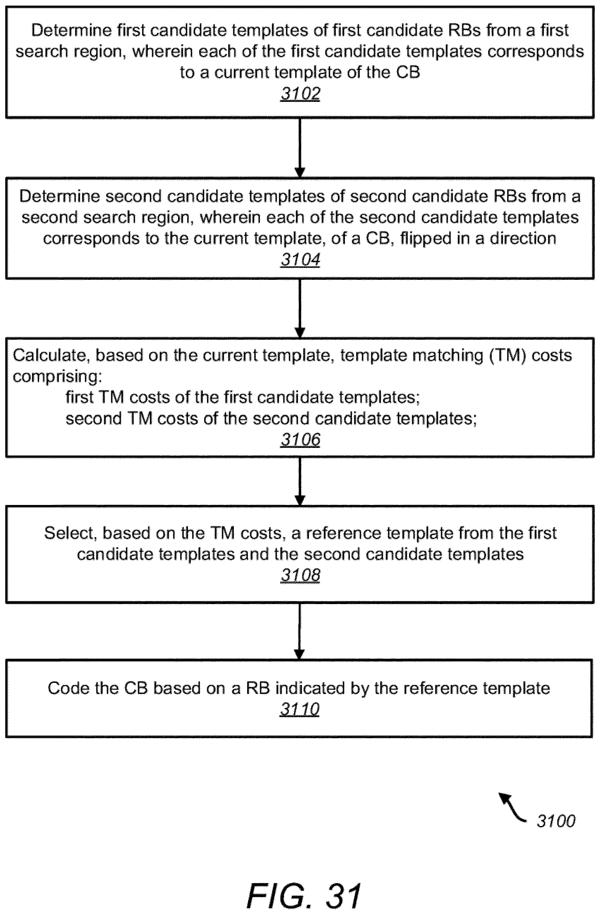

TMP search region 1916 may include region 1916A and region 1916B, as shown and further described herein with respect to FIG. 31, which may be based on search region width 1910 and search region height 1912. Candidate templates of candidate RBs 1908 may be flipped in a horizontal direction with respect to current template 1708. Search region width 1910 and search region height 1912 may be based on a fixed multiple of a width and a height of CB 1700, as described herein regarding equations (19) and (20). In contrast to the search regions for RRIBC for horizontal flipping, TMP search region 1916 may include search region 1916A that is not aligned with CB 1700 in the direction of flipping.

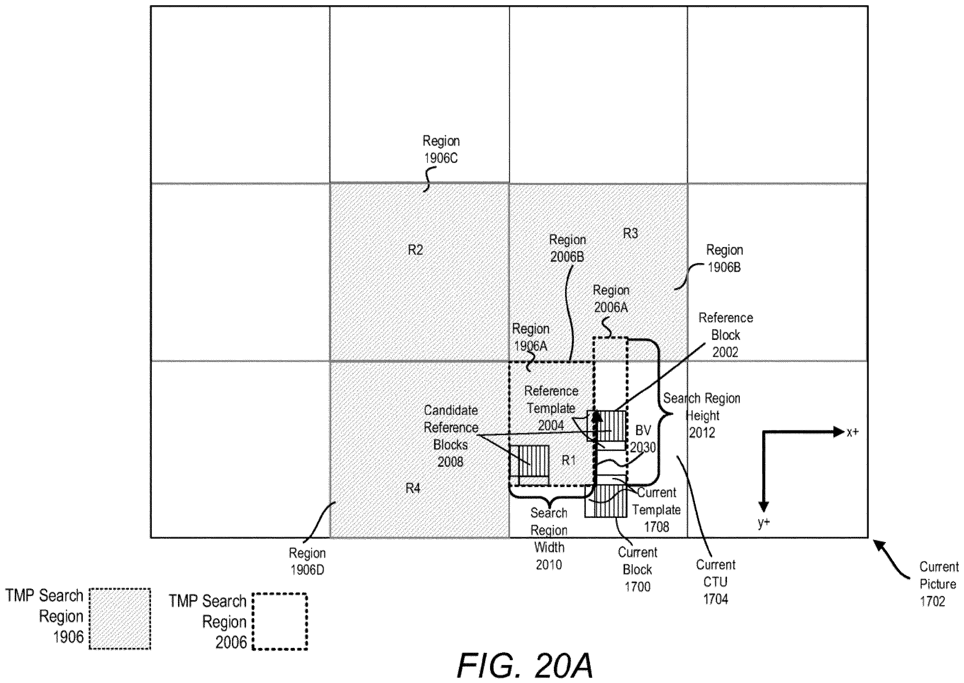

FIG. 20A shows an example a TMP mode using candidate templates flipped in a vertical direction. The TMP mode (such as that shown in FIG. 17A) may be enhanced by including other types of candidate templates. Candidate templates of candidate reference blocks (RBs) 2008 may be determined from TMP search region 2006 to determine TM costs, e.g., as described herein with respect to candidate templates in TMP search region 1706, to determine a best matching candidate template as a reference template. Reference template 2004 of RB 2002 may be determined to best match current template 1708. Block vector (BV) 2030 may indicate the displacement from CB 1700 to reference block 2002 determined using the TMP mode using flipped candidate templates. Similar to a TMP mode, e.g., as shown in FIG. 17A and FIG. 17B, an encoder may signal the TMP mode using candidate templates flipped in the vertical direction to enable the decoder to reciprocally perform TMP to determine reference block 2002 also determined by the encoder. BV 2030 may not need to be signaled to the decoder and increases compression efficiency of CB 1700.

TMP search region 2006 may include region 2006A and region 2006B, as shown and further described herein with respect to FIG. 31, which may be based on search region width 2010 and search region height 2012. Candidate templates of candidate RBs 2008 may be flipped in a vertical direction with respect to current template 1708. Search region width 2010 and search region height 2012 may be based on a fixed multiple of a width and a height of CB 1700, as described herein regarding equations (19) and (20). In contrast to the search regions for RRIBC for vertical flipping, TMP search region 2006 includes search region 2006A that is not aligned with CB 1700 in the direction of flipping.

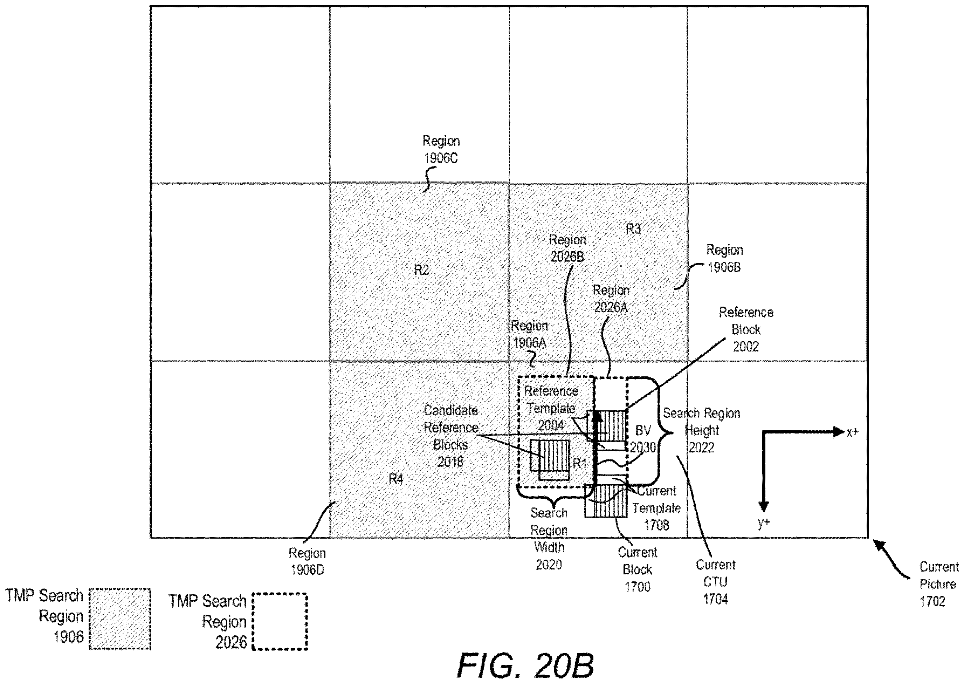

FIG. 20B shows an example of a TMP mode using candidate templates flipped in a vertical direction. FIG. 20B shows a TMP search region 2026 for candidate templates flipped in a vertical direction relative to current template 1708. The same reference template 2004 of RB 2002 may be determined as that in FIG. 20A. Compared to TMP search region 2006 as shown in FIG 20A, TMP search region 2026 shows that TMP search region 2026 includes region 2026A and region 2026B. Depending on search region width 2020 and search region height 2022, region 2006B may not necessarily intersect an upper boundary and/or a left boundary of current CTU 1704, as will be further described herein in FIG. 31. Similarly, depending on search region width 1910 and search region height 1912, the TMP search region 1916 in FIG. 19 may not necessarily intersect an upper boundary and/or a left boundary of current CTU 1704, as is further described herein with respect to FIG. 31.

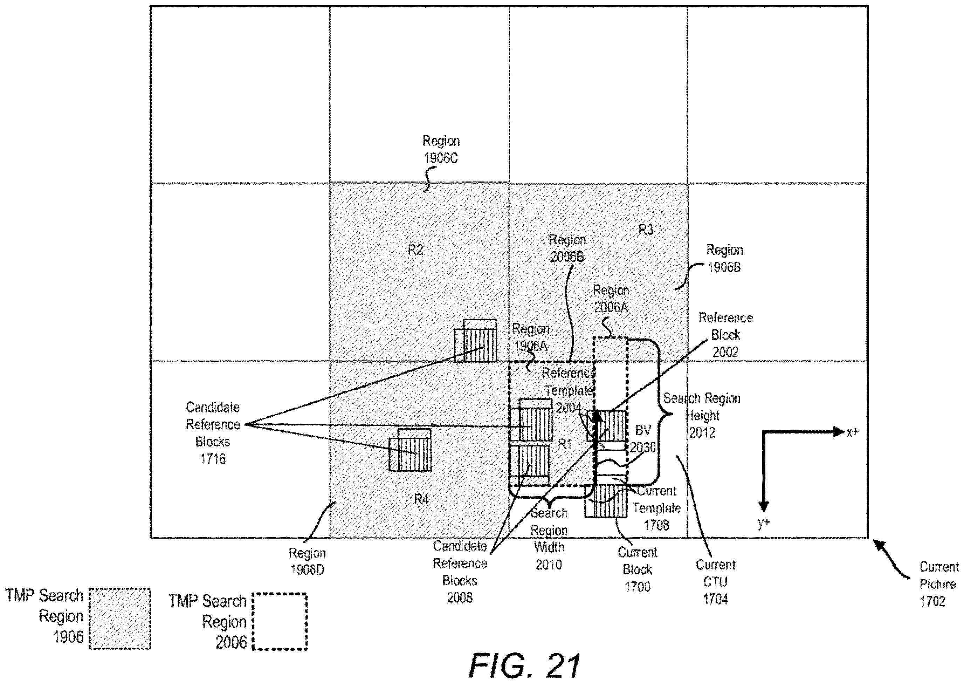

FIG. 21 shows an example of a TMP mode (also referred to as a TM mode or an Intra-TMP mode) using a plurality of types of candidate templates. More specifically, FIG. 21 shows that candidate templates of candidate RBs 1716, from TMP search region 1906, and candidate templates of candidate RBs 2008, from TMP search region 2006, may be determined to determine a best matching candidate template as a reference template (e.g., reference template 2004). FIG. 21 shows, for example, the types of candidate templates including candidate templates without flipping and candidate templates flipped in the vertical direction, as described herein with respect to FIG. 20A and FIG. 20B. Other types of candidate templates may be searched instead, such as candidate templates flipped in the horizontal direction, as described herein with respect to FIG. 19. A plurality of types of candidate templates may include candidate templates flipped in a horizontal direction and candidate templates flipped in a vertical direction.

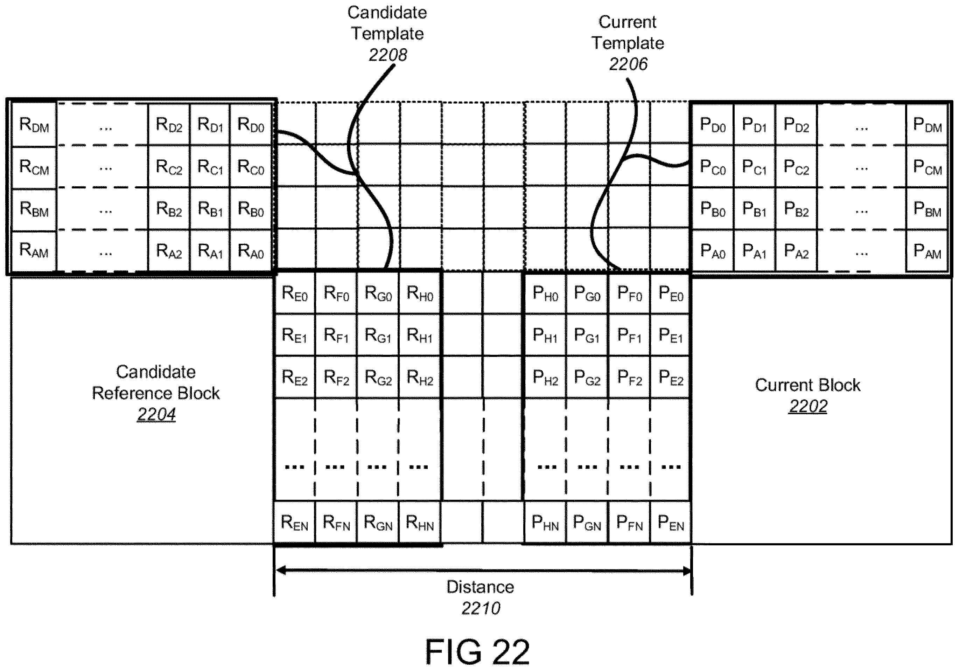

FIG. 22 shows an example of template matching for TMP. The shape of the current template may be defined relative to the current block. The shape of the current template may adjoin or surround the current block, but is not required to be located immediately adjacent to the current block. The shape may include a plurality of samples in a reconstructed portion of the picture and/or frame. The plurality of samples may include, for example a plurality of reference pixels that have been reconstructed (e.g., encoded and then decoded) and are distributed along at least one of two adjacent sides (e.g., a left side and an upper side) of the current block. The plurality of reference pixels of the current block may be referred to as first reference pixels that are close to the current block. A pixel close to the current block may refer to a distance between the pixel and a side of the current block that is closest to the pixel is less than a threshold. The distance between the pixel and the side of the coding block may be defined by a number or count of pixels between the pixel and the side of the current block. The threshold may be equal to 1, or 2, or 3, or 4, etc.

The current template may include a first portion and a second portion. The first portion may include a quantity (e.g., number) of rows of (neighboring reconstructed) samples above the current block. The second portion may include a quantity (e.g., number) of columns of (neighboring reconstructed) samples to the left of the current block. Other types of shapes are possible that include a set of reconstructed samples defined relative to the current block. A candidate template may be compared against the current template, for example, by comparing a pair of samples from the candidate template and the current template, respectively, where the pair of samples are iteratively in a mirrored manner depending on the direction of flipping.

A pair of samples for the second portion of the current template and a corresponding portion of the reference template is defined as $\{(x_c - 1 - j, y_c + i), (x_{ref} + W + j, y_{ref} + i)\}$, where $j \in [0, T_s)$, $i \in [0, H)$, for example, if the direction is horizontal flipping and for the current template with a size of the template $T_s$, position $(x_c, y_c)$ being the top-left corner of a current block of size $W \times H$ and position $(x_{ref}, y_{ref})$ being the top-left corner of a reference block. The size $T_s$ may be a width of the second portion. Samples in the first portion of the current template may be compared to samples in a corresponding portion of the candidate template. A pair of samples for the first portion of the current template and the corresponding portion of the reference template is defined as $\{(x_c + j, y_c - 1 - i), (x_{ref} + W - 1 - j, y_{ref} - 1 - i)\}$, where $j \in [0, W)$, $i \in [0, T_s)$. The size $T_s$ may be a height of the first portion.

A pair of samples for the second portion of the current template and a corresponding portion of the reference template is defined as $\{(x_c - 1 - j, y_c + i), (x_{ref} - 1 - j, y_{ref} + H - 1 - i)\}$, where $j \in [0, T_s)$, $i \in [0, H)$, for example, if the direction is vertical flipping and for the current template with a size of the template $T_s$, position $(x_c, y_c)$ being the top-left corner of a current block of size $W \times H$ and position $(x_{ref}, y_{ref})$ being the top-left corner of a reference block. The size $T_s$ may be a width of the second portion. Samples in the first portion of the current template may be similarly compared to samples in a corresponding portion of the candidate template. A pair of samples for the first portion of the current template and the corresponding portion of the reference template is defined as $\{(x_c + j, y_c - 1 - i), (x_{ref} + j, y_{ref} + H + i)\}$, where $j \in [0, W)$, $i \in [0, T_s)$. The size $T_s$ may be a height of the first portion.

FIG. 22 shows an example of template matching between a current template 2206, of a current block 2202, and a candidate template 2208 of a reference block (RB) candidate 2204A. Samples $P_{idx}$ of current template 2206 of a current block 2202 (to be predicted) and samples $R_{idx}$ of candidate template 2208 of a RB candidate 2204 are shown for the case of horizontal flipping (e.g., as shown in FIG. 22). To compare samples of these templates to calculate a matching/comparison cost, a difference between pairs of samples may be calculated as: $\Sigma|P_{idx} - R_{idx}|$, idx = {idx$_{HOR}$, idx$_{VER}$}; where idx$_{HOR}$ = {D$_{HOR}$, n}, D $\in$ {"A", "B", "C", "D"}, n $\in$ [0, cbWidth - 1]; and idx$_{VER}$ = {D$_{VER}$, m}, D E {"E", "F", "G", "H"}, m E [0, cbheight - 1]. How portions of current template 2206 and candidate template 2208 are to be compared may be based, for example, on a distance 2210 as shown in FIG. 22. The comparisons shown in FIG. 22 may be used, for example, if distance 2210 is greater or equal to twice the size of the left portion of current template 2206, e.g., 4.

Template matching prediction (TMP) is described herein, including in relation to FIGs. 17A-17B. As described herein, TMP involves identifying a reference block (RB), for example, based on the determination of a "best match" between a template of the reference block and a template of the current block (CB). Intra-TMP may be enabled in implementations for both camera-captured videos and screen contents. Intra-TMP uses the current template (template of the CB) to search for the most similar candidate reference template (template of a candidate RB) according to SAD (or other) cost, for example, with a predefined search range in the current picture. Intra-TMP uses the current template (template of the CB) to search for the most similar candidate reference template (template of a candidate RB) and determines its corresponding RB as the prediction block. Reconstructed-Reordered Template Matching Prediction (RRTMP), a technique described herein, for example, in relation to FIGs. 18-22, aims to achieve a better compression performance for current blocks that have a symmetric block in the reference region (search region). RRTMP extends the TMP technique by using a horizontal flipping or a vertical flipping to the candidate reference templates (or, alternatively, flipping the current template) to identify the "best match" candidate reference template, and using a flipped version of the reference block for the current block prediction.

The use of the most efficient transform for coding the residual (e.g., the residual block) is an important aspect in coding. Some techniques used for transform selection, such as the selection of the transform used for residual coding, rely on the reference block. A transform that is efficient for each reference block may be selected for coding the corresponding residual block by making the selection based on aspects of that reference block. Such transform selection techniques may yield incorrect and/or undesired results if they are not appropriately aware of whether the reference block has been flipped by RRTMP.

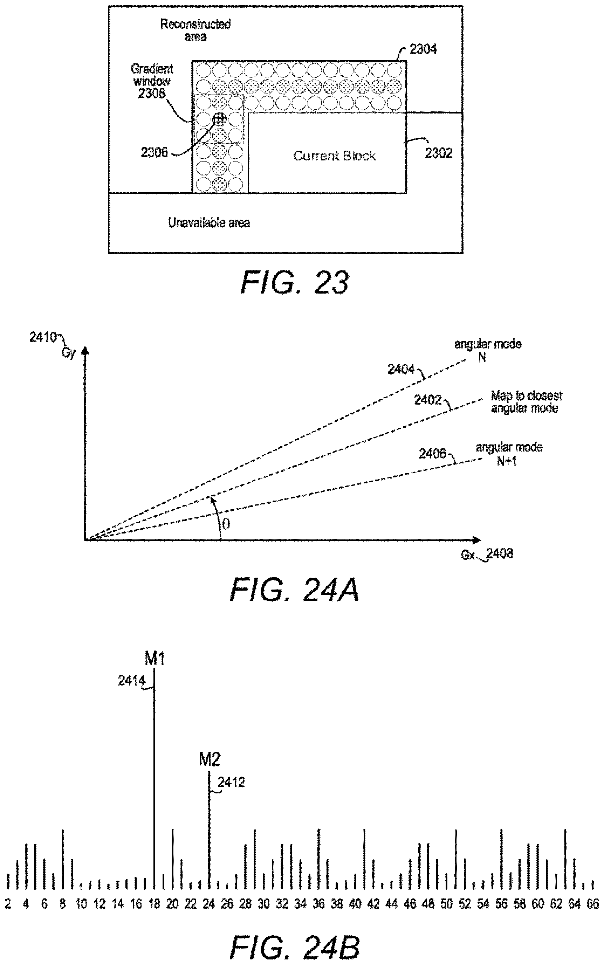

FIG. 23 shows an example gradient calculation. One intra-prediction mode, denoted DIMD (Decoder-side Intra Mode Derivation), may derive the angular intra-mode for the current block 2302 (see FIG. 23) by computing a HoG (Histogram of Gradient) on a template 2304 of the previously encoded neighboring samples. The gradient analysis may be performed by sample filtering using a 3x3 horizontal and vertical Sobel filter kernel (also referred to as "Sobel gradient template"):

$$M_x = \begin{bmatrix} -1 & 0 & 1 \\ -2 & 0 & 2 \\ -1 & 0 & 1 \end{bmatrix} \text{ and } M_y = \begin{bmatrix} -1 & -2 & -1 \\ 0 & 0 & 0 \\ 1 & 2 & 1 \end{bmatrix}$$

For each sample in the template, a point-by-point multiply may be performed with each of the two matrices herein with the 3x3 window centered around the current pixel and composed of its 8 direct neighbors and sum the result.

Two values, a horizontal gradient Gx (from the multiplication with Mx) and a vertical gradient Gy (from the multiplication with My), corresponding to the current sample may be obtained, in the horizontal and vertical direction respectively. An example gradient window 2308 shows the using of the filter kernel to sample 2306 in the template 2304 (e.g., as shown for example in FIG. 23). For each sample, an amplitude ($G$) and an angle ($\theta$) of the gradient may be calculated according as the equations:

$$G = |G_x| + |G_y| \quad \text{and} \quad \theta = \arctan\left(\frac{G_y}{G_x}\right)$$

The calculated angle may be quantized to a closest defined angle (e.g., angle of 10.6 degrees may be quantized to 11 degrees, etc.). FIG. 24A show an example of determining an intra-mode. More specifically, FIG. 24A shows an example of identifying a quantized gradient angle (e.g., one of N and N+1 representing, in one example, two of angular modes 2... 66 specified in VVC) based on a gradient angle 2402 calculated based on $G_x$ 2408 and $G_y$ 2410 as herein (or corresponding quantized angle thereof) for a sample. The quantized gradient angle (e.g., N 2404 in FIG. 24A is nearer than angular mode N+1 to gradient 2402) nearest to the gradient angle $\theta$ may be selected as the quantized gradient angle for the sample. Each quantized gradient angle corresponds to a respective angular intra-mode, and thus, the quantized gradient angle determined for the sample may correspond to the angular intra-mode selected for the sample. A range of quantized gradient angles may correspond to a respective angular intra-mode. The intra mode 0 (Planar) and 1 (DC) in VVC may not be angular modes in VVC, so the angular modes range from 2 to 66.

The histogram of gradients may be formed, for example, using the quantized gradient angles of the respective samples (e.g., samples in the template of the RB, the RB, the template of the CB etc.). The histogram of gradients may be formed, for example, by tallying the quantized gradients of all samples of the reference template for which the intra-mode is to be determined. The tallying may include, for each sample, incrementing the tally of the corresponding quantized gradient in the histogram by an amount G. FIG. 24B shows an example HoG, which may include a gradient angle of 18 corresponding to angular intra-mode M1 and a gradient angle of 24 corresponding to angular intra-mode M2. Gradient angle (or quantized gradient angle) of 18 corresponding to M1 2414 may have the largest amplitude. The angular intra-mode corresponding to quantized gradient angle having the highest amplitude in the HoG may be selected as the predicted angular intra-mode for the current block (e.g., angular intra-mode M1 in FIG. 24B). The angle with the highest amplitude in the HoG can be referred to as the dominant gradient of the samples. The samples may be from the template of the RB, the RB, or the template of the DB. The amplitude of respective gradient angles (or quantized gradient angles) in the HoG may represent the quantity (e.g., number) of samples having gradient values that correspond to the respective gradient angles and/or the sum of calculated G (see above equation) of such samples.

In VVC, Multi Transform Selection (MTS) is introduced. In addition to the conventional cosine transform (DCT-2), MTS add two new separable sine and cosine transforms (DST-7 and DCT-8), which can be used independently for horizontal and vertical transform in VVC, for both Inter and Intra mode. The transform kernels are shown in TABLE 1 herein.

TABLE 1

| Transform Type | Basic function $T_i(j)$, $j = 0, 1, ..., N - 1$ |
|---|---|
| DCT-2 | $T_i(j) = \omega_0 \cdot \sqrt{\frac{2}{N}} \cdot \cos\left(\frac{\pi \cdot i \cdot (2j+1)}{2N}\right)$ where $\omega_0 = \begin{cases} \sqrt{\frac{2}{N}} & i = 0 \\ 1 & i \neq 0 \end{cases}$ |
| DCT-8 | $T_i(j) = \sqrt{\frac{4}{2N+1}} \cdot \cos\left(\frac{\pi \cdot (2i+1) \cdot (2j+1)}{4N+1}\right)$ |
| DST-7 | $T_i(j) = \sqrt{\frac{4}{2N+1}} \cdot \sin\left(\frac{\pi \cdot (2i+1) \cdot (j+1)}{2N+1}\right)$ |

The specific transforms used for the vertical and horizontal transform may be signaled in the bitstream through flags. VVC, for example, specifies three flags (MTS_CU_Flag, MTS_Hor_Flag and MTS_Vert_Flag) in accordance with the combinations depicted in TABLE 2 herein.

TABLE 2

| MTS_CU_Flag | | | MTS_Hor_Flag | MTS_Ver_Flag | Horizontal Transform | Vertical Transform |
|---|---|---|---|---|---|---|
| 0 | | | NA | NA | DCT-2 | DCT-2 |
| 1 | 0 | 0 | DST-7 | DST-7 | | |
| 1 | 0 | 1 | DCT-8 | DST-7 | | |
| 1 | 1 | 0 | DST-7 | DCT-8 | | |
| 1 | 1 | 1 | DCT-8 | DCT-8 | | |

In addition to the MTS, considered primary transforms, VVC introduces a secondary transform only available for the intra-prediction residual, named Low-Frequency Non-Separable Transform (LFNST). The LFNST may be used, for example, if the DCT-2 transform was used as the primary transform. The LFNST may exploit the high correlation of the low-frequency coefficients obtained by the primary transform, for example, if applied to the residual block obtained by intra-prediction mode.

LFNST defines 8 different transforms for a transform size of 4x4 and 8 different transforms for a transform size of 8x8. The sixteen matrices may be precalculated on the encoder and decoder sides. The transform used for a block may be determined by two parameters, a first parameter (lfnstTrSetIdx) which depends on the intra-prediction mode, and a second parameter (lfnst_idx) which is sent (e.g., transmitted) in the bitstream.

The selection of MTS and LFNST for the intra-TMP encoded blocks may be adapted to select the type of primary and secondary transforms (MTS and LFNTS, respectively) according to the dominant angular intra-mode of the reference block (RB). This technique computes the gradient of each pixel of the reference block selected by TMP as the prediction block for the current block, rather than computing the histogram of gradients onto neighboring samples in the reference block's template (or the current block's template).

The technique which adapts the selection of MTS and LFNST for the intra-TMP encoded blocks to select the type of primary and secondary transforms according to the dominant angular intra-mode of the reference block may computes the intra-mode (e.g., DIMD above) on the reference block selected by template matching (based on TMP), for example, without considering whether the prediction block uses a flip mode or not. The dominant gradient achieved may not be the correct reference block's dominant gradient, for example, if RRTMP has been used to flip the reference block. The transform may not achieve the best coding performance, for example, if it is applied to the residual and RRTMP has been used to flip the reference block.

RRTMP, as described herein, provides better compression performance for current blocks that have a symmetric block in the reference region, for example, by extending the TMP technique to use a horizontal or vertical flipping of the templates. FIG 18 described herein shows an example of symmetric blocks.

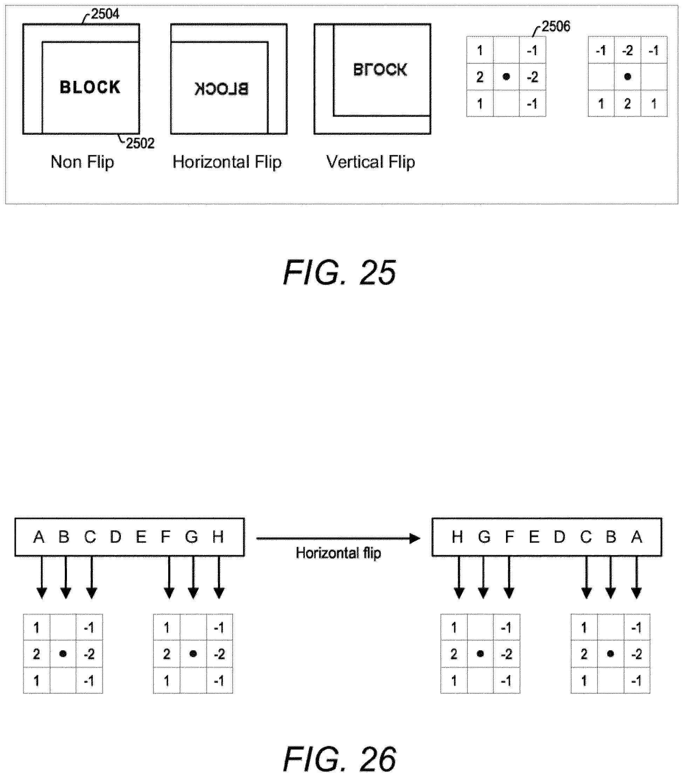

FIG. 25 shows a block and its template in different flip type modes, and an example filter kernel in different flip type modes. More specifically, FIG. 25 shows an example of the three flip types that can be applied to a block 2502 (e.g., reference block or current block) and its template 2504. The three illustrated flip modes include non-flip mode, horizontal flip mode, and vertical flip mode. The three illustrated flip modes correspond to flip modes provided by RRTMP ("RRTMP flip modes"). FIG. 25 also shows examples of a Sobel filter kernel 2506 in horizontal mode, and the same filter kernel in vertical mode. Sobel filter kernels $G_x$ and $G_y$ may be used by the DIMD technique, for example, to estimate the reference block's angular mode.

FIG. 26 shows an example application of the filter kernel shown in FIG. 25. More specifically, FIG. 26 shows an example problem that may occur, for example, if a reference block is flipped in the horizontal direction for a block with an 8 sample width (A to H). Since the filter kernels are not flipped in the same direction, he horizontal gradient (Gx) may be computed with the inverse sign. Consequently, the global gradient may be mirrored with respect to the vertical axis:

$$G_x(Non - Flip) = -G_x(H - Flip)$$

The same issue may occur, for example, if the vertical filter is applied on a reference block flipped in the vertical direction:

$$G_y(Non - Flip) = -G_y(V - Flip)$$

A technique, referred to herein as "RRTMP-MTS", provides for the reference block to be horizontal or vertical flipped according to the RRTMP flip mode, for example, before the dominant gradient of the reference block is calculated. The flipping of the reference block (if determined necessary based on the RRTMP flip mode), for example, before the dominant gradient is determined, enables obtaining the correct dominant gradient of the prediction block and consequently the selection of the optimal transform for the residual block.

Using RRTMP-MTS, for example, if the RRTMP is computed (e.g., if initially identifying the prediction block), the optimal RRTMP flip mode (e.g., mode with the lowest TM cost) may be registered as the reference block's flip mode. Subsequently, in the stage of determining the transform(s) for the residual block, for example, before the dominant gradient of the reference block is obtained by using the DIMD technique, the reference block may be flipped, or not, according to the reference block's flip mode that was registered. The reference block's flip mode may be the optimal flip mode obtained by the RRTM technique for the reference block.

The DIMD technique may compute the dominant gradient over the correct prediction block. The same results may be obtained, for example, by flipping the filter kernels (e.g., Sobel filter kernels) utilized in the same direction as the flip mode. Flipping of the filter kernel may be performed instead of flipping the reference block. For the horizontal flip mode, it may be sufficient to use a horizontal flipping to the horizontal filter kernel, and use the vertical flipping to the vertical filter kernel, for example, if the optimal RRTMP flip mode is the vertical flip mode.

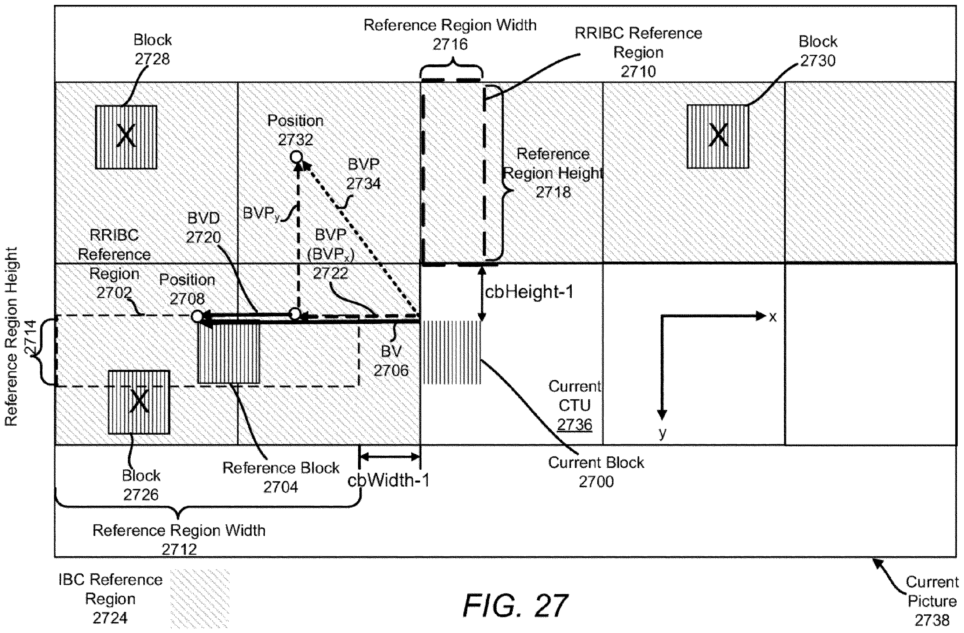

FIG. 27 shows an example RRIBC coding. FIG. 27 shows a current picture 2738 with an IBC reference region 2724. FIG. 27 shows a current block 2700 (e.g., within current CTU 2736) that is RRIBC coded.

The encoder may determine a reference region corresponding to a direction for flipping a reference block (e.g., relative to current block 2700), for example, based on use of an RRIBC mode. The encoder may determine the reference region corresponding to the direction for flipping, for example, based on the current block 2700 (e.g., to be coded in flipped mode/the RRIBC mode) and the direction for flipping the current block 2700 relative to the reference block (or vice versa). The reference region may be a rectangular reference region. The reference region may be in alignment with the direction for flipping.

The reference region for coding the current block 2700 may be determined as an RRIBC reference region 2702 that comprises as a rectangular region with a reference region width 2712 and a reference region height 2714, for example, based on the direction for flipping being a horizontal direction (e.g., relative to the current block 2700). The reference region width 2712 may be a difference between a left boundary (e.g., leftmost boundary) of an IBC reference region 2724 (e.g., which may have an x coordinate of 0) and a position that is offset to the left, from the current block (e.g., top left most sample of the current block 2700), by a width (cbWidth) or the width - 1 of the current block 2700. The reference region height 2714 may be the same as a height (cbHeight) of current block 2700. The RRIBC reference region 2702 (e.g., applicable for flipping in the horizontal direction) may comprise/correspond to: an upper boundary and a lower boundary that correspond to (e.g., are aligned to) an upper boundary and a lower boundary, respectively, of the current block 2700; a right boundary defined by an offset of cbWidth to a left boundary of current block 2700; and a left boundary that corresponds to a left boundary of the IBC reference region 2724.

The reference region for coding the current block 2700 may be determined as an RRIBC reference region 2710 that comprises a rectangular region with a reference region width 2716 and a reference region height 2718, for example, based on the direction for flipping being a vertical direction (e.g., relative to the current block 2700). The reference region width 2716 may be the same as a width (cbWidth) of the current block 2700. The reference region height 2718 may be a difference between a top boundary (e.g., top most boundary) of the IBC reference region 2724 (e.g., which may have a y coordinate of 0) and a position (e.g., above the current block 2700 that is offset), from the current block 2700 (e.g., top left most sample of the current block 2700), by a height (cbHeight) of the current block 2700. The RRIBC reference region 2710 (e.g., applicable for flipping in the vertical direction) may comprise/correspond to: a left boundary and a right boundary that correspond to (e.g., are aligned to) a left boundary and a right boundary of the current block, respectively, 2700; a lower boundary defined by an offset of cbHeight above an upper boundary of current block 2700; and an upper boundary that corresponds to a top boundary of the IBC reference region 2724. The RRIBC reference region 2710 may extend beyond one or more of the boundaries of IBC reference region 2724. For example, the upper boundary of RRIBC reference region 2710 may extend beyond the upper boundary of IBC reference region 2724 (e.g., an upper boundary of the current picture 2738).

An RRIBC reference region may be offset from the current block 2700 (e.g., a position of the top left sample of current block 2700) in an x direction (e.g., a horizontal direction) and/or in a y direction (e.g., a vertical direction). The RRIBC reference region 2702 may be indicated by an offset, from the current block 2700, of -cbWidth in the x direction and 0 in the y direction, for example, for flipping in a horizontal direction (e.g., horizonal flipping). The RRIBC reference region 2710 may be indicated by an offset, from the current block 2700, of 0 in the x direction and -cbHeight in the y direction. Other directions for flipping may be considered, for example, by defining the reference region as an offset in two directions (or based on an offset vector). Other flipping directions may be used beyond horizontal flipping and vertical flipping. For example, flipping may be defined by an angle relative to the current block 2700. For example, an offset having a same non-zero magnitude in the x direction and in the y direction may indicate flipping at a diagonal relative to the current block 2700.

The reference region (e.g., RRIBC reference region corresponding to flipping) may constrain/limit a location of a block from which a reference block may be determined. For horizontal flipping, some blocks (e.g., blocks 2726, 2728, and 2730, marked by an 'X' as shown in FIG. 27) may not be valid and may not be searched for determining a reference block for coding current block 2700. Again, the reference block may be flipped with respect to the current block 2700 (e.g., the current block 2700 may be flipped, for example, before determining the reference block). A reference block 2704 may be determined from within the RRIBC reference region 2702 (e.g., which may be a subset of the IBC reference region 2724). A reference block may be determined within the RRIBC reference region 2710 that corresponds to the vertical flipping direction, for example, based on the direction for flipping being vertical.

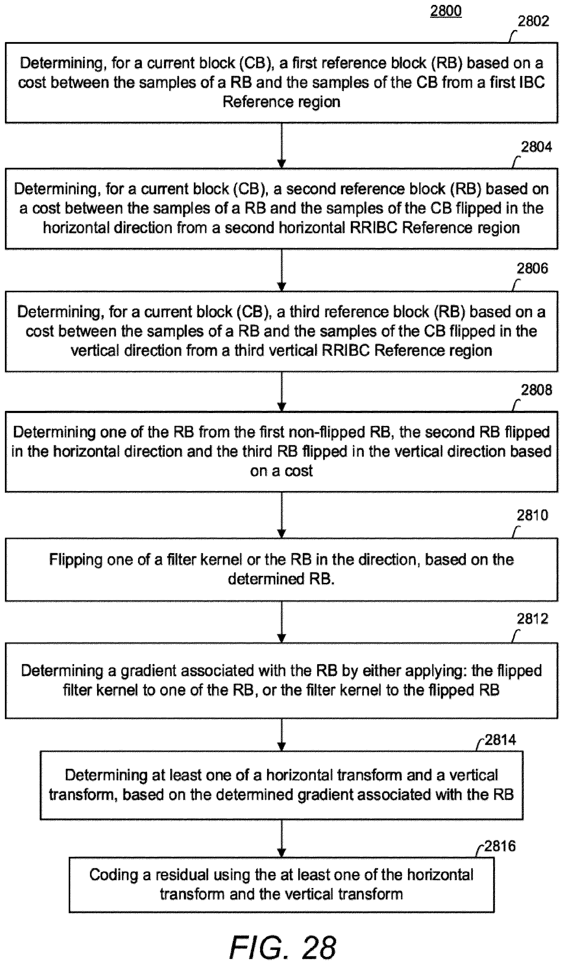

FIG. 28 shows an example method of transform selection in the context of RRIBC. The example method 2800 may be performed and/or implemented by an encoder (e.g., encoder 200 as described herein with respect to FIG. 2) or by a decoder (e.g., decoder 300 as described herein with respect to FIG. 3). At step 2802, a reference block (RB) may be determined for the current block (CB). The reference block may be determined, for example, based on a cost. The cost may be determined, for example, based on a difference (e.g., sum of absolute differences (SAD), or sum of absolute transformed differences (SATD)) between the samples of a reference block and the samples of the current block, from a first IBC reference region (e.g., IBC reference region 2724, as shown in FIG. 27).

At step 2804, a second reference block may be determined for the current block. The second reference block may be determined based on a cost. The cost may be determined, for example, based on a difference (e.g., sum of absolute differences (SAD), or sum of absolute transformed differences (SATD)) between the samples of a reference block and the samples of the current block flipped in the horizontal direction from a second horizontal RRIBC reference region (e.g., RRIBC reference region 2702, as shown in FIG. 27).

At step 2806, a third reference block may be determined for the current block. The third reference block may be determined based on a cost. The cost may be determined, for example, based on a difference (e.g., sum of absolute differences (SAD), or sum of absolute transformed differences (SATD)) between the samples of a reference block and the samples of the current block flipped in the vertical direction from a third vertical RRIBC reference region (e.g., RRIBC reference region 2710, as shown in FIG. 27).

At step 2808, a reference block may be determined from the first non-flipped reference block, the second reference block flipped in the horizontal direction, or the third reference block flipped in the vertical direction, based on a cost. The cost may be determined, for example, based on a difference (e.g., sum of absolute differences (SAD), or sum of absolute transformed differences (SATD)). At step 2810, a filter kernel or the reference block may be flipped. The filter kernel or the reference block may be flipped, for example, based on the direction of the determined reference block as described herein with respect to step 2808.

At step 2812, a gradient associated with the reference block may be determined. The gradient associated with the reference block may be determined, for example, by either applying the flipped filter kernel to the reference block, or by applying the filter kernel to the flipped reference block. At step 2814, a horizontal transform and/or a vertical transform may be determined. The horizontal transform and/or a vertical transform may be determined, for example, based on the determined gradient associated with the reference block. At step 2816, a residual may be coded based on at least one of the horizontal and/or vertical transform.

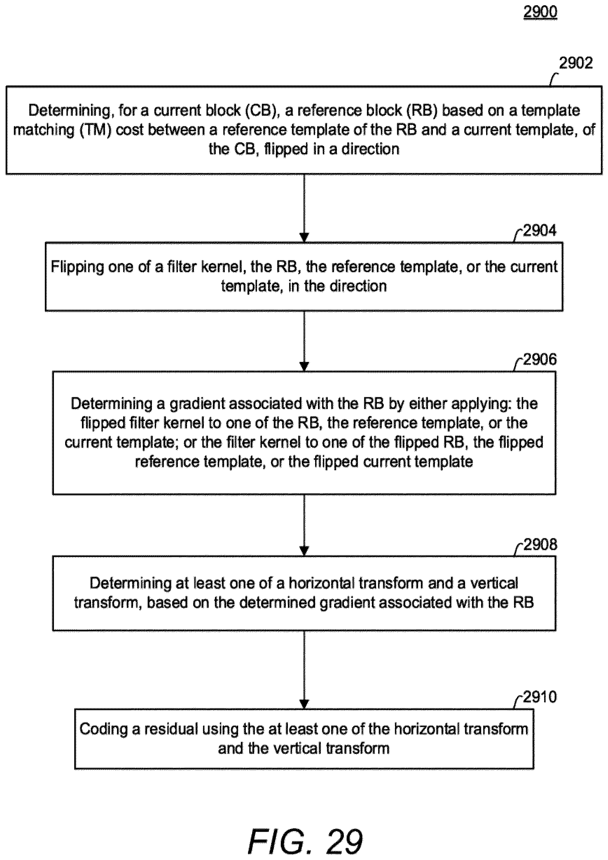

FIG. 29 shows an example method of transform selection for RRTMP. More specifically, FIG. 29 shows a flowchart of an example method 2900 for transform selection using a RRTMP-MTS technique. The example method 2900 may be performed and/or implemented by an encoder (e.g., encoder 200 as described herein with respect to FIG. 2) or by a decoder (e.g., decoder 300 as described herein with respect to FIG. 3).

At step 2902, a reference block (RB) may be determined for the current block (CB). The reference block may be determined, for example, based on the template matching (TM) cost between the template of the reference block (e.g., the reference template) and the template of the current block (e.g., the current template) flipped in a direction (e.g., a horizontal direction or a vertical direction). Template matching for identifying the reference block is described herein, for example with respect to TMP and RRTMP techniques. Further description of determining the RB can be found herein, for example, with respect to FIG. 31.

The operations described herein with respect to steps 2904-2910 may be performed, for example, based on (e.g., in response to) the determining of the reference block corresponding to a reference template that is flipped in the horizontal or vertical direction with respect to the current template. The RRTMP-MTS operations herein may not be used, for example, if the reference template is not flipped in relation to the current template.

At step 2904, one of a filter kernel, the RB, the reference template, or the current template, may be flipped in the horizontal direction or the vertical direction based on the template matching described with respect to step 2902. A Sobel filter kernel may be used. Sobel filter kernels and its application are described herein, for example, with respect to FIGs, 23 and 25-26. Examples described herein are not limited to using Sobel filter kernels, and may use one or more other filter kernel types.

At step 2906, a dominant gradient associated with the reference block and/or the angular intra-mode may be determined. T dominant gradient may be determined, for example, by either: using (e.g., applying) the flipped filter kernel to one of the RB, the reference template, or the current template; or by using (e.g., applying) the filter kernel to one of the flipped RB, the flipped reference template, or the flipped current template. Flipping the filter kernel instead of the corresponding template may have the same effect with respect to the flipping. Horizontal and vertical versions of an example Sobel filter kernels are shown, for example, in FIGs. 23 and 25. An example application of the filter to determine a gradient also provided, for example, in with respect to FIG. 23. Determining a gradient (or dominant gradient) and/or an angular intra-mode for a block can be performed as described herein, for example, with respect to FIGs. 23-24.

At step 2908, at least one of a horizontal transform and a vertical transform may be determined. The at least one of a horizontal transform and a vertical transform may be determined, for example, based on the determined gradient or angular intra-mode. The horizontal transform and/or the vertical transform may be determined by accessing a lookup table, such as TABLE 2 herein, using the gradient angle. The lookup table may specify a respective combination of transforms for the horizontal transform and the vertical transform, where each transform is one of the transforms shown in TABLE 1 herein. Examples described herein are not limited to the types of transforms in TABLE 1. The horizontal transform and/or the vertical transform may be determined, for example, by accessing a lookup table using the determined angular intra-mode. Each row in the lookup table in TABLE 2 may be indexed to a range of the gradient angle values or to a respective angular intra-mode. The lookup table may be accessed, for example, based on a range of gradient values (or gradient angles). The horizontal transform and the vertical transform may be different from each other. The horizontal transform and the vertical transform may be the same transform.

At step 2910, a residual is coded using at least one of the horizontal transform and the vertical transform. Both the horizontal transform and the vertical transform may be obtained using the gradient angle. The residual may be coded using the horizontal transform and the vertical transform obtained using the gradient angle.

In addition to the primary transform (e.g., MTS selected transform), a secondary transform (e.g., LFNST) may be used in coding the residual. A secondary transform may also be determined, for example, based on the determined angular intra-mode and in addition to the determined horizontal and vertical transforms. The coding of the residual may be performed using the horizontal transform, the vertical transform, and the secondary transform.

The coding of the residual using at least one of the horizontal transform and the vertical transform at an encoder (e.g., encoder 200 in FIG. 2) may include encoding the residual (e.g., the residual block) using the at least one of the horizontal transform and the vertical transform, and sending (e.g., transmitting), in a bitstream, the encoded residual and an indication of the current block being encoded in a template matching prediction (TMP) mode that uses candidate templates that are flipped in the direction relative to the current template.

The coding of the residual using the at least one of the horizontal transform and the vertical transform at an encoder (e.g., encoder 200 in FIG. 2) may include generating transform coefficients by using the at least one of the horizontal transform and the vertical transform to the residual, and sending (e.g., transmitting), in a bitstream, the encoded residual and an indication of the current block being encoded in a template matching prediction (TMP) mode that uses candidate templates that are flipped in the direction relative to the current template.

A decoder (e.g., decoder 300 in FIG. 3) may receive the residual from a bitstream, and the coding the residual (e.g., residual block) using the at least one of the horizontal transform and the vertical transform at that decoder, for example as described herein with respect to step 2910, may include decoding the residual using the at least one of the horizontal transform and the vertical transform, determining a reconstructed block based on combining the RB with the decoded residual, and determining whether to flip the reconstructed block in the direction based on whether the reference template related to the reference block is flipped in the direction in relation to the current template, and decoding the current block based on whether to flip the reconstructed block in the direction. The decoder may receive, in a bitstream, an indication of the current block being encoded in a template matching prediction (TMP) mode that uses candidate templates that are flipped in the direction relative to the current template.

The reference block may be flipped, for example, based on the determining of the reference block corresponding to a reference template that is flipped in the horizontal or vertical direction with respect to the current template (e.g., at block 2902). The angular intra-mode may be determined, for example, by using (e.g., applying) the filter kernel to the flipped reference block. A dominant gradient of the reference may be determined (e.g., calculated), for example, based on the using the filter kernel to the flipped reference block, and the angular intra-mode may be selected in accordance with at least the dominant gradient.

A template matching may be performed using RRTMP to determine the reference block, for example, before the determining of the reference block at step 2902. The template matching may include determining the TM costs for first candidate templates of first candidate reference blocks, the first candidate templates each corresponding to a current template of the current block, and for second candidate templates of second candidate reference blocks, wherein the second candidate templates each corresponds to the current template flipped in a direction. A first reference template may be selected from the first candidate templates and the second candidate templates, for example, based on the TM costs. The first reference template may correspond to the current template flipped in a direction, and may indicate the determined reference block as described herein with respect to step 2902. A method such as the example method 3100 may be used at or before step 2902.

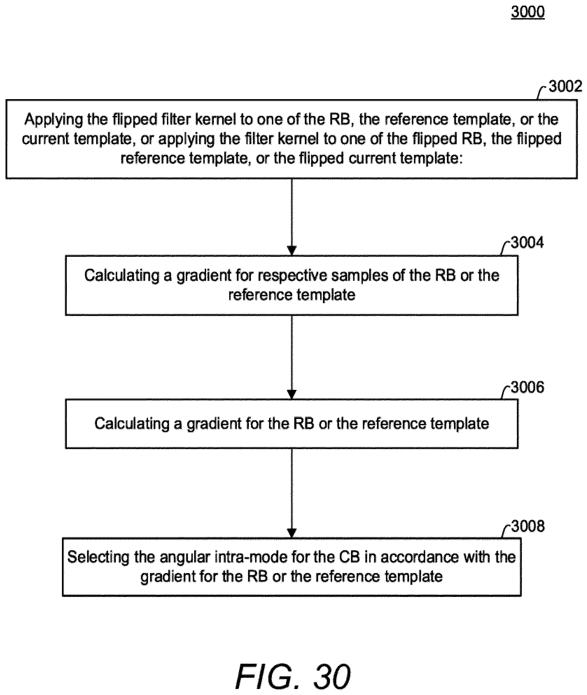

FIG. 30 shows an example method of transform selection for RRTMP. More specifically, FIG. 30 shows a flowchart of an example method 3000 for selecting the angular intra-mode for a block. The example method 3000 may be performed and/or implemented by an encoder (e.g., encoder 200 as described herein with respect to FIG. 2) or by a decoder (e.g., decoder 300 as described herein with respect to FIG. 3). The example method 3000 may be used, for example, at step 2906 to determine the angular intra-mode.

At step 3002, the flipped filter kernel may be applied to one of the reference block, the reference template, or the current template. Alternatively, at step 3002, the filter kernel may be applied to one of the flipped reference block, the flipped reference template, or the flipped current template.

At step 3004, a gradient of either the reference block or the reference template may be determined (e.g., calculated). Determining gradients for respective samples of the reference block, the reference template, or the current template (or flipped version thereof) may be performed in a manner as described herein, for example, with respect to FIGs. 23-24. As described herein with respect to FIGs. 23-24, for each sample, or for each of a plurality of samples, in the reference block, the reference template, or the current template (or flipped version thereof), an amplitude and an angle of the gradient may be calculated.

At step 3006, a gradient for the reference block, the reference template, or the current template (or flipped version thereof) may be determined (e.g., calculated). The gradient for the block may be determined, for example, based on the gradients calculated for the respective samples at step 3004. The gradient for block or template may be determined (e.g., calculated) as described herein with respect to FIGs. 23-24. The quantized gradient having the most corresponding respective samples in the block may be selected as the gradient for the block. The quantized gradient with the highest amplitude may be selected. Determination (e.g., calculation) of the gradient angle and the amplitude for respective samples or for a block or template is described herein, for example, with respect to the DIMD technique and FIGs. 23-24.

At step 3008, the angular intra-mode may be selected. The angular intra-mode may be selected, for example, in accordance with the gradient angle and the gradient magnitude. An example selection is described herein with respect to FIGs. 24A-24B. Each of angular intra-modes 2-66 may correspond to a respective quantized gradient, and the angular intra-mode that maps to the quantized gradient with the highest amplitude may be selected.

Examples described herein are not limited to use the gradient angle and amplitude for the selection at block 3008. The selection of the angular intra-mode may be based on the gradient angle and may either not use the gradient amplitude in the determination of the angular intra-mode or may use an amplitude other than the largest amplitude. Step 3006 may be adapted to determine the amplitude.

A method, as described herein, may comprise determining, for a current block (CB), a reference block (RB) based on a template matching (TM) cost between a reference template of the RB and a current template, of the CB, flipped in a direction. One of a filter kernel or the RB may be flipped in the direction (vertical or horizontal), for example, based on (e.g., in response to) determining the RB. The angular intra-mode may be determined by either: using (e.g., applying) the flipped filter kernel to the RB; or by using (e.g., applying) the filter kernel to the flipped RB. The method may also include, based on the determined angular intra-mode, determining at least one of a horizontal transform and a vertical transform; and coding a residual (e.g., a residual block) using the at least one of the horizontal transform and the vertical transform.

A transform for a reference block may be determined using RRTMP-MTS, for example, by identifying the reference block that is determined by a template matching (e.g., RRTMP). The corresponding block vector may be obtained.

A pointer can be obtained to the decoded pixels buffer where the reference block is located. The decoded pixels of the reference block may be copied to a local buffer. The DIMD may be determined (e.g., calculated) on the local buffer containing the reference block to obtain the optimal intra mode for the reference block. The obtained intra-mode may be recorded to select the optimal transform.

The horizontal or vertical flipping of the reference block samples may be performed according to the flip mode determined in the RRTMP as the optimal flip mode. The operations of storing the optimal flip mode for the RRTMP in a variable, and subsequently, before determining the optimal intra-mode of the reference block is started, flipping the reference block according to the optimal flip mode determined for the RRTMP (and which was saved in a variable as noted) may be included. The DIMD technique may determine (e.g., compute) the dominant gradient of the reference block and derive the optimal intra-mode for the reference block.

FIG. 31. shows an example method of using template matching prediction (TMP) with multiple template types. More specifically, FIG. 31 shows a flowchart of an example method 3100 for using template matching prediction (TMP) with multiple template types to code (e.g., encode or decoded) a current block (CB). The CB may be coded in a TMP mode using at least two template types. The CB may be coded in a TMP mode that uses candidate templates that are flipped in a direction relative to a current template of the CB, as further described herein. Method 3100 may be performed and/or implemented by a coder such as an encoder (e.g., encoder 200 in FIG. 2) or a decoder (e.g., decoder 300 in FIG. 3). In other words, method 3100 as shown in FIG. 31 may include reciprocal operations that both the encoder and the decoder may perform to respectively encode and then decode the CB, as further described herein. Steps (e.g., blocks) of the example method of FIG. 31 may be omitted, performed in other orders, and/or otherwise modified, and/or one or more additional steps may be added .

At step 3102, first candidate templates of first candidate reference blocks (RBs), from a first search region (which may alternatively be referred to as a first reference region), may be determined. Each of the first candidate templates may correspond to a current template, of a CB, flipped in a direction.

The current template may be defined relative to the CB. The current template may include a set of reconstructed samples neighboring the CB such as reconstructed pixels. The current template may have an "L" shape. The current template may include: a first portion comprising a quantity (e.g., number) of rows (e.g., 1, 2, 4, etc.) of samples above the CB, and a second portion comprising a quantity (e.g., number) of columns (e.g., 1, 2, 4, etc.) of samples to the left of the CB. The first portion may be adjacent to the top side of the CB and the second portion may be adjacent to the left side of the CB. The rows match the CB in width and the columns match the CB in height.

The first candidate templates may be defined relative to the respective first RB candidates. Each of the first candidate templates corresponding to the current template flipped in the direction may include each of the first candidate templates matching the current template, for example, after flipping in the direction, in shape and orientation. Each of the first candidate templates may further match the flipped current template in size. Geometry of each of the first candidate templates may differ from the flipped current template only in position (or location) in a picture and/or frame.

Each of the first candidate template includes: the quantity (e.g., number) of rows of samples above a respective candidate template, and the quantity (e.g., number) of columns of samples to the right of the respective candidate template, for example, based on the direction being horizontal. Similarly, each of the first candidate template may include: the quantity (e.g., number) of rows of samples below the respective first candidate template, and the quantity (e.g., number) of columns of samples to the left of the respective first candidate template, for example, based on the direction being vertical.

At step 3104, second candidate templates of second candidate RBs, from a second search region (which may alternatively be referred to as a second reference region), may be determined. Each of the second candidate templates may correspond to the current template of the CB. Each of the second candidate templates may correspond to the current template without flipping and/or other transformation except translation.

The second candidate templates may be defined relative to the respective second RB candidates. Each of the second candidate templates corresponding to the current template includes each of the second candidate templates matching the current template in shape and orientation. Each of the second candidate templates may further match the current template in size. Geometry of each of the second candidate templates may differ from the current template only in position (or location) in a picture and/or frame. Each of the second candidate template includes: the quantity (e.g., number) of rows of samples above a respective candidate template, and the quantity (e.g., number) of columns of samples to the left of the respective candidate template.

The first search region and the second search region may each be portions of a picture and/or frame (alternatively referred to as a video frame) of the CB. Each portion correspond to reconstructed portions (e.g., if performed by the encoder) or decoded portions (e.g., if performed by the decoder) of the CB. The current template, each of the first candidate templates, and each of the second candidate templates may include a respective set of reconstructed (or decoded) samples.

The first search region may be different from the second search region. The second search region may include portions of a current coding tree (CTU), of the CB, not included (or excluded from) in the first search region, as shown in examples described herein with respect to FIG. 19, FIG. 20A, and/or FIG. 20B. The second search region may be defined relative to a position of the CB (or to a current coding tree unit (CTU) of the CB). As described herein with respect to FIG. 17A, the second search region may include: a first coding tree unit (CTU) above and adjacent to a current CTU in which the CB is located; a second CTU to the left and adjacent to the current CTU; a third CTU above and to the left of the current CTU, wherein the third CTU is adjacent to the first CTU and the second CTU; and a portion, of the current CTU, above and to the left of the CB. The second search region may include a plurality of rectangles with dimensions determined based on dimensions of the CB.

The first search region may include: a first rectangular region located above and to the left of the CB; and a second rectangular region located above or to the left of the CB depending on the direction. The first rectangular region may be within a current CTU of the CB. The second search region may overlap the first search region in at least the first rectangular region of the first search region. As shown in the examples described herein with respect to FIGS. 19-21, the first rectangular region may have a lower right corner that intersects (or meets) an upper left corner of the CB. As described herein with respect to FIGS. 19-21, the first rectangular region may include a first width and a first height that may be based on a width and a height of the CB, respectively. The first rectangular region may have a height that is a predefined multiple of a height of the CB, for example, based on the direction being horizontal. The height of the first rectangular region may be the smaller of the predefined multiple of the height of the CB or a distance between the top sides (also referred to as upper boundaries) of the CB and the current CTU of the CB, for example, based on the direction being horizontal. The first rectangular region may have a width that is the smaller of a predefined multiple of a width of the CB and a distance between the left sides (also referred to as left boundaries) of the CB and the current CTU of the CB, for example, based on the direction being horizontal. The width of the first rectangular region may be the distance between the left sides of the CB and the current CTU.

Similarly, the first rectangular region may have a width that is a predefined multiple of a width of the CB, for example, based on the direction being vertical. The width of the first rectangular region may be the smaller of the predefined multiple of the width of the CB or a distance between the left sides (or left boundaries) of the CB and the CTU of the CB, for example, based on the direction being vertical. The first rectangular region may have a height that is the smaller of a predefined multiple of a height of the CB and a distance between the top sides (also referred to upper boundaries) of the CB and the current CTU, for example, based on the direction being vertical. The height of the first rectangular region may be the distance between the tops sides of the CB and the current CTU.

The second rectangular region includes a second width and a second height that are based on a width and a height of the CB, respectively. As shown in FIG. 19, the second rectangular region may be adjacent to and to the left of the CB, for example, based on the direction being horizontal. The second rectangular region may include a second height that is the same as a height of the CB and includes a second width that is based on a width of the CB.

As shown in FIG. 20A and/or FIG. 20B, the second rectangular region may be adjacent to and above the CB, for example, based on the direction being vertical. The second rectangular region may include a second width that is the same as a width of the CB and includes a second height that is based on a height of the CB.

At step 3106, template matching (TM) costs may be calculated based on the current template, wherein the TM costs include: first TM costs of the first candidate templates, and second TM costs of the second candidate templates. The first TM costs are of the first candidate templates, respectively, and the second TM costs are of the second candidate templates, respectively.

Determining (e.g., calculating) the TM costs may include comparing samples in each of the first candidate templates against corresponding samples, in the current template, flipped in the direction to calculate the respective first TM costs. Each of the first TM costs may be based on one or more cost criterion, such as a rate-distortion criterion (e.g., Lagrangian rate-distortion cost). The one or more cost criterion may be based on, for example, a difference (e.g., sum of squared differences (SSD), sum of absolute differences (SAD), or sum of absolute transformed differences (SATD)) between the prediction/reference samples of each of the first candidate template and the samples, of the current template, flipped in the direction.

Determining (e.g., calculating) the TM costs may include comparing samples in each of the second candidate templates against corresponding samples, in the current template, to determine (e.g., calculate) the respective second TM costs. Similar to determining (e.g., calculating) costs of the first TM costs, each of the second TM costs may be based on the one or more cost criterion, such as a rate-distortion criterion (e.g., Lagrangian rate-distortion cost). The one or more cost criterion may be based on, for example, a difference (e.g., sum of squared differences (SSD), sum of absolute differences (SAD), or sum of absolute transformed differences (SATD)) between the prediction/reference samples of each of the second candidate template and the corresponding samples of the current template.

At step 3108, a reference template may be selected from (e.g., at least) the first candidate templates and the second candidate templates, for example, based on the TM costs. The reference template may be a candidate template selected, from at least the first candidate templates and the second candidate templates, as having a smallest TM cost among the TM costs. The reference template may be determined, from tested candidate templates, as a "best matching" template to the reference template, which means a residual between the RB (indicated by the reference template) and the CB (e.g., after flipping in the direction if the reference template is from the first candidate templates) may be reduced compared to using other block indicated by other candidate templates.

At step 3110, the CB may be coded based on a reference block (RB) indicated by the reference template. The CB may be predicted (by an encoder) or determined (by a decoder), for example, based on the RB. The RB may be a block from which the reference template is defined.

At the encoder, the RB may be used to predict the CB and the coding the CB may include encoding the CB based on the RB. Encoding the CB may include determining whether to flip the CB in the direction before determining a residual of the CB, for example, based on whether the reference template is from the first candidate templates or the second candidate templates. The residual of the CB may be determined based on: the determining whether to flip the CB, the RB, and the CB. The determined residual (of the CB) may be sent (e.g., transmitted) in a bitstream. The residual may be determined as a difference between the RB and the CB flipped in the direction, for example, based on the reference template being from the first candidate templates. The residual may be determined based on a difference between the RB and the CB, for example, based on the reference template being from the second candidate templates.

At the encoder, coding the CB may include sending (e.g., transmitting), in a bitstream, an indication of the CB being encoded in a template matching prediction (TMP) mode that uses multiple types of candidate templates (e.g., using candidate templates that are flipped in the direction relative to the current template). The determination of the first candidate templates (at step 3102) and the determination the second candidate templates (at step 3104) may be based on (e.g., in response to) the encoder being in (or operating under) this TMP mode (also referred to herein as reconstructed-reordered TMP mode or RR-TMP mode).

Encoding the CB may include: determining a residual based on a difference between the RB and the CB flipped in the direction, for example, based on the reference template being from the first candidate templates, and determining the residual based on a difference between the RB and the CB, for example, based on the reference template being from the second candidate templates. Thee residual of the CB may be sent (e.g., transmitted) in the bitstream.

At the decoder, the RB may be used to determine the CB and the coding the CB may include decoding the CB based on the RB. Decoding the CB may include receiving, from a bitstream, a residual of the CB. A reconstructed block may be determined, for example, based on combining the RB with the residual of the CB received from the bitstream. Whether to flip the reconstructed block in the direction may be determined, for example, based on whether the reference template is from the first candidate templates or the second candidate templates. The decoder may determine to flip the reconstructed block, for example, based on the reference template being one of (or from) the first candidate templates, and the decoder may determine to not flip the reconstructed block, for example, based on the reference template being one of the second candidate templates. The CB may be decoded, for example, based on whether to flip the reconstructed block in the direction.

The decoder may flip the reconstructed block in the direction, for example, based on the reference template being from the first candidate templates. The decoder may decode the CB based on the flipped reconstructed block. The CB may correspond to the flipped, reconstructed block. The decoder may decode the CB based on the reconstructed block and based on the reference template being from the second candidate templates. The CB may correspond to the reconstructed block (e.g., without further transformations such as flipping, rotation, and/or scaling, etc.).

A decoder may receive, in a bitstream, an indication of the CB being encoded in a template matching prediction (TMP) mode that uses multiple types of candidate templates (e.g., using candidate templates that are flipped in the direction relative to the current template). The determination of the first candidate templates (at block 3102) and the determination the second candidate templates (at block 3104) may be based on (e.g., in response to) the decoder receiving indication of this TMP mode (also referred to herein as reconstructed-reordered TMP mode or RR-TMP mode).

A decoder may receive a residual of the CB from a bitstream. The decoder may decode the CB based on flipping a reconstructed block in the direction, with the reconstructed block being a combination of the RB with the residual of the CB, for example, based on the selected/determined reference template being from the first candidate templates. The decoder may decode the CB, for example, based on combining the RB with the residual of the CB and based on the reference template being from the second candidate templates.

One or more types of additional candidate templates of corresponding additional candidate RBs may be further determined from which the reference template may be determined, for example, based on TM costs of the additional candidate templates, in addition to the first candidate templates and the second candidate templates. The method described herein with respect to FIG. 31 may further include determining third candidate templates of third candidate RBs from a third search region, with each of the third candidate templates corresponding to the current template flipped in a second direction. The third search region may correspond to the second direction. The direction (associated with the first candidate templates) may be horizontal and the second direction may be vertical or vice versa. At step 3106, the TM costs may further include third TM costs of the third candidate templates, which may be similarly calculated based on one or more cost criterion as described herein with respect to calculating the first TM costs of the first candidate templates. At step 3108, the reference template may be selected, for example, based on the TM costs, from the first candidate templates, the second candidate templates, and the third candidate templates.

The method discussed herein with respect to FIG. 31 may not be limited to candidate templates which are flipped in a direction and may be further extended to include other types of candidate templates which correspond to other transformations performed on the current template. At step 3102, instead of each of the first candidate templates corresponding to the current template (of the CB) flipped in a direction, each of the first candidate templates may correspond to the current template (of the CB) with a transformation applied. Each of the first candidate templates corresponding to the current template with the transformation applied may include each of the first candidate templates matching the current template, for example, after the transformation, in size, shape, and orientation. The transformation may include a rigid transformation (or isometry) that does not change the size or shape after transformation. The transformation may include one or more of rotation and reflection, and may exclude translation. The transformation may include rotating the current template by a predetermined amount (e.g., degrees, or radians, etc.)

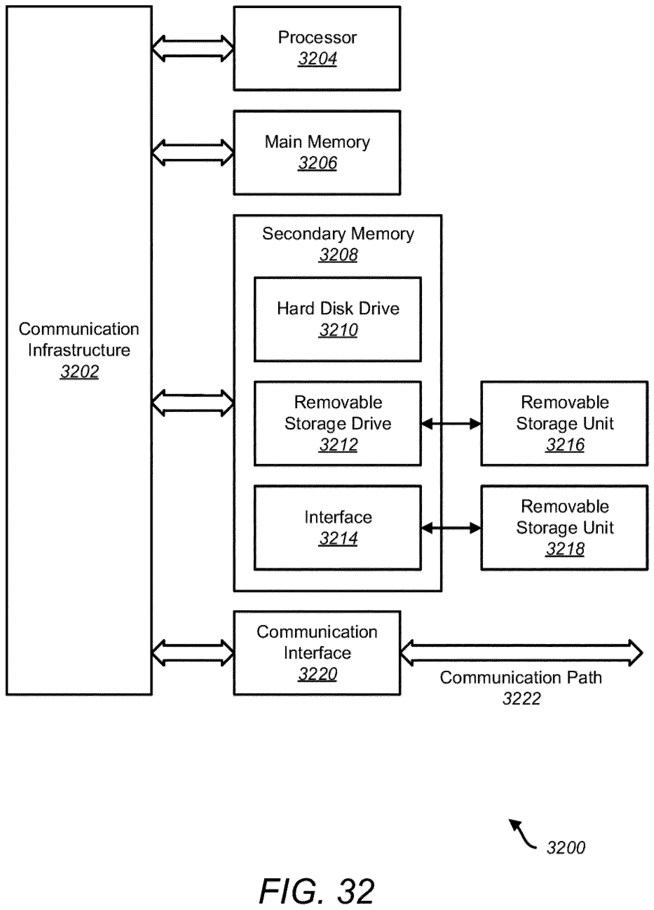

FIG. 32 shows an example computer system in which examples of the present disclosure may be implemented. For example, the example computer system 3200 shown in FIG. 32 may implement one or more of the methods described herein. For example, various devices and/or systems described herein (e.g., in FIGS. 1, 2, and 3) may be implemented in the form of one or more computer systems 3200. Furthermore, each of the steps of the flowcharts depicted in this disclosure may be implemented on one or more computer systems 3200.

The computer system 3200 may comprise one or more processors, such as a processor 3204. The processor 3204 may be a special purpose processor, a general purpose processor, a microprocessor, and/or a digital signal processor. The processor 3204 may be connected to a communication infrastructure 3202 (for example, a bus or network). The computer system 3200 may also comprise a main memory 3206 (e.g., a random access memory (RAM)), and/or a secondary memory 3208.

The secondary memory 3208 may comprise a hard disk drive 3210 and/or a removable storage drive 3212 (e.g., a magnetic tape drive, an optical disk drive, and/or the like). The removable storage drive 3212 may read from and/or write to a removable storage unit 3216. The removable storage unit 3216 may comprise a magnetic tape, optical disk, and/or the like. The removable storage unit 3216 may be read by and/or may be written to the removable storage drive 3212. The removable storage unit 3216 may comprise a computer usable storage medium having stored therein computer software and/or data.

The secondary memory 3208 may comprise other similar means for allowing computer programs or other instructions to be loaded into the computer system 3200. Such means may include a removable storage unit 3218 and/or an interface 3214. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 3218 and interfaces 3214 which may allow software and/or data to be transferred from the removable storage unit 3218 to the computer system 3200.

The computer system 3200 may also comprise a communications interface 3220. The communications interface 3220 may allow software and data to be transferred between the computer system 3200 and external devices. Examples of the communications interface 3220 may include a modem, a network interface (e.g., an Ethernet card), a communications port, etc. Software and/or data transferred via the communications interface 3220 may be in the form of signals which may be electronic, electromagnetic, optical, and/or other signals capable of being received by the communications interface 3220. The signals may be provided to the communications interface 3220 via a communications path 3222. The communications path 3222 may carry signals and may be implemented using wire or cable, fiber optics, a phone line, a cellular phone link, an RF link, and/or any other communications channel(s).

A computer program medium and/or a computer readable medium may be used to refer to tangible storage media, such as removable storage units 3216 and 3218 or a hard disk installed in the hard disk drive 3210. The computer program products may be means for providing software to the computer system 3200. The computer programs (which may also be called computer control logic) may be stored in the main memory 3206 and/or the secondary memory 3208. The computer programs may be received via the communications interface 3220. Such computer programs, when executed, may enable the computer system 3200 to implement the present disclosure as discussed herein. In particular, the computer programs, when executed, may enable the processor 3204 to implement the processes of the present disclosure, such as any of the methods described herein. Accordingly, such computer programs may represent controllers of the computer system 3200.

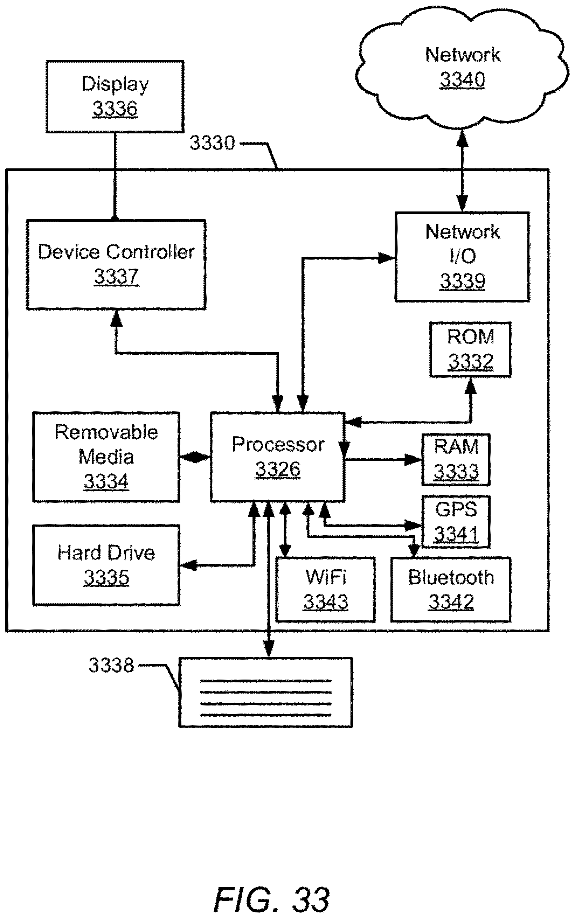

FIG. 33 shows example elements of a computing device that may be used to implement any of the various devices described herein, including, for example, a source device (e.g., 102), an encoder (e.g., 200), a destination device (e.g., 106), a decoder (e.g., 300), and/or any computing device described herein. The computing device 3330 may include one or more processors 3331, which may execute instructions stored in the random-access memory (RAM) 3333, the removable media 3334 (such as a Universal Serial Bus (USB) drive, compact disk (CD) or digital versatile disk (DVD), or floppy disk drive), or any other desired storage medium. Instructions may also be stored in an attached (or internal) hard drive 3335. The computing device 3330 may also include a security processor (not shown), which may execute instructions of one or more computer programs to monitor the processes executing on the processor 3331 and any process that requests access to any hardware and/or software components of the computing device 3330 (e.g., ROM 3332, RAM 3333, the removable media 3334, the hard drive 3335, the device controller 3337, a network interface 3339, a GPS 3341, a Bluetooth interface 3342, a WiFi interface 3343, etc.). The computing device 3330 may include one or more output devices, such as the display 3336 (e.g., a screen, a display device, a monitor, a television, etc.), and may include one or more output device controllers 3337, such as a video processor. There may also be one or more user input devices 3338, such as a remote control, keyboard, mouse, touch screen, microphone, etc. The computing device 3330 may also include one or more network interfaces, such as a network interface 3339, which may be a wired interface, a wireless interface, or a combination of the two. The network interface 3339 may provide an interface for the computing device 3330 to communicate with a network 3340 (e.g., a RAN, or any other network). The network interface 3339 may include a modem (e.g., a cable modem), and the external network 3340 may include communication links, an external network, an in-home network, a provider's wireless, coaxial, fiber, or hybrid fiber/coaxial distribution system (e.g., a DOCSIS network), or any other desired network. Additionally, the computing device 3330 may include a location-detecting device, such as a global positioning system (GPS) microprocessor 3341, which may be configured to receive and process global positioning signals and determine, with possible assistance from an external server and antenna, a geographic position of the computing device 3330.

The example in FIG. 33 may be a hardware configuration, although the components shown may be implemented as software as well. Modifications may be made to add, remove, combine, divide, etc. components of the computing device 3330 as desired. Additionally, the components may be implemented using basic computing devices and components, and the same components (e.g., processor 3331, ROM storage 3332, display 3336, etc.) may be used to implement any of the other computing devices and components described herein. For example, the various components described herein may be implemented using computing devices having components such as a processor executing computer-executable instructions stored on a computer-readable medium, as shown in FIG. 33. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising determining, for a current block (CB) of content, a reference block (RB) based on a template matching (TM) cost between a reference template of the RB, and a current template, of the CB, flipped in a direction relative to the current template.

Clause 1B. The method of clause 1A further comprising flipping one of a kernel, the RB, the reference template, or the current template, in the direction, and determining a gradient, associated with the RB, by either applying the flipped kernel to one of the RB, the reference template, or the current template, or the kernel to one of the flipped RB, the flipped reference template, or the flipped current template, after the determining the RB.

Clause 1C. The method of any one of clauses 1A to 1B further comprising coding a residual block using the at least one of the horizontal transform and the vertical transform determined based on the gradient. Clause 1 herein may comprise any one or more of clause 1A, clause 1B, and/or clause 1C.

Clause 2. The method of clause 1, wherein the determining the least one of the horizontal transform and the vertical transform, comprises determining an intra-mode corresponding to the gradient and determining the at least one of the horizontal transform and the vertical transform, based on an intra-mode.

Clause 3. The method of any one of clauses 1 or 2, wherein the determining the gradient associated with the RB comprises, based on the applying the flipped filter kernel to one of the RB, the reference template, or the current template, or the applying the filter kernel to one of the flipped RB, the flipped reference template, or the flipped current template and calculating the gradient for samples of the RB or the reference template and selecting an intra-mode based on the gradient.

Clause 4. The method of any one of clauses 1 to 3, further comprising based on the gradient, determining the horizontal transform and the vertical transform and coding the residual block using the horizontal transform and the vertical transform.

Clause 5. The method of any one of clauses 1 to 4, wherein the determining the at least one of the horizontal transform and the vertical transform comprises accessing a lookup table using the gradient or an angular intra-mode determined based on the gradient.

Clause 6. The method of any one of clauses 1 to 5, further comprising determining a secondary transform, based on the gradient, and coding the residual block using the at least one of the horizontal transform, the vertical transform, and the secondary transform.

Clause 7. The method of any one of clauses 1 to 6, wherein the direction is a horizontal direction or a vertical direction.

Clause 8. The method of any one of clauses 1 to 7, wherein the residual block is received from a bit stream, and the coding the residual block using the at least one of the horizontal transform and the vertical transform comprises decoding the residual block using the at least one of the horizontal transform and the vertical transform, determining a reconstructed block based on combining the RB with the decoded residual block, and decoding the CB based on whether the reference template, associated with the RB, is flipped in the direction relative to the current template.

Clause 9. The method of any one of clauses 1 to 8, further comprising determining the horizontal transform and the vertical transform, based on the angular intra-mode, and coding the residual block using the horizontal transform and the vertical transform.

Clause 10. The method of any one of clauses 1 to 9, wherein the determining at least one of a horizontal transform and a vertical transform comprises accessing a lookup table using the determined angular intra-mode.

Clause 11. The method of any one of clauses 1 to 10, wherein the horizontal transform and the vertical transform are different from each other.

Clause 12. The method of any one of clauses 1 to 11, wherein the horizontal transform and the vertical transform are a same transform.

Clause 13. The method of any one of clauses 1 to 12, wherein the coding the residual block using the at least one of the horizontal transform and the vertical transform comprises encoding the residual block using the at least one of the horizontal transform and the vertical transform, and transmitting, in a bitstream, the encoded residual block and an indication of the CB being encoded in a template matching prediction (TMP) mode that uses candidate templates that are flipped in the direction relative to the current template.

Clause 14. The method of any one of clauses 1 to 13, further comprising flipping the RB in the direction, in response to the determining the RB, and determining an angular intra-mode by applying the filter kernel to the flipped RB.

Clause 15. The method of any one of clauses 1 to 14, wherein the determining an angular intra-mode comprises, calculating a dominant gradient of the RB and selecting the angular intra-mode in accordance with at least the dominant gradient, based on the applying the filter kernel to the flipped RB.

Clause 16. A computing device comprising one or more processors and memory storing instructions that, when executed by the one or more processors, cause the computing device to perform the method of any one of clauses 1 to 15.

Clause 17. A system comprising a first computing device configured to perform the method of any one of clauses 1 to 15 and a second computing device configured to encode the residual block.

Clause 18. A computer-readable medium storing instructions that, when executed, cause performance of the method of any one of clauses 1 to 15.

Clause 19A. A method comprising determining, for a current block (CB) of content, a reference block (RB) based on a template matching (TM) cost between a reference template of the RB and a current template, of the CB, flipped in a direction relative to the current template.

Clause 19B. The method of clause 19A further comprising flipping one of a kernel or the RB in the direction and determining an intra-mode by either applying the flipped kernel to the RB or the kernel to the flipped RB, after the determining the RB.

Clause 19C. The method of any one of clauses 19A to 19B further comprising determining at least one of a horizontal transform and a vertical transform and coding a residual block using the at least one of the horizontal transform and the vertical transform, based on the determined intra-mode. Clause 19 herein may comprise any one or more of clause 19A, clause 19B, and/or clause 19C.

Clause 20. The method of clause 19, wherein the determining the intra-mode further comprises, based on the applying the flipped kernel to the RB, or the applying the kernel to the flipped RB determining an amplitude of a gradient of the RB and selecting the intra-mode based on the amplitude.

Clause 21. The method of any one of clauses 19 or 20, further comprising determining the horizontal transform and the vertical transform and coding the residual block using the horizontal transform and the vertical transform, based on at least one of the intra-mode and the gradient.

Clause 22. The method of any one of clauses 19 to 21, wherein the determining the least one of the horizontal transform and the vertical transform comprises accessing a lookup table using the intra-mode.

Clause 23. The method of any one of clauses 19 to 22, receiving, in a bitstream, an indication of the CB being encoded in a template matching prediction (TMP) mode associated with candidate templates that are flipped in the direction.

Clause 24A. The method of any one of clauses 19 to 23, further comprising determining the template matching (TM) costs for first candidate templates of first candidate reference blocks (RBs), wherein the first candidate templates each correspond to the current template of the CB.

Clause 24B. The method of any one of clauses 19 to 24A, further comprising determining the TM costs for second candidate templates of second candidate RBs, wherein the second candidate templates each correspond to the current template flipped in the direction.

Clause 24C. The method of any one of clauses 19 to 24B, further comprising selecting, based on the TM costs, a first reference template from the first candidate templates and the second candidate templates, wherein the first reference template corresponds to the current template, flipped in a direction, and indicates the determined RB. Clause 24 herein may comprise any one or more of clause 24A, clause 24B, and/or clause 24C.

Clause 25. The method of any one of clauses 19 to 24, wherein the kernel is a Sobel filter.

Clause 26. The method of any one of clauses 19 to 25, wherein the direction is a horizontal direction or a vertical direction.

Clause 27. The method of any one of clauses 19 to 26, wherein the coding the residual block using the at least one of the horizontal transform and the vertical transform comprises generating transform coefficients by applying the at least one of the horizontal transform and the vertical transform to the residual block and transmitting, in a bitstream, the residual block and an indication of the CB being encoded in a template matching prediction (TMP) mode that uses candidate templates that are flipped in the direction relative to the current template.

Clause 28. The method of any one of clauses 19 to 27, wherein the first current template and the second current template are each defined relative to the CB, wherein the first candidate templates are defined relative to the respective first RB candidates, and wherein the second candidate templates are defined relative to the respective second RB candidates.

Clause 29. The method of any one of clauses 19 to 28, wherein each of the second candidate templates matches the first current template, flipped in the direction, in shape and orientation.

Clause 30. The method of any one of clauses 19 to 29, wherein each of the second candidate templates further matches the first current template, flipped in the direction, in size.

Clause 31. The method of any one of clauses 19 to 30, wherein each of the first candidate templates matches the first current template in shape and orientation.

Clause 32. The method of any one of clauses 19 to 31, wherein each of the second candidate templates further matches the first current template in size.

Clause 33. The method of any one of clauses 19 to 32, wherein determining the TM costs comprises comparing samples in each of the second candidate templates against corresponding samples, in the first current template, flipped in the direction to calculate respective second TM costs, and comparing samples in each of the first candidate templates against corresponding samples, in the first current template, to calculate respective first TM costs.

Clause 34. The method of any one of clauses 19 to 33, wherein the first current template comprises a first portion comprising a number of rows of samples above the CB, and a second portion comprising a number of columns of samples to the left of the CB.

Clause 35. The method of any one of clauses 19 to 34, wherein the rows matches the CB in width, and wherein the columns matches the CB in height.

Clause 36A. The method of any one of clauses 19 to 35, wherein each of the second candidate template comprises the number of rows of samples above a respective second candidate template, and the number of columns of samples to the right of the respective second candidate template, based on the direction being horizontal.

Clause 36B. The method of any one of clauses 19 to 36A, wherein each of the second candidate template comprises the number of rows of samples below the respective second candidate template, and the number of columns of samples to the left of the respective second candidate template, based on the direction being vertical. Clause 36 herein may comprise any one or more of clause 36A and/or clause 36B.

Clause 37. The method of any one of clauses 19 to 36, wherein the first current template, each of the first candidate templates, and each of the second candidate templates comprises a respective set of reconstructed samples.

Clause 38. The method of any one of clauses 19 to 37, wherein the first candidate templates are from a first search region and the second candidate templates are from a second search region.

Clause 39. The method of any one of clauses 19 to 38, wherein the first search region and the second search region are portions of a picture and/or frame of the CB.

Clause 40. The method of any one of clauses 19 to 39, wherein the portions comprise reconstructed portions or decoded portions of the CB.

Clause 41. The method of any one of clauses 19 to 40, wherein the first search region is different from the second search region.

Clause 42. The method of any one of clauses 19 to 41, wherein the second search region corresponds to the direction of flipping.

Clause 43. The method of any one of clauses 19 to 42, wherein the first search region comprises a first coding tree unit (CTU) above and adjacent to a current CTU in which the CB is located, a second CTU to the left and adjacent to the current CTU, a third CTU above and to the left of the current CTU, wherein the third CTU is adjacent to the first CTU and the second CTU, and a portion, of the current CTU, above and to the left of the CB.

Clause 44. The method of any one of clauses 19 to 43, wherein the second search region comprises a first rectangular region located above and to the left of the CB, and a second rectangular region located above or to the left of the CB depending on the direction.

Clause 45. The method of any one of clauses 19 to 44, wherein the first rectangular region is within a current CTU of the CB.

Clause 46. The method of any one of clauses 19 to 45, wherein the first rectangular region has a lower right corner intersecting an upper left corner of the CB.

Clause 47. The method of any one of clauses 19 to 46, wherein the first rectangular region comprises a first width and a first height that are based on a width and a height of the CB, respectively.

Clause 48. The method of any one of clauses 19 to 47, wherein the second rectangular region comprises a second width and a second height that are based on a width and a height of the CB, respectively.

Clause 49. The method of any one of clauses 19 to 48, wherein the second rectangular region is adjacent to and to the left of the CB, based on the direction being horizontal.

Clause 50. The method of any one of clauses 19 to 49, wherein the second rectangular region comprises a second height that is the same as a height of the CB and comprises a second width that is based on a width of the CB.

Clause 51. The method of any one of clauses 19 to 50, wherein the second rectangular region is adjacent to and above the CB, based on the direction being vertical.

Clause 52. The method of any one of clauses 19 to 51, wherein the second rectangular region comprises a second width that is the same as a width of the CB and comprises a second height that is based on a height of the CB.

Clause 53. A computing device comprising one or more processors and memory storing instructions that, when executed by the one or more processors, cause the computing device to perform the method of any one of clauses 19 to 52.

Clause 54. A system comprising a first computing device configured to perform the method of any one of clauses 19 to 52 and a second computing device configured to encode the residual block.

Clause 55. A computer-readable medium storing instructions that, when executed, cause performance of the method of any one of clauses 19 to 52.

Clause 56A. A method comprising determining, for a current block (CB) of content, a reference block (RB) based on a template matching (TM) cost between a reference template of the RB and a current template of the CB, flipped in a direction relative to the current template.

Clause 56B. The method of clause 18A further comprising flipping one of a kernel or the RB in the direction and determining an intra-mode by either applying the flipped kernel to the RB or the kernel to the flipped RB, after the determining the RB.

Clause 56C. The method of any one of clauses 18A to 18B further comprising determining at least one of a horizontal transform and a vertical transform, based on the determined intra-mode.

Clause 56D. The method of any one of clauses 18A to 18C further comprising decoding a residual block, received from a bit stream, using the at least one of the horizontal transform and the vertical transform.

Clause 56E. The method of any one of clauses 18A to 18D further comprising determining a reconstructed block, based on combining the RB with the decoded residual block, and decoding the CB based on whether the reference template related to the RB is flipped in the direction in relation to the current template. Clause 56 herein may comprise any one of more of clause 56A, clause 56B, clause 56C, clause 56D, and/or clause 56E.

Clause 57. The method of clause 56, further comprising determining a secondary transform, based on the intra-mode, and decoding the residual block using the at least one of the horizontal transform, the vertical transform, and the secondary transform.

Clause 58. The method of any one of clauses 56 or 57, wherein the direction is a horizontal direction or a vertical direction.

Clause 59. A computing device comprising one or more processors and memory storing instructions that, when executed by the one or more processors, cause the computing device to perform the method of any one of clauses 56 to 58.

Clause 60. A system comprising a first computing device configured to perform the method of any one of clauses 56 to 58 and a second computing device configured to encode the residual block.

Clause 61. A computer-readable medium storing instructions that, when executed, cause performance of the method of any one of clauses 56 to 58.

A computing device may perform a method comprising multiple operations. The computing device may determine, for a current block (CB) of content, a reference block (RB) based on a template matching (TM) cost between a reference template of the RB, and a current template, of the CB, flipped in a direction relative to the current template. The computing device may flip one of a kernel, the RB, the reference template, or the current template, in the direction, and determining a gradient, associated with the RB, by either applying the flipped kernel to one of the RB, the reference template, or the current template, or the kernel to one of the flipped RB, the flipped reference template, or the flipped current template, after the determining the RB. The computing device may code a residual block using the at least one of the horizontal transform and the vertical transform determined based on the gradient. The computing device may determine the least one of the horizontal transform and the vertical transform, which may comprise determining an intra-mode corresponding to the gradient and determining the at least one of the horizontal transform and the vertical transform, based on an intra-mode. The computing device may determine the gradient associated with the RB, which may comprise, based on the applying the flipped filter kernel to one of the RB, the reference template, or the current template, or the applying the filter kernel to one of the flipped RB, the flipped reference template, or the flipped current template and calculating the gradient for samples of the RB or the reference template and selecting an intra-mode based on the gradient. The computing device may further determine the horizontal transform and the vertical transform and coding the residual block using the horizontal transform and the vertical transform, based on the gradient. The computing device may determine the at least one of the horizontal transform and the vertical transform which may comprise accessing a lookup table using the gradient or an angular intra-mode determined based on the gradient. The computing device may determine a secondary transform, based on the gradient, and coding the residual block using the at least one of the horizontal transform, the vertical transform, and the secondary transform. The direction of flipping may be a horizontal direction or a vertical direction. The residual block may be received from a bit stream, and the coding the residual block using the at least one of the horizontal transform and the vertical transform may comprise decoding the residual block using the at least one of the horizontal transform and the vertical transform, determining a reconstructed block based on combining the RB with the decoded residual block, and decoding the CB based on whether the reference template, associated with the RB, is flipped in the direction relative to the current template. The computing device may determine the horizontal transform and the vertical transform, based on the angular intra-mode, and may code the residual block using the horizontal transform and the vertical transform. The computing device may determine at least one of a horizontal transform and a vertical transform which may comprise accessing a lookup table using the determined angular intra-mode. The horizontal transform and the vertical transform may be different from each other. The horizontal transform and the vertical transform may be a same transform. The computing device may code the residual block using the at least one of the horizontal transform and the vertical transform, which may comprise encoding the residual block using the at least one of the horizontal transform and the vertical transform, and transmitting, in a bitstream, the encoded residual block and an indication of the CB being encoded in a template matching prediction (TMP) mode that uses candidate templates that are flipped in the direction relative to the current template. The computing device may flip the RB in the direction, in response to the determining the RB, and may determine an angular intra-mode by applying the filter kernel to the flipped RB. The computing device may determine an angular intra-mode which may comprise calculating a dominant gradient of the RB and selecting the angular intra-mode in accordance with at least the dominant gradient, based on the applying the filter kernel to the flipped RB. The computing device may comprise one or more processors; and memory storing instructions that, if executed by the one or more processors, cause the computing device to perform the described method, additional operations and/or include the additional elements. A system may comprise a first computing device configured to perform any one or more of the operations described herein, and a second computing device configured to encode the residual block. A computer-readable medium may store instructions that, if executed, cause performance of the described method, additional operations and/or include the additional elements.

A computing device may perform a method comprising multiple operations. The computing device may determine, for a current block (CB) of content, a reference block (RB) based on a template matching (TM) cost between a reference template of the RB and a current template, of the CB, flipped in a direction relative to the current template. The computing device may flip one of a kernel or the RB in the direction and determine an intra-mode by either applying the flipped kernel to the RB or the kernel to the flipped RB, after the determining the RB. The computing device may determine at least one of a horizontal transform and a vertical transform and coding a residual block using the at least one of the horizontal transform and the vertical transform, based on the determined intra-mode. The intra-mode may further comprise, determining an amplitude of a gradient of the RB, based on the applying the flipped kernel to the RB, or the applying the kernel to the flipped RB and selecting the intra-mode, based on the amplitude. The computing device may determine the horizontal transform and the vertical transform and may code the residual block using the horizontal transform and the vertical transform, based on at least one of the intra-mode and the gradient. The computing device may determine the least one of the horizontal transform and the vertical transform by accessing a lookup table using the intra-mode. The computing device may receive, in a bitstream, an indication of the CB being encoded in a template matching prediction (TMP) mode associated with candidate templates that are flipped in the direction. The computing device may determine the template matching (TM) costs for first candidate templates of first candidate reference blocks (RBs), wherein the first candidate templates each correspond to the current template of the CB. The computing device may further determine the TM costs for second candidate templates of second candidate RBs, wherein the second candidate templates each correspond to the current template flipped in the direction, and selecting, based on the TM costs, a first reference template from the first candidate templates and the second candidate templates, wherein the first reference template corresponds to the current template, flipped in a direction, and indicates the determined RB. The kernel may be a Sobel filter. The flipping direction may be a horizontal direction or a vertical direction. The computing device may code the residual block using the at least one of the horizontal transform and the vertical transform comprises generating transform coefficients by applying the at least one of the horizontal transform and the vertical transform to the residual block and transmitting, in a bitstream, the residual block and an indication of the CB being encoded in a template matching prediction (TMP) mode that uses candidate templates that are flipped in the direction relative to the current template. The first current template and the second current template may each be defined relative to the CB, wherein the first candidate templates may be defined relative to the respective first RB candidates, and wherein the second candidate templates may be defined relative to the respective second RB candidates. Each of the second candidate templates may match the first current template, flipped in the direction, in shape and orientation. Each of the second candidate templates may further match the first current template, flipped in the direction, in size. Each of the first candidate templates may match the first current template in shape and orientation. Each of the second candidate templates may further match the first current template in size. The computing device may determine the TM costs which may comprise comparing samples in each of the second candidate templates against corresponding samples, in the first current template, flipped in the direction to calculate respective second TM costs, and comparing samples in each of the first candidate templates against corresponding samples, in the first current template, to calculate respective first TM costs. The first current template may comprise a first portion comprising a number of rows of samples above the CB, and a second portion comprising a number of columns of samples to the left of the CB. The rows may match the CB in width, and wherein the columns may match the CB in height. Each of the second candidate template may comprise the number of rows of samples above a respective second candidate template, and the number of columns of samples to the right of the respective second candidate template, based on the direction being horizontal. Each of the second candidate template may comprise the number of rows of samples below the respective second candidate template, and the number of columns of samples to the left of the respective second candidate template, based on the direction being vertical. The first current template, each of the first candidate templates, and each of the second candidate templates may comprise a respective set of reconstructed samples.

The first candidate templates may be from a first search region and the second candidate templates may be from a second search region. The first search region and the second search region may be portions of a picture and/or frame of the CB. The portions may comprise reconstructed portions or decoded portions of the CB. The first search region may be different from the second search region. The second search region may correspond to the direction of flipping. The first search region may comprise a first coding tree unit (CTU) above and adjacent to a current CTU in which the CB is located, a second CTU to the left and adjacent to the current CTU, a third CTU above and to the left of the current CTU, wherein the third CTU is adjacent to the first CTU and the second CTU, and a portion, of the current CTU, above and to the left of the CB. The second search region may comprise a first rectangular region located above and to the left of the CB, and a second rectangular region located above or to the left of the CB depending on the direction. The first rectangular region may be within a current CTU of the CB. The first rectangular region may have a lower right corner intersecting an upper left corner of the CB. The first rectangular region may comprise a first width and a first height that are based on a width and a height of the CB, respectively. The second rectangular region may comprise a second width and a second height that are based on a width and a height of the CB, respectively. The second rectangular region may be adjacent to and to the left of the CB, based on the direction being horizontal. The second rectangular region may comprise a second height that is the same as a height of the CB and may comprise a second width that is based on a width of the CB. The second rectangular region may be adjacent to and above the CB based on the direction being vertical. The second rectangular region may comprise a second width that is the same as a width of the CB and comprises a second height that is based on a height of the CB. The computing device may comprise one or more processors; and memory storing instructions that, if executed by the one or more processors, cause the computing device to perform the described method, additional operations and/or include the additional elements. A system may comprise a first computing device configured to perform any one or more of the operations described herein, and a second computing device configured to encode the residual block. A computer-readable medium may store instructions that, if executed, cause performance of the described method, additional operations and/or include the additional elements.

A computing device may perform a method comprising multiple operations. The computing device may determine for a current block (CB) of content, a reference block (RB) based on a template matching (TM) cost between a reference template of the RB and a current template of the CB, flipped in a direction relative to the current template. The computing device may flip one of a kernel or the RB in the direction and determining an intra-mode by either applying the flipped kernel to the RB or the kernel to the flipped RB, after the determining the RB. The computing device may determine at least one of a horizontal transform and a vertical transform, based on the determined intra-mode. The computing device may decode a residual block, received from a bit stream, using the at least one of the horizontal transform and the vertical transform. The computing device may determine a reconstructed block, based on combining the RB with the decoded residual block, and may decode the CB based on whether the reference template related to the RB is flipped in the direction in relation to the current template. The computing device may determine a secondary transform, based on the intra-mode, and may decode the residual block using the at least one of the horizontal transform, the vertical transform, and the secondary transform. The flipping direction may be a horizontal direction or a vertical direction. The computing device may comprise one or more processors; and memory storing instructions that, if executed by the one or more processors, cause the computing device to perform the described method, additional operations and/or include the additional elements. A system may comprise a first computing device configured to perform any one or more of the operations described herein, and a second computing device configured to encode the residual block. A computer-readable medium may store instructions that, if executed, cause performance of the described method, additional operations and/or include the additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the scope of the descriptions herein. Accordingly, the foregoing description is by way of example only, and is not limiting.

**Claims**

1. A method comprising:

   determining, for a current block (CB) of content, a reference block (RB) based on a template matching (TM) cost between:

   a reference template of the RB, and
   a current template, of the CB, flipped in a direction relative to the current template

   after the determining the RB:

   flipping one of a kernel, the RB, the reference template, or the current template, in the direction; and
   determining a gradient, associated with the RB, by either applying:

   the flipped kernel to one of the RB, the reference template, or the current template; or
   the kernel to one of the flipped RB, the flipped reference template, or the flipped current template;

   coding a residual block using the at least one of a horizontal transform and a vertical transform determined based on the gradient.

2. The method of claim 1, wherein the determining the least one of the horizontal transform and the vertical transform, comprises:

   determining an intra-mode corresponding to the gradient; and
   based on an intra-mode, determining the at least one of the horizontal transform and the vertical transform.

3. The method of any one of claims 1 or 2, wherein the determining the gradient associated with the RB comprises, based on the applying the flipped filter kernel to one of the RB, the reference template, or the current template, or the applying the filter kernel to one of the flipped RB, the flipped reference template, or the flipped current template:

   calculating the gradient for samples of the RB or the reference template; and
   selecting an intra-mode based on the gradient.

4. The method of any one of claims 1 to 3, further comprising:

   based on the gradient, determining the horizontal transform and the vertical transform; and
   coding the residual block using the horizontal transform and the vertical transform.

5. The method of any one of claims 1 to 4, wherein the determining the at least one of the horizontal transform and the vertical transform comprises accessing a lookup table using:

   the gradient; or
   an angular intra-mode determined based on the gradient.

6. The method of any one of claims 1 to 5, further comprising:

   based on the gradient, determining a secondary transform; and
   coding the residual block using the at least one of the horizontal transform, the vertical transform, and the secondary transform.

7.  The method of any one of claims 1 to 6, wherein the direction is a horizontal direction or a vertical direction.

8.  The method of any one of claims 1 to 7, wherein the residual block is received from a bit stream, and the coding the residual block using the at least one of the horizontal transform and the vertical transform comprises:

    decoding the residual block using the at least one of the horizontal transform and the vertical transform;
    determining a reconstructed block based on combining the RB with the decoded residual block; and
    decoding the CB based on whether the reference template, associated with the RB, is flipped in the direction relative to the current template.

9.  The method of any one of claims 1 to 8, further comprising:

    determining first template matching (TM) costs for first candidate templates of first candidate reference blocks (RBs), wherein the first candidate templates each correspond to a current template of the CB, and
    determining second TM costs for second candidate templates of second candidate RBs, wherein the second candidate templates each corresponds to the current template flipped in a direction; and
    selecting, based on the first TM cost and second TM cost, a first reference template from the first candidate templates and the second candidate templates, wherein
    the first reference template corresponds to the current template flipped in a direction, and indicates the determined RB.

10. The method of any one of claims 1 to 9, wherein the coding the residual block using the at least one of the horizontal transform and the vertical transform comprises:

    encoding the residual block using the at least one of the horizontal transform and the vertical transform; and
    transmitting, in a bitstream, the encoded residual block and an indication of the CB being encoded in a template matching prediction (TMP) mode that uses candidate templates that are flipped in the direction relative to the current template.

11. The method of any one of claims 1 to 9, wherein the coding the residual block using the at least one of the horizontal transform and the vertical transform comprises:

    generating transform coefficients by applying the at least one of the horizontal transform and the vertical transform to the residual block; and
    transmitting, in a bitstream, the encoded residual block and an indication of the CB being encoded in a template matching prediction (TMP) mode that uses candidate templates that are flipped in the direction relative to the current template.

12. The method of any one of claims 1 to 11, wherein the first current template and the second current template are each defined relative to the CB, wherein the first candidate templates are defined relative to the respective first RB candidates, and wherein the second candidate templates are defined relative to the respective second RB candidates.

13. A computing device comprising:

    one or more processors; and
    memory storing instructions that, when executed by the one or more processors, cause the computing device to perform the method of any one of claims 1 to 12.

14. A system comprising:

    a first computing device configured to perform the method of any one of claims 1 to 12; and
    a second computing device configured to encode or decode the residual block.

15. A computer-readable medium storing instructions that, when executed, cause performance of the method of any one of claims 1 to 12.

**FIG. 1**

**FIG. 2**

*FIG. 3*

FIG. 4

FIG. 5

Vertical Binary Tree
Partition
*602*

Horizontal Binary Tree
Partition
*604*

Vertical Ternary Tree
Partition
*606*

Horizontal Ternary Tree
Partition
*608*

*FIG. 6*

FIG. 7

FIG. 8

FIG. 9

EP 4 447 440 A1

0: Planar
1: DC

*FIG. 10A*

0: Planar
1: DC

*FIG. 10B*

Reference Samples 902

Current Block 904

FIG. 11

EP 4 447 440 A1

*FIG. 12*

EP 4 447 440 A1

*FIG. 13A*

*FIG. 13B*

FIG. 14

FIG. 15A

FIG. 15B

The quick brown fox jumps over the lazy dog. The quick brown fox jumps over the lazy dog. The quick brown fox jumps over the lazy dog.

*FIG. 16*

*FIG. 17A*

FIG. 17B

The quick brown fox jumps over the lazy dog. The quick brown fox jumps over the lazy dog. The quick brown fox jumps over the lazy dog.

Reference Block 1804

Block Vector 1806

Current Block 1802

*FIG. 18*

EP 4 447 440 A1

*FIG. 19*

FIG. 20A

FIG. 20B

*FIG. 21*

Candidate
Template
2208

Current
Template
2206

| $R_{DM}$ | ... | $R_{D2}$ | $R_{D1}$ | $R_{D0}$ |
| $R_{CM}$ | ... | $R_{C2}$ | $R_{C1}$ | $R_{C0}$ |
| $R_{BM}$ | ... | $R_{B2}$ | $R_{B1}$ | $R_{B0}$ |
| $R_{AM}$ | ... | $R_{A2}$ | $R_{A1}$ | $R_{A0}$ |

| $P_{D0}$ | $P_{D1}$ | $P_{D2}$ | ... | $P_{DM}$ |
| $P_{C0}$ | $P_{C1}$ | $P_{C2}$ | ... | $P_{CM}$ |
| $P_{B0}$ | $P_{B1}$ | $P_{B2}$ | ... | $P_{BM}$ |
| $P_{A0}$ | $P_{A1}$ | $P_{A2}$ | ... | $P_{AM}$ |

Candidate
Reference Block
2204

| $R_{E0}$ | $R_{F0}$ | $R_{G0}$ | $R_{H0}$ |
| $R_{E1}$ | $R_{F1}$ | $R_{G1}$ | $R_{H1}$ |
| $R_{E2}$ | $R_{F2}$ | $R_{G2}$ | $R_{H2}$ |
| ... | ... | ... | ... |
| $R_{EN}$ | $R_{FN}$ | $R_{GN}$ | $R_{HN}$ |

| $P_{H0}$ | $P_{G0}$ | $P_{F0}$ | $P_{E0}$ |
| $P_{H1}$ | $P_{G1}$ | $P_{F1}$ | $P_{E1}$ |
| $P_{H2}$ | $P_{G2}$ | $P_{F2}$ | $P_{E2}$ |
| ... | ... | ... | ... |
| $P_{HN}$ | $P_{GN}$ | $P_{FN}$ | $P_{EN}$ |

Current Block
2202

Distance
2210

FIG 22

Reconstructed area

Gradient window 2308

2304

2306

Current Block

2302

Unavailable area

## FIG. 23

2410 Gy

angular mode N

2404

2402

Map to closest angular mode

2406

angular mode N+1

θ

Gx 2408

## FIG. 24A

M1

2414

M2

2412

2 4 6 8 10 12 14 16 18 20 22 24 26 28 30 32 34 36 38 40 42 44 46 48 50 52 54 56 58 60 62 64 66

## FIG. 24B

FIG. 25

FIG. 26

*FIG. 27*

*FIG. 28*

2900

2902

Determining, for a current block (CB), a reference block (RB) based on a template matching (TM) cost between a reference template of the RB and a current template, of the CB, flipped in a direction

2904

Flipping one of a filter kernel, the RB, the reference template, or the current template, in the direction

2906

Determining a gradient associated with the RB by either applying: the flipped filter kernel to one of the RB, the reference template, or the current template; or the filter kernel to one of the flipped RB, the flipped reference template, or the flipped current template

2908

Determining at least one of a horizontal transform and a vertical transform, based on the determined gradient associated with the RB

2910

Coding a residual using the at least one of the horizontal transform and the vertical transform

*FIG. 29*

3000

┌─ 3002
Applying the flipped filter kernel to one of the RB, the reference template, or the current template, or applying the filter kernel to one of the flipped RB, the flipped reference template, or the flipped current template:

┌─ 3004
Calculating a gradient for respective samples of the RB or the reference template

┌─ 3006
Calculating a gradient for the RB or the reference template

┌─ 3008
Selecting the angular intra-mode for the CB in accordance with the gradient for the RB or the reference template

*FIG. 30*

Determine first candidate templates of first candidate RBs from a first search region, wherein each of the first candidate templates corresponds to a current template of the CB
_3102_

Determine second candidate templates of second candidate RBs from a second search region, wherein each of the second candidate templates corresponds to the current template, of a CB, flipped in a direction
_3104_

Calculate, based on the current template, template matching (TM) costs comprising:
    first TM costs of the first candidate templates;
    second TM costs of the second candidate templates;
_3106_

Select, based on the TM costs, a reference template from the first candidate templates and the second candidate templates
_3108_

Code the CB based on a RB indicated by the reference template
_3110_

_3100_

# FIG. 31

FIG. 32

## FIG. 33

Europäisches
Patentamt

European
Patent Office

Office européen
des brevets

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COBAN M ET AL: "Algorithm description of Enhanced Compression Model 8 (ECM 8)", 141. MPEG MEETING; 20230116 - 20230120; ONLINE; (MOTION PICTURE EXPERT GROUP OR ISO/IEC JTC1/SC29/WG11), , no. m62440 ; JVET-AC2025 6 April 2023 (2023-04-06), XP030308550, Retrieved from the Internet: URL:https://dms.mpeg.expert/doc_end_user/documents/141_Teleconference/wg11/m62440-JVET-AC2025-v1-JVET-AC2025.zip JVET-AC2025-v1.docx [retrieved on 2023-04-06] * sections 3.1.7, 3.2.33, 3.3.3 * ----- | 1-15 | INV. H04N19/12 H04N19/117 H04N19/14 H04N19/159 H04N19/176 |
| Y | J-K LEE (OFINNO) ET AL: "AHG12: TMP using Reconstruction-Reordered for screen content coding (RR-TMP)", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0059 ; m61626 11 January 2023 (2023-01-11), XP030306510, Retrieved from the Internet: URL:https://jvet-experts.org/doc_end_user/documents/29_Teleconference/wg11/JVET-AC0059-v2.zip JVET_AC0059_v2/JVET-AC0059_v2_clean.docx [retrieved on 2023-01-11] * section 2 * ----- -/-- | 1-15 | **TECHNICAL FIELDS SEARCHED (IPC)** H04N |

The present search report has been drawn up for all claims

| Place of search | Date of completion of the search | Examiner |
|---|---|---|
| Munich | 31 July 2024 | Montoneri, Fabio |

EPO FORM 1503 03.82 (P04C01)

Europäisches
Patentamt

European
Patent Office

Office européen
des brevets

## EUROPEAN SEARCH REPORT

**Application Number**

EP 24 17 0043

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | C-C CHEN (QUALCOMM) ET AL: "Non-EE2: Template Matching for RR-IBC", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0169 ; m61751 4 January 2023 (2023-01-04), XP030306809, Retrieved from the Internet: URL:https://jvet-experts.org/doc_end_user/documents/29_Teleconference/wg11/JVET-AC0169-v1.zip JVET-AC0169-v1.docx [retrieved on 2023-01-04] * sections 1, 2 * | 1-15 | |
| A | KIM (WILUSGROUP) D ET AL: "EE2-1.14 related: Modifications of MTS and LFNST for IntraTMP coded block", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0115 ; m60880 22 October 2022 (2022-10-22), XP030304610, Retrieved from the Internet: URL:https://jvet-experts.org/doc_end_user/documents/28_Mainz/wg11/JVET-AB0115-v3.zip JVET-AB0115-v3_clean.docx [retrieved on 2022-10-22] * section 2 * | 1-15 | TECHNICAL FIELDS SEARCHED (IPC) |

The present search report has been drawn up for all claims

| Place of search | Date of completion of the search | Examiner |
|---|---|---|
| Munich | 31 July 2024 | Montoneri, Fabio |

EPO FORM 1503 03.82 (P04C01)

**REFERENCES CITED IN THE DESCRIPTION**

**Patent documents cited in the description**

- US 63459311